(19)

Europäisches
Patentamt
European
Patent Office
Office européen
des brevets

(11) **EP 4 412 331 A1**

(12) **EUROPEAN PATENT APPLICATION**
published in accordance with Art. 153(4) EPC

(43) Date of publication:
**07.08.2024 Bulletin 2024/32**

(21) Application number: **22876983.2**

(22) Date of filing: **30.09.2022**

(51) International Patent Classification (IPC):
**H04W 64/00** (2009.01)   **H04W 24/10** (2009.01)
**H04W 52/02** (2009.01)   **H04W 68/00** (2009.01)
**H04W 76/27** (2018.01)   **G01S 5/00** (2006.01)

(52) Cooperative Patent Classification (CPC):
**G01S 5/00; H04W 24/10; H04W 52/02;**
**H04W 64/00; H04W 68/00; H04W 76/27;**
**Y02D 30/70**

(86) International application number:
**PCT/KR2022/014847**

(87) International publication number:
**WO 2023/055212 (06.04.2023 Gazette 2023/14)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **30.09.2021 KR 20210130392**
**11.02.2022 US 202263309014 P**

(71) Applicant: **LG Electronics Inc.**
**Yeongdeungpo-gu**
**Seoul 07336 (KR)**

(72) Inventors:
• **LEE, Jeongsu**
**Seoul 06772 (KR)**
• **KO, Hyunsoo**
**Seoul 06772 (KR)**
• **PARK, Haewook**
**Seoul 06772 (KR)**
• **HWANG, Seunggye**
**Seoul 06772 (KR)**

(74) Representative: **Plasseraud IP**
**66, rue de la Chaussée d'Antin**
**75440 Paris Cedex 09 (FR)**

(54) **POSITIONING METHOD AND DEVICE FOR SAME**

(57)    A method for a terminal to perform positioning in a wireless communication system according to an embodiment disclosed herein comprises the steps of: receiving configuration information related to a resource for a measurement for the positioning; receiving configuration information related to discontinuous reception (DRX); and performing the measurement for the positioning on the basis of the configuration information related to the resource for the measurement, wherein the measurement for the positioning is performed on the basis of a measurement duration for performing the measurement for the positioning in an radio resource control (RRC) inactive state, and the measurement duration is configured within a DRX cycle that is the period according to which a DRX operation of the terminal is performed.

【FIG. 28】

**Description**

[TECHNICAL FIELD]

The present disclosure relates to a positioning method in a wireless communication system and a device for the same.

[BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

Meanwhile, in relation to positioning, a location server (e.g. Location Management Function, LMF) may transmit information for a search window (expected RSTD and uncertainty) to a base station (TRP)/ a user equipment (UE) for efficient measurement of timing related positioning. However, this information (i.e. search window) cannot be helpful for angle-based measurement.

In relation to the angle-based measurement, the location server configures PRS resources in the UE. At this time, the location server delivers QCL information for the Rx beam to the UE. The UE receives the PRS through the indicated/configured Rx beam, but this may not be an optimal beam that perfectly reflects the location of the TRP.

[DISCLOSURE]

[TECHNICAL PROBLEM]

The purpose of the present disclosure is to provide a method for performing positioning in a wireless communication system and device for the same.

Additionally, the purpose of the present disclosure is to provide a method for a user equipment (UE) in an inactive state to perform positioning in a DRX cycle and a device for the same.

Additionally, the purpose of the present disclosure is to provide a method for a user equipment (UE) in an inactive state to perform positioning based on a window for a measurement duration configured within a DRX cycle and a device for the same.

Additionally, the purpose of the present disclosure is to provide a signaling method for configuring a window for a measurement duration configured within a DRX cycle when a user equipment (UE) in an inactive state performs positioning and a device for the same.

The technical objects of the present disclosure are not limited to the aforementioned technical objects, and other technical objects, which are not mentioned above, will be apparently appreciated by a person having ordinary skill in the art from the following description.

[TECHNICAL SOLUTION]

A method of a user equipment (UE) to perform positioning in a wireless communication system according to an embodiment of the present disclosure, the method comprises receiving configuration information related to a resource for a measurement for the positioning; receiving configuration information related to discontinuous reception (DRX); and performing the measurement for the positioning based on the configuration information related to the resource for the measurement, wherein the measurement for the positioning is performed based on a measurement duration for performing the measurement for the positioning in an radio resource control (RRC) inactive state, and wherein the measurement duration is configured within a DRX cycle, which is a cycle in which a DRX operation of the UE is performed.

Additionally, in the present disclosure, the measurement for the positioning may be performed on at least one resource included in the measurement duration among the resources for the measurement for the positioning.

Additionally, in the present disclosure, the method may further comprise receiving measurement duration information for the measurement duration.

Additionally, in the present disclosure, the measurement duration information may be (i) received through system information or (ii) received through an RRC signaling in an RRC connected state before the RRC inactive state of the UE.

Additionally, in the present disclosure, the method may further comprise receiving a request message for activating the measurement for the positioning in the RRC inactive state of the UE, wherein the measurement for the positioning may be activated based on the request message.

Additionally, in the present disclosure, the measurement for the positioning may be configured to be performed after a paging occasion of every DRX cycle without a request message for activating the measurement for the positioning, and the method may further comprise receiving a message for deactivating the measurement for the positioning configured to be performed after the paging occasion of the every DRX cycle.

Additionally, in the present disclosure, the message for deactivating the measurement for the positioning may be downlink control information applied per UE group.

Additionally, in the present disclosure, the message for deactivating the measurement for the positioning may be information transmitted through a physical downlink shared channel applied per UE.

Additionally, in the present disclosure, the message for deactivating the measurement for the positioning may be downlink control information applied per UE group, and the measurement duration information may be transmitted through a physical downlink shared channel applied per UE.

Additionally, in the present disclosure, the measurement duration information may include information for a duration of the measurement duration, and the measurement duration may be configured to a duration based on information for the duration from a reference time point.

Additionally, in the present disclosure, the measurement duration information may further include offset information for a starting time point at which the measurement duration starts, and the measurement duration may be configured to a duration based on the information for the duration from a later time point as much as the offset information from the reference time point.

Additionally, in the present disclosure, the measurement duration information may further include repetition number information for a number of times the measurement duration is repeatedly configured within the DRX cycle, and the measurement duration may be repeatedly configured, as much as a number based on the repetition number information, as much as the duration based on the information for the duration from a later time point as much as the offset information from a reference time point.

Additionally, in the present disclosure, the measurement duration information may further include minimum gap information for determining whether to perform the measurement for the positioning within the DRX cycle, based on the measurement duration being configured within a time period from an ending time point of the paging occasion of the DRX cycle to the minimum gap, the measurement for the positioning may be performed, and based on the measurement duration being not configured within a time period from an ending time point of the paging occasion of the DRX cycle to the minimum gap, the measurement for the positioning may not be performed, and a state of the UE may transition to a sleep state.

Additionally, in the present disclosure, the resource for the measurement may be a positioning reference signal (PRS) resource, and the performing the measurement for the positioning may include receiving a PRS; and performing measurements for the PRS.

Additionally, in the present disclosure, the resource for the measurement may be a sounding reference signal (SRS) resource, the performing the measurement for the positioning may include transmitting a SRS, the measurement for the positioning may be performed through the measurement for the SRS at the base station.

Additionally, in the present disclosure, a user equipment (UE) performing positioning in a wireless communication system, the UE comprises one or more transceivers; one or more processors controlling the one or more transceivers; and one or more memories operably connected to the one or more processors, wherein the one or more memories store instructions for performing operations based on being executed by the one or more processors, wherein the operations include receiving configuration information related to a resource for a measurement for the positioning; receiving configuration information related to discontinuous reception (DRX); and performing the measurement for the positioning based on the configuration information related to the resource for the measurement, wherein the measurement for the positioning is performed based on a measurement duration for performing the measurement for the positioning in an radio resource control (RRC) inactive state, and wherein the measurement duration is configured within a DRX cycle, which is a cycle in which a DRX operation of the UE is performed.

Additionally, in the present disclosure, a device for controlling a user equipment (UE) to perform positioning in a wireless communication system, the device comprises one or more processors; and one or more memories operably connected to the one or more processors, wherein the one or more memories store instructions for performing operations based on being executed by the one or more processors, wherein the operations include receiving configuration information related to a resource for a measurement for the positioning; receiving configuration information related to discontinuous reception (DRX); and performing the measurement for the positioning based on the configuration information related to the resource for the measurement, wherein the measurement for the positioning is performed based on a measurement duration for performing the measurement for the positioning in an radio resource control (RRC) inactive state, and wherein the measurement duration is configured within a DRX cycle, which is a cycle in which a DRX operation of the UE is performed.

Additionally, in the present disclosure, one or more non-transitory computer-readable medium storing one or more instructions, wherein the one or more instructions perform operations based on being executed by one or more processors, wherein the operations include receiving configuration information related to a resource for a measurement for the positioning; receiving configuration information related to discontinuous reception (DRX); and performing the measurement for the positioning based on the configuration information related to the resource for the measurement, wherein the measurement for the positioning is performed based on a measurement duration for performing the measurement for the positioning in an radio resource control (RRC) inactive state, and wherein the measurement duration is configured within a DRX cycle, which is a cycle in which a DRX operation of the UE is performed.

Additionally, in the present disclosure, a method of a base station to perform positioning in a wireless communication system, the method comprises transmitting configuration information related to a resource for a measurement for the positioning; transmitting configuration information related to discontinuous reception (DRX); and performing the measurement for the positioning based on the configuration information related to the resource for the measurement, wherein the measurement for the positioning is performed based on a measurement duration for performing the measurement for the positioning in an radio resource control (RRC) inactive state, and wherein the measurement duration is configured within a DRX cycle, which is a cycle in which a DRX operation of the UE is performed.

Additionally, in the present disclosure, a base station performing positioning in a wireless communication, the base station comprises one or more transceivers; one or more processors controlling the one or more transceivers; and one or more memories operably connected to the one or more processors, wherein the one or more memories store instructions for performing operations based on being executed by the one or more processors, wherein the operations include transmitting configuration information related to a resource for a measurement for the positioning; transmitting configuration information related to discontinuous reception (DRX); and performing the measurement for the positioning based on the configuration information related to the resource for the measurement, wherein the measurement for the positioning is performed based on a measurement duration for performing the measurement for the positioning in an radio resource control (RRC) inactive state, and wherein the measurement duration is configured within a DRX cycle, which is a cycle in which a DRX operation of the UE is performed.

[ADVANTAGEOUS EFFECTS]

The present disclosure has the effect of being able to perform positioning in a wireless communication system.

Additionally, the present disclosure has the effect of enabling a user equipment (UE) in an inactive state to perform positioning in the DRX cycle.

Additionally, the present disclosure has the effect of enabling a user equipment (UE) in an inactive state to perform positioning based on a window for a measurement duration configured within a DRX cycle.

Additionally, the present disclosure has the effect of being able to perform signaling to configure a window for the measurement duration configured within the DRX cycle when a user equipment (UE) in an inactive state performs positioning.

Additionally, the present disclosure has the effect of being able to reduce the power consumed to perform positioning through signaling to configure a window for the measurement duration configured within the DRX cycle.

Effects which may be obtained by the present disclosure are not limited to the aforementioned effects, and other technical effects not described above may be evidently understood by a person having ordinary skill in the art to which the present disclosure pertains from the following description.

[BRIEF DESCRIPTION OF THE DRAWINGS]

The accompanying drawings, which are included to provide a further understanding of the present disclosure and constitute a part of the detailed description, illustrate embodiments of the present disclosure and together with the description serve to explain the principle of the present disclosure.

FIG. 1 is a diagram illustrating an example of an overall system structure of NR to which a method proposed in the present disclosure is applicable.

FIG. 2 illustrates a relationship between an uplink frame and a downlink frame in a wireless communication system to which a method proposed by the present disclosure is applicable.

FIG. 3 illustrates an example of a frame structure in an NR system.

FIG. 4 illustrates an example of a resource grid supported by a wireless communication system to which a method proposed in the present disclosure is applicable.

FIG. 5 illustrates examples of a resource grid for each antenna port and numerology to which a method proposed in the present disclosure is applicable.

FIG. 6 illustrates physical channels and general signal transmission used in a 3GPP system.

FIG. 7 is a diagram illustrating an example of a positioning protocol configuration for measuring a location of a user equipment (UE).

FIG. 8 is a diagram illustrating an example of architecture of a system for measuring a location of an UE.

FIG. 9 is a diagram illustrating an example of a procedure for measuring a location of a UE.

FIG. 10 is a diagram illustrating an example of a protocol layer for supporting LPP message transmission.

FIG. 11 is a diagram illustrating an example of a protocol layer for supporting NRPPa transmission.

FIG. 12 is a diagram illustrating an example of an OTDOA positioning measurement method.

FIGS. 13A and 13B are diagrams illustrating an example of a Multi RTT positioning measurement method.

FIG. 14 is a diagram briefly illustrating a method of operating a UE, TRP, location server, and/or LMF according to various embodiments of the present disclosure.

FIG. 15 is a diagram briefly illustrating a method of operating a UE, TRP, location server, and/or LMF according to various embodiments of the present disclosure.

FIG. 16 is a diagram showing an example of PRS transmission and reception operation in RRC inactivated/idle state.

FIG. 17 is a diagram showing an example of SRS transmission and reception operation in RRC inactive/idle state.

FIG. 18 is an illustrative example of SRS transmission at UE in RRC inactive state.

FIG. 19 is an illustrative example of PRS reception at UE in RRC inactive state.

FIG. 20 is a diagram showing an example in which a UE in an inactive state receives a PRS.

FIG. 21 is a diagram showing an example in which a UE in an inactive state receives a PRS based on a time window.

FIGS. 22 and 23 show an example in which a UE in an inactive state receives a PRS based on a time window.

FIG. 24 is a diagram showing an example in which a UE in an inactive state receives a PRS based on a time window.

FIG. 25 is a diagram showing an example in which a UE in an inactive state receives a PRS based on a time window.

FIGS. 26 and 27 illustrate an example in which a UE in an inactive state receives a PRS based on a time window.

FIG. 28 is a diagram showing an example in which a method proposed in the present disclosure is performed in a UE.

FIG. 29 is a diagram showing an example in which a method proposed in the present disclosure is performed at a base station.

FIG. 30 illustrates a communication system 1 applied to the present disclosure.

FIG. 31 illustrates wireless devices applicable to the present disclosure.

FIG. 32 illustrates a signal process circuit for a transmission signal.

FIG. 33 illustrates another example of a wireless device applied to the present disclosure.

FIG. 34 illustrates a hand-held device applied to the present disclosure.

[DETAILED DESCRIPTION]

Hereinafter, preferred embodiments of the disclosure are described in detail with reference to the accompanying drawings. The following detailed description taken in conjunction with the accompanying drawings is intended for describing example embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various wireless access systems, such as code division multiple access (CDMA), frequency division multiple access (FDMA), time division multiple access (TDMA), orthogonal frequency division multiple access (OFDMA), single carrier-FDMA (SC-FDMA), non-orthogonal multiple access (NOMA), and the like. The CDMA may be implemented by radio technology such as universal terrestrial radio access (UTRA) or CDMA2000. The TDMA may be implemented by radio technology such as global system for mobile communications (GSM)/general packet radio service (GPRS)/enhanced data rates for GSM evolution (EDGE). The OFDMA may be implemented as radio technology such as IEEE 802.11 (Wi-Fi), IEEE 802.16 (WiMAX), IEEE 802-20, E-UTRA (evolved UTRA), and the like. The UTRA is a part of a universal mobile telecommunication system (UMTS). 3rd generation partnership project (3GPP) long term evolution (LTE), as a part of an evolved UMTS (E-UMTS) using E-UTRA, adopts the OFDMA in the downlink and the SC-FDMA in the uplink. LTE-A (advanced) is the evolution of 3GPP LTE.

For clarity of description, the present disclosure is described based on the 3GPP communication system (e.g., LTE-A or NR), but the technical spirit of the present disclosure are not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system, "xxx" means a standard document detail number. The LTE/NR may be collectively referred to as the 3GPP system. Matters disclosed in a standard document published before the present disclosure may refer to a background art, terms, abbreviations, etc., used for describing the present disclosure. For example, the following documents may be referenced.

3GPP LTE
36.211: Physical channels and modulation
36.212: Multiplexing and channel coding
36.213: Physical layer procedures
36.300: Overall description
36.331: Radio Resource Control (RRC)
3GPP NR
38.211: Physical channels and modulation
38.212: Multiplexing and channel coding
38.213: Physical layer procedures for control
38.214: Physical layer procedures for data
38.300: NR and NG-RAN Overall Description
36.331: Radio Resource Control (RRC) protocol specification

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. As such, the introduction of next-generation radio access technology considering enhanced mobile broadband communication (eMBB), massive MTC (mMTC), ultra-reliable and low latency communication (URLLC) is discussed, and in the present disclosure, the technology is called NR for convenience. The NR is an expression representing an example of 5G radio access technology (RAT).

In a New RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. By scaling a reference subcarrier spacing by an integer N, different numerologies may be defined.

Definition of terms

eLTE eNB: The eLTE eNB is the evolution of eNB that supports connectivity to EPC and NGC.

gNB: A node which supports the NR as well as connectivity to NGC.

New RAN: A radio access network which supports either NR or E-UTRA or interfaces with the NGC.

Network slice: A network slice is a network defined by the operator customized to provide an optimized solution for a specific market scenario which demands specific requirements with end-to-end scope.

Network function: A network function is a logical node within a network infrastructure that has well-defined external interfaces and well-defined functional behavior.

NG-C: A control plane interface used at an NG2 reference point between new RAN and NGC.

NG-U: A user plane interface used at an NG3 reference point between new RAN and NGC.

Non-standalone NR: A deployment configuration where the gNB requires an LTE eNB as an anchor for control plane connectivity to EPC, or requires an eLTE eNB as an anchor for control plane connectivity to NGC.

Non-standalone E-UTRA: A deployment configuration where the eLTE eNB requires a gNB as an anchor for control plane connectivity to NGC.

User plane gateway: An end point of NG-U interface.

Overview of system

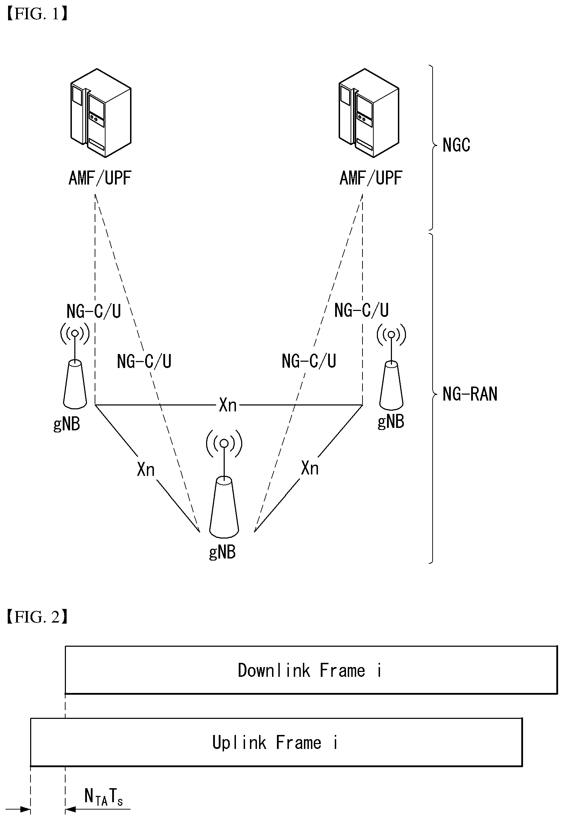

FIG. 1 illustrates an example overall NR system structure to which a method as proposed in the disclosure may apply.

Referring to FIG. 1, an NG-RAN is constituted of gNBs to provide a control plane (RRC) protocol end for user equipment (UE) and NG-RA user plane (new AS sublayer/PDCP/RLC/MAC/PHY).

The gNBs are mutually connected via an Xn interface.

The gNBs are connected to the NGC via the NG interface.

More specifically, the gNB connects to the access and mobility management function (AMF) via the N2 interface and connects to the user plane function (UPF) via the N3 interface.

New RAT (NR) numerology and frame structure

In the NR system, a number of numerologies may be supported. Here, the numerology may be defined by the subcarrier spacing and cyclic prefix (CP) overhead. At this time, multiple subcarrier spacings may be derived by scaling the basic subcarrier spacing by integer N (or, $\mu$). Further, although it is assumed that a very low subcarrier spacing is not used at a very high carrier frequency, the numerology used may be selected independently from the frequency band.

Further, in the NR system, various frame structures according to multiple numerologies may be supported.

Hereinafter, an orthogonal frequency division multiplexing (OFDM) numerology and frame structure that may be considered in the NR system is described.

The multiple OFDM numerologies supported in the NR system may be defined as shown in Table 1.

[Table 1]

| $\mu$ | $\Delta f = 2^{\mu} \cdot 15\,[kHz]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

NR supports multiple numerologies (or subcarrier spacings (SCS)) for supporting various 5G services. For example, if SCS is 15 kHz, NR supports a wide area in typical cellular bands. If SCS is 30 kHz/60 kHz, NR supports a dense urban, lower latency and a wider carrier bandwidth. If SCS is 60 kHz or higher, NR supports a bandwidth greater than 24.25 GHz in order to overcome phase noise.

An NR frequency band is defined as a frequency range of two types FR1 and FR2. The FR1 and the FR2 may be configured as in Table 1 below. Furthermore, the FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

With regard to the frame structure in the NR system, the size of various fields in the time domain is expressed as a multiple of time unit of $T_s = 1/(\Delta f_{max} \cdot N_f)$, where $\Delta f_{max} = 480 \cdot 10^3$, and $N_f = 4096$. Downlink and uplink transmissions is constituted of a radio frame with a period of $T_f = (\Delta f_{max} N_f / 100) \cdot T_s = 10ms$. Here, the radio frame is constituted of 10 subframes each of which has a period of $T_{sf} = (\Delta f_{max} N_f/1000) \cdot T_s = 1$ ms. In this case, one set of frames for uplink and one set of frames for downlink may exist.

FIG. 2 illustrates a relationship between an uplink frame and downlink frame in a wireless communication system to which a method described in the present disclosure is applicable.

As illustrated in FIG. 2, uplink frame number i for transmission from the user equipment (UE) should begin $T_{TA} = N_{TA} T_s$ earlier than the start of the downlink frame by the UE.

For numerology $\mu$, slots are numbered in ascending order of $n_s^\mu \in \left\{0,..., N_{subframe}^{slots, \mu} - 1\right\}$ in the subframe and in ascending order of $n_{s,f}^\mu \in \left\{0,..., N_{frame}^{slots, \mu} - 1\right\}$ in the radio frame. One slot includes consecutive OFDM symbols of $N_{symb}^\mu$, and $N_{symb}^\mu$ is determined according to the used numerology and slot configuration. In the subframe, the start of slot $n_s^\mu$ is temporally aligned with the start of $n_s^\mu N_{symb}^\mu$.

Not all UEs are able to transmit and receive at the same time, and this means that not all OFDM symbols in a downlink slot or an uplink slot are available to be used.

Table 3 represents the number $N_{symb}^{slot}$ of OFDM symbols per slot, the number $N_{slot}^{frame, \mu}$ of slots per radio frame, and the number $N_{slot}^{subframe, \mu}$ of slots per subframe in a normal CP. Table 4 represents the number of OFDM symbols per slot, the number of slots per radio frame, and the number of slots per subframe in an extended CP.

[Table 3]

| $\mu$ | $N_{symb}^{slot}$ | $N_{slot}^{frame,\mu}$ | $N_{slot}^{subframe}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe}$ |
|---|---|---|---|
| 2 | 12 | 40 | 4 |

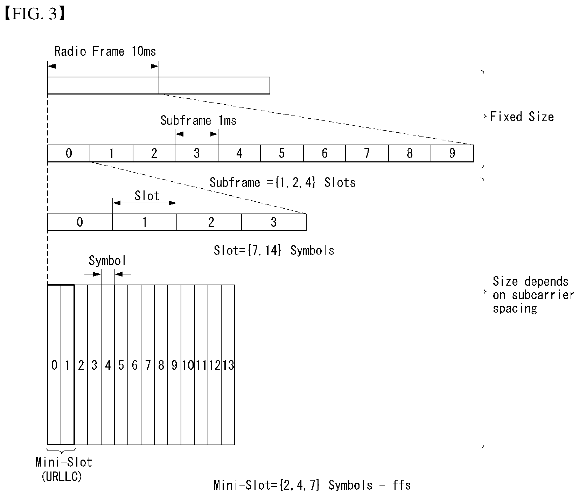

FIG. 3 illustrates an example of a frame structure in a NR system. FIG. 3 is merely for convenience of explanation and does not limit the scope of the present disclosure.

In Table 4, in case of $\mu$=2, i.e., as an example in which a subcarrier spacing (SCS) is 60 kHz, one subframe (or frame) may include four slots with reference to Table 3, and one subframe = { 1, 2, 4} slots shown in FIG. 3, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. May be considered.

Hereinafter, the above physical resources that may be considered in the NR system are described in more detail.

First, in regard to an antenna port, the antenna port is defined so that a channel over which a symbol on an antenna port is conveyed may be inferred from a channel over which another symbol on the same antenna port is conveyed. When large-scale properties of a channel over which a symbol on one antenna port is conveyed may be inferred from a channel over which a symbol on another antenna port is conveyed, the two antenna ports may be regarded as being in a quasi co-located or quasi co-location (QC/QCL) relation. Here, the large-scale properties may include at least one of delay spread, Doppler spread, frequency shift, average received power, and received timing.

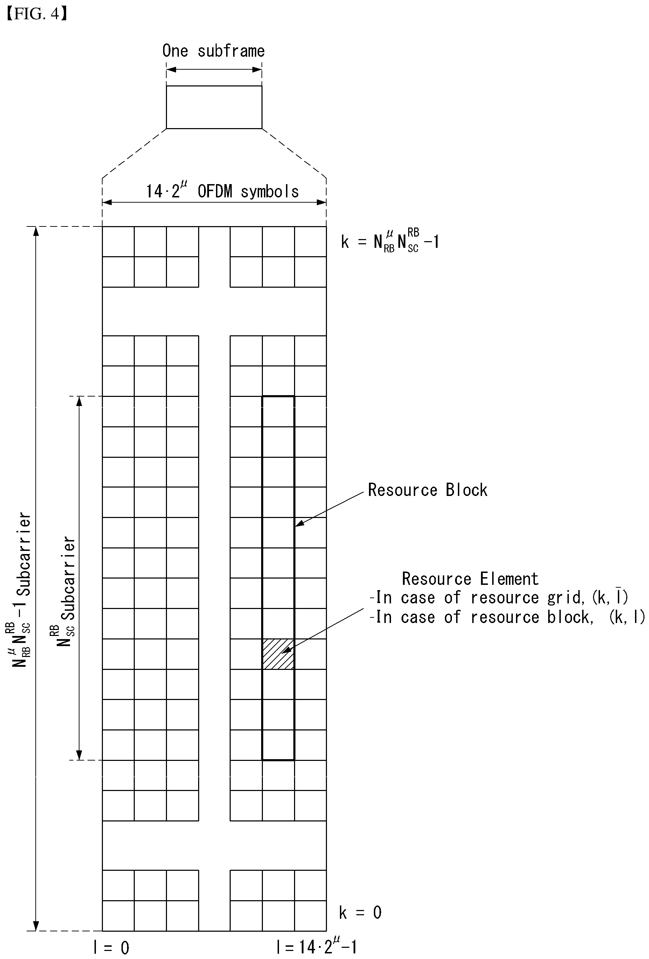

FIG. 4 illustrates an example of a resource grid supported in a wireless communication system to which a method proposed in the present disclosure is applicable.

Referring to FIG. 4, a resource grid consists of $N_{RB}^{\mu} N_{sc}^{RB}$ subcarriers on a frequency domain, each subframe consisting of $14 \cdot 2\mu$ OFDM symbols, but the present disclosure is not limited thereto.

In the NR system, a transmitted signal is described by one or more resource grids, consisting of $N_{RB}^{\mu} N_{sc}^{RB}$ subcarriers, and $2^{\mu} N_{symb}^{(\mu)}$ OFDM symbols, where $N_{RB}^{\mu} \leq N_{RB}^{\max,\mu}$. $N_{RB}^{\max,\mu}$ denotes a maximum transmission bandwidth and may change not only between numerologies but also between uplink and downlink.

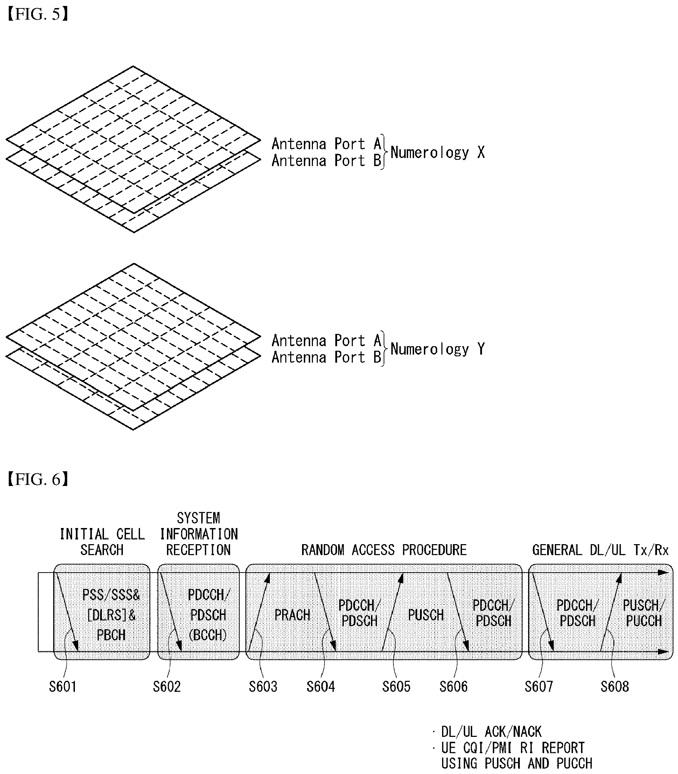

In this case, as illustrated in FIG. 5, one resource grid may be configured per numerology $\mu$ and antenna port p.

FIG. 5 illustrates examples of a resource grid per antenna port and numerology to which a method proposed in the present disclosure is applicable.

Each element of the resource grid for the numerology $\mu$ and the antenna port p is called a resource element and is uniquely identified by an index pair $(k,\bar{l})$, where $k = 0,..., N_{RB}^{\mu} N_{sc}^{RB} - 1$ is an index on a frequency domain, and $\bar{l} = 0,...,2^{\mu} N_{symb}^{(\mu)} - 1$ refers to a location of a symbol in a subframe. The index pair $(k,\bar{l})$ is used to refer to a resource element in a slot, where $l = 0,...,N_{symb}^{\mu} - 1$.

The resource element $(k,\bar{l})$ for the numerology $\mu$ and the antenna port p corresponds to a complex value $a_{k,\bar{l}}^{(p,\mu)}$. When there is no risk for confusion or when a specific antenna port or numerology is not specified, the indexes p and $\mu$ may be dropped, and as a result, the complex value may be $a_{k,\bar{l}}^{(p)}$ or $a_{k,\bar{l}}$.

Further, a physical resource block is defined as $N_{sc}^{RB} = 12$ consecutive subcarriers in the frequency domain.

Point A serves as a common reference point of a resource block grid and may be obtained as follows.

- offsetToPointA for PCell downlink represents a frequency offset between the point A and a lowest subcarrier of a lowest resource block that overlaps a SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents frequency-location of the point A expressed as in absolute radio-frequency channel number (ARFCN).

The common resource blocks are numbered from 0 and upwards in the frequency domain for subcarrier spacing configuration $\mu$.

The center of subcarrier 0 of common resource block 0 for the subcarrier spacing configuration $\mu$ coincides with 'point A'. A common resource block number $n_{CRB}^{\mu}$ in the frequency domain and resource elements (k, 1) for the subcarrier spacing configuration $\mu$ may be given by the following Equation 1.

【Equation 1】

$$n_{CRB}^{\mu} = \left\lfloor \frac{k}{N_{sc}^{RB}} \right\rfloor$$

Here, $k$ may be defined relative to the point A so that $k = 0$ corresponds to a subcarrier centered around the point A. Physical resource blocks are defined within a bandwidth part (BWP) and are numbered from 0 to $N_{\mathrm{BWP},i}^{\mathrm{size}} - 1$ , where $i$ is No. Of the BWP. A relation between the physical resource block $n_{\mathrm{PRB}}$ in BWP $i$ and the common resource block $n_{\mathrm{CRB}}$ may be given by the following Equation 2.

【Equation 2】

$$n_{\mathrm{CRB}} = n_{\mathrm{PRB}} + N_{\mathrm{BWP},i}^{\mathrm{start}}$$

Here, $N_{\mathrm{BWP},i}^{\mathrm{start}}$ may be the common resource block where the BWP starts relative to the common resource block 0.

Physical Channel and General Signal Transmission

FIG. 6 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S601). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S602).

Meanwhile, when there is no radio resource first accessing the eNB or for signal transmission, the UE may perform a Random Access Procedure (RACH) to the eNB (S603 to S606). To this end, the UE may transmit a specific sequence to a preamble through a Physical Random Access Channel (PRACH) (S603 and S605) and receive a response message (Random Access Response (RAR) message) for the preamble through the PDCCH and a corresponding PDSCH. In the case of a contention based RACH, a Contention Resolution Procedure may be additionally performed (S606).

The UE that performs the above procedure may then perform PDCCH/PDSCH reception (S607) and Physical Uplink Shared Channel (PUSCH)/Physical Uplink Control Channel (PUCCH) transmission (S608) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

Meanwhile, the control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

Beam Management (BM)

A BM procedure as layer 1 (L1)/layer 2 (L2) procedures for acquiring and maintaining a set of base station (e.g., gNB, TRP, etc.) and/or terminal (e.g., UE) beams which may be used for downlink (DL) and uplink (UL) transmission/reception may include the following procedures and terms.

- Beam measurement: Opeation of measuring characteristics of a beam forming signal received by the eNB or UE.
- Beam determination: Operation of selecting a transmit (Tx) beam/receive (Rx) beam of the eNB or UE by the eNB or UE.
- Beam sweeping: Operation of covering a spatial region using the transmit and/or receive beam for a time interval by a predetermined scheme.

- Beam report: Operation in which the UE reports information of a beamformed signal based on beam measurement.

The BM procedure may be divided into (1) a DL BM procedure using a synchronization signal (SS)/physical broadcast channel (PBCH) Block or CSI-RS and (2) a UL BM procedure using a sounding reference signal (SRS). Further, each BM procedure may include Tx beam sweeping for determining the Tx beam and Rx beam sweeping for determining the Rx beam.

Downlink Beam Management (DL BM)

The DL BM procedure may include (1) transmission of beamformed DL reference signals (RSs) (e.g., CIS-RS or SS Block (SSB)) of the eNB and (2) beam reporting of the UE.

Here, the beam reporting a preferred DL RS identifier (ID)(s) and L1-Reference Signal Received Power (RSRP).

The DL RS ID may be an SSB Resource Indicator (SSBRI) or a CSI-RS Resource Indicator (CRI).

Hereinafter, matters related to the definition of TRP mentioned in the present specification will be described in detail.

The base station described in this disclosure may be a generic term for an object that transmits/receives data to and from UE. For example, the base station described herein may be a concept including one or more transmission points (TPs), one or more transmission and reception points (TRPs), and the like. For example, multiple TPs and/or multiple TRPs described herein may be included in one base station or included in multiple base stations. In addition, the TP and/or TRP may include a panel of a base station, a transmission and reception unit, and the like.

In addition, the TRP described in this disclosure means an antenna array having one or more antenna elements available in a network located at a specific geographical location in a specific area. Although this disclosure is described with respect to "TRP" for convenience of explanation, the TRP may be replaced with a base station, a transmission point (TP), a cell (e.g., a macro cell/small cell/pico cell, etc.), an antenna array, or a panel and understood and applied as such.

Hereinafter, matters related to positioning in a wireless communication system will be described in detail.

Table 5 below shows definitions of terms used in relation to the positioning.

[Table 5]

**Anchor carrier:** In NB-IoT, a carrier where the UE assumes that NPSS/NSSS/NPBCH/SIB-NB are transmitted.

**Location Server:** a physical or logical entity (e.g., E-SMLC or SUPL SLP) that manages positioning for a target device by obtaining measurements and other location information from one or more positioning units and providing assistance data to positioning units to help determine this. A Location Server may also compute or verify the final location estimate.

**E-SMLC:** Evolved Serving Mobile Location Center

**SLP:** SUPL Location Platform

**SUPL:** Secure User Plane Location

**NB-IoT:** NB-IoT allows access to network services via E-UTRA with a channel bandwidth limited to 200 kHz.

**Reference Source:** a physical entity or part of a physical entity that provides signals (e.g., RF, acoustic, infrared) that can be measured (e.g., by a Target Device) in order to obtain the location of a Target Device.

**Target Device:** the device that is being positioned (e.g., UE or SUPL SET).

**Transmission Point (TP):** A set of geographically co-located transmit antennas for one cell, part of one cell or one PRS-only TP. Transmission Points can include base station (ng-eNB or gNB) antennas, remote radio heads, a remote antenna of a base station, an antenna of a PRS-only TP, etc. One cell can be formed by one or multiple transmission points. For a homogeneous deployment, each transmission point may correspond to one cell.

**Observed Time Difference Of Arrival (OTDOA):** The time interval that is observed by a target device between the reception of downlink signals from two different TPs. If a signal from TP 1 is received at the moment $t_1$, and a signal from TP 2 is received at the moment $t_2$, the OTDOA is $t_2 - t_1$.

**PRS-only TP:** A TP which only transmits PRS signals for PRS-based TBS positioning and is not associated with a cell.

**expected RSTD (from 36.355):**

1) If PRS is transmitted:

This field indicates the RSTD value that the target device is expected to measure between this cell and the assistance data reference cell. The expectedRSTD field takes into account the expected propagation time difference as well as transmit time difference of PRS positioning occasions between the two cells. The RSTD value can be negative and is calculated as (expectedRSTD-8192). The resolution is $3 \times T_s$, with $T_s = 1/(15000*2048)$ seconds.

2) If PRS is not transmitted:

This field indicates the RSTD value that the target device is expected to measure between this cell and the assistance data reference cell. The expectedRSTD field takes into account the expected propagation time difference as well as transmit time difference between the two cells. The RSTD value can be negative and is calculated as (expectedRSTD-8192). The resolution is $3 \times T_s$, with $T_s = 1/(15000*2048)$ seconds.

**expectedRSTD-Uncertainty (from 36.355):**

1) If PRS is transmitted:

This field indicates the uncertainty in *expectedRSTD* value. The uncertainty is related to the location server's a-priori estimation of the target device location. The *expectedRSTD* and *expectedRSTD-Uncertainty* together define the search window for the target device.

The scale factor of the *expectedRSTD-Uncertainty* field is $3 \times T_s$, with $T_s = 1/(15000*2048)$ seconds.

The target device may assume that the beginning of the PRS occasion group of the PRS configuration with the longest PRS occasion group periodicity (NOTE) of the neighbour cell is received within the search window of size

[- *expectedRSTD-Uncertainty* $\times 3 \times T_s$, *expectedRSTD-Uncertainty* $\times 3 \times T$] centered at $T_{REF}$ + 1 millisecond $\times$ N + (*expectedRSTD* $\cdot$ 8192) $\times 3 \times T_s$, where $T_{REF}$ is the reception time of the beginning of the first PRS occasion group of the first PRS configuration of the assistance data reference cell at the target device antenna connector, N = 0 when the EARFCN of the neighbour cell is equal to that of the assistance data reference cell, and N = *prs-SubframeOffset* otherwise.

2) If PRS is not transmitted:

This field indicates the uncertainty in *expectedRSTD* value. The uncertainty is related to the location server's a-priori estimation of the target device location. The *expectedRSTD* and *expectedRSTD-Uncertainty* together define the search window for the target device. The scale factor of the *expectedRSTD-Uncertainty* field is $3 \times T_s$, with $T_s$=1/(15000*2048) seconds.

If $T_x$ is the reception time of the beginning of the subframe X of the assistance data reference cell at the target device antenna connector, the target device may assume that the beginning of the closest subframe of this neighbour cell to subframe X is received within the search window of size [-*expectedRSTD-Uncertainty* $\times 3 \times T_s$, *expectedRSTD-Uncertainty* $\times 3 \times T_s$] centered at $T_x$ + (*expectedRSTD-8192*) $\times 3 \times T_s$,

The following shows definitions of abbreviations used in relation to the above positioning.

SGS: 5G System
AoA: Angle of Arrival
AP: Access Point
BDS: BeiDou Navigation Satellite System
BSSID: Basic Service Set Identifier
CID: Cell-ID (positioning method)
E-SMLC: Enhanced Serving Mobile Location Centre
E-CID: Enhanced Cell-ID (positioning method)
ECEF: Earth-Centered, Earth-Fixed
ECI: Earth-Centered-Inertial
EGNOS: European Geostationary Navigation Overlay Service
E-UTRAN: Evolved Universal Terrestrial Radio Access Network
GAGAN: GPS Aided Geo Augmented Navigation
GLONASS: GLObal'naya NAvigatsionnaya Sputnikovaya Sistema (Engl.: Global Navigation Satellite System)
GMLC: Gateway Mobile Location Center
GNSS: Global Navigation Satellite System
GPS: Global Positioning System
HESSID: Homogeneous Extended Service Set Identifier
LCS: LoCation Services
LMF: Location Management Function
LPP: LTE Positioning Protocol
MBS: Metropolitan Beacon System
MO-LR: Mobile Originated Location Request
MT-LR: Mobile Terminated Location Request
NG-C: NG Control plane
NG-AP: NG Application Protocol
NI-LR: Network Induced Location Request
NRPPa: NR Positioning Protocol A
OTDOA: Observed Time Difference Of Arrival
PDU: Protocol Data Unit
PRS: Positioning Reference Signal
QZSS: Quasi-Zenith Satellite System
RRM: Radio Resource Management
RSSI: Received Signal Strength Indicator
RSTD: Reference Signal Time Difference / Relative Signal Time Difference
SBAS: Space Based Augmentation System
SET: SUPL Enabled Terminal
SLP: SUPL Location Platform
SSID: Service Set Identifier
SUPL: Secure User Plane Location
TADV: Timing Advance
TBS: Terrestrial Beacon System
TOA: Time of Arrival
TP: Transmission Point (TRP : Transmission and Reception Point)
UE: User Equipment
WAAS: Wide Area Augmentation System
WGS-84: World Geodetic System 1984
WLAN: Wireless Local Area Network
Positioning

Positioning may mean determining the geographic location and / or speed of the UE by measuring a radio signal. The location information may be requested by a client (e.g. an application) related to the UE and reported to the client. In addition, the location information may be included in a core network or may be requested by a client connected to the core network. The location information may be reported in a standard format such as cell-based or geographic coordinates, and in this case, the estimation error values for the location(position) and speed of the UE and/or the positioning measurement method used for positioning may be reported together.

Positioning Protocol configuration

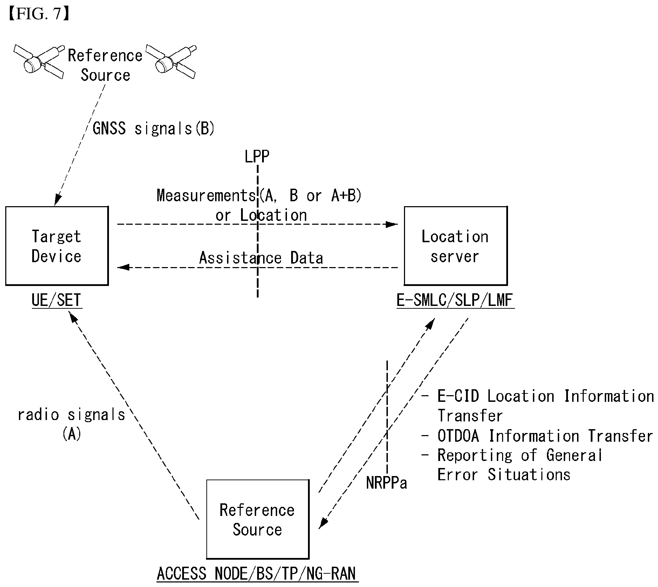

FIG. 7 is a diagram illustrating an example of a positioning protocol configuration for measuring a location of a user equipment (UE).

Referring to FIG. 7, LPP may be used as a point-to-point between a location server (E-SMLC and/or SLP and/or LMF) and a target device to position the target device (UE and/or SET) based on position-related measurements obtained from one or more reference sources. The target device and the location server may exchange measurement and/or location information based on signal A and/or signal B through the LPP.

NRPPa may be used to exchange information between the reference source (ACCESS NODE and/or BS and/or TP and/or NG-RAN nodes) and the location server.

Functions provided by the NRPPa protocol may include the following.

- E-CID Location Information Transfer: Through this function, location information may be exchanged between the reference source and the LMF for E-CID positioning purposes.
- OTDOA Information Transfer: Through this function, information may be exchanged between the reference source and the LMF for OTDOA positioning purposes.
- Reporting of General Error Situations: Through this function, a general error situation in which an error message for each function is not defined may be reported.

PRS mapping

For positioning, a positioning reference signal (PRS) may be used. The PRS is a reference signal used for position estimation of the UE.

PRS mapping in a wireless communication system to which embodiments are applicable in the present disclosure may be performed based on Table 6 below.

【Table 6】

7.2 Physical resources

The following antenna ports are defined for the downlink:

- Antenna ports starting with 5000 for positioning reference signals

The UE shall not assume that two antenna ports are quasi co-located with respect to any QCL type unless specified otherwise.

7.4.1.7 Positioning reference signals

7.4.1.7.1 General

A positioning frequency layer consists of one or more downlink PRS resource sets, each of which consists of one or more downlink PRS resources as described in [6, TS 38.214].

7.4.1.7.2 Sequence generation

The UE shall assume the reference-signal sequence $r(m)$ is defined by

$$r(m) = \frac{1}{\sqrt{2}}(1 - 2c(m)) + j\frac{1}{\sqrt{2}}(1 - 2c(m+1))$$

where the pseudo-random sequence $c(i)$ is defined in clause 5.2.1. The pseudo-random sequence generator shall be initialised with

$$c_{\text{init}} = \left(2^{22}\left\lceil\frac{n_{\text{ID,seq}}^{\text{PRS}}}{1024}\right\rceil + 2^{10}\left(N_{\text{symb}}^{\text{slot}}n_{\text{s,f}}^{\mu} + l + 1\right)\left(2\left(n_{\text{ID,seq}}^{\text{PRS}} \bmod 1024\right) + 1\right) + \left(n_{\text{ID,seq}}^{\text{PRS}} \bmod 1024\right)\right) \bmod 2^{31}$$

where $n_{\text{s,f}}^{\mu}$ is the slot number, the downlink PRS sequence ID $n_{\text{ID,seq}}^{\text{PRS}} \in \{0,1,\ldots,4095\}$ is given by the higher-layer parameter DL-PRS-SequenceId, and $l$ is the OFDM symbol within the slot to which the sequence is mapped.

7.4.1.7.3 Mapping to physical resources in a downlink PRS resource

For each downlink PRS resource configured, the UE shall assume the sequence $r(m)$ is scaled with a factor $\beta_{\text{PRS}}$ and mapped to resources elements $(k,l)_{p,\mu}$ according to

$$a_{k,l}^{(p,\mu)} = \beta_{\text{PRS}}\, r(m)$$
$$m = 0, 1, \ldots$$
$$k = mK_{\text{comb}}^{\text{PRS}} + \left(\left(k_{\text{offset}}^{\text{PRS}} + k'\right) \bmod K_{\text{comb}}^{\text{PRS}}\right)$$
$$l = l_{\text{start}}^{\text{PRS}}, l_{\text{start}}^{\text{PRS}} + 1, \ldots, l_{\text{start}}^{\text{PRS}} + L_{\text{PRS}} - 1$$

when the following conditions are fulfilled:

- the resource element $(k,l)_{p,\mu}$ is within the resource blocks occupied by the downlink PRS resource for which the UE is configured;

- the symbol $l$ is not used by any SS/PBCH block used by the serving cell for downlink PRS transmitted from the serving cell or indicated by the higher-layer parameter SSB-positionInBurst for downlink PRS transmitted from a non-serving cell;
- the slot number satisfies the conditions in clause 7.4.1.7.4. [TS 38.211]

and where

- $l_{\text{start}}^{\text{PRS}}$ is the first symbol of the downlink PRS within a slot and given by the higher-layer parameter DL-PRS-ResourceSymbolOffset;
- the size of the downlink PRS resource in the time domain $L_{\text{PRS}} \in \{2,4,6,12\}$ is given by the higher-layer parameter DL-PRS-NumSymbols;
- the comb size $K_{\text{comb}}^{\text{PRS}} \in \{2,4,6,12\}$ is given by the higher-layer parameter transmissionComb;
- the resource-element offset $k_{\text{offset}}^{\text{PRS}} \in \{0,1,\dots,K_{\text{comb}}^{\text{PRS}} - 1\}$ is given by the higher-layer parameter

combOffset;
- the quantity $k'$ is given by Table 7.4.1.7.3-1.

The reference point for $k = 0$ is the location of the point A of the positioning frequency layer, in which the downlink PRS resource is configured where point A is given by the higher-layer parameter DL-PRS-PointA.

Table 7.4.1.7.3-1: The frequency offset $k'$ as a function of $l - l_{\text{start}}^{\text{PRS}}$.

| $K_{\text{comb}}^{\text{PRS}}$ | Symbol number within the downlink PRS resource $l - l_{\text{start}}^{\text{PRS}}$ | | | | | | | | | | | |
|---|---|---|---|---|---|---|---|---|---|---|---|---|
| | 0 | 1 | 2 | 3 | 4 | 5 | 6 | 7 | 8 | 9 | 10 | 11 |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

7.4.1.7.4 Mapping to slots in a downlink PRS resource set

For a downlink PRS resource in a downlink PRS resource set, the UE shall assume the downlink PRS resource being transmitted when the slot and frame numbers fulfil

$$\left(N_{\text{slot}}^{\text{frame},\mu} n_f + n_{s,f}^{\mu} - T_{\text{offset}}^{\text{PRS}} - T_{\text{offset,res}}^{\text{PRS}}\right) \bmod 2^{\mu} T_{\text{per}}^{\text{PRS}} \in \left\{iT_{\text{gap}}^{\text{PRS}}\right\}_{i=0}^{T_{\text{rep}}^{\text{PRS}}-1}$$

and one of the following conditions are fulfilled:

- the higher-layer parameter DL-PRS-MutingPattern is not provided;
- the higher-layer parameter DL-PRS-MutingPattern is provided and bitmap $\{b^1\}$ but not bitmap $\{b^2\}$ is provided, and bit $b_i^1$ is set;
- the higher-layer parameter DL-PRS-MutingPattern is provided and bitmap $\{b^2\}$ but not bitmap $\{b^1\}$ is provided, and bit $b_i^2$ is set;
- the higher-layer parameter DL-PRS-MutingPattern is provided and both bitmaps $\{b^1\}$ and $\{b^2\}$ are provided, and both bit $b_i^1$ and $b_i^2$ are set.

where

- $b_i^1$ is bit $i = \left\lfloor \left(N_{\text{slot}}^{\text{frame},\mu} n_f + n_{s,f}^{\mu} - T_{\text{offset}}^{\text{PRS}} - T_{\text{offset,res}}^{\text{PRS}}\right) / \left(2^{\mu} T_{\text{muting}}^{\text{PRS}} T_{\text{per}}^{\text{PRS}}\right)\right\rfloor \bmod L$ in the bitmap given by the higher-layer parameter DL-PRS-MutingPattern where $L \in \{2,4,8,16,32\}$ is the size of the bitmap;
- $b_i^2$ is bit $i = \left\lfloor \left(\left(N_{\text{slot}}^{\text{frame},\mu} n_f + n_{s,f}^{\mu} - T_{\text{offset}}^{\text{PRS}} - T_{\text{offset,res}}^{\text{PRS}}\right) \bmod 2^{\mu} T_{\text{per}}^{\text{PRS}}\right) / T_{\text{gap}}^{\text{PRS}}\right\rfloor \bmod T_{\text{rep}}^{\text{PRS}}$ in the bitmap given by the higher-layer parameter DL-PRS-MutingPattern;
- the slot offset $T_{\text{offset}}^{\text{PRS}} \in \{0,1,\dots,T_{\text{per}}^{\text{PRS}} - 1\}$ is given by the higher-layer parameter DL-PRS-ResourceSetSlotOffset;
- the downlink PRS resource slot offset $T_{\text{offset,res}}^{\text{PRS}}$ is given by the higher-layer parameter DL-PRS-ResourceSlotOffset;
- the periodicity $T_{\text{per}}^{\text{PRS}} \in \{4,5,8,10,16,20,32,40,64,80,160,320,640,1280,2560,5120,10240\}$ is given by the higher-layer parameter DL-PRS-Periodicity;
- the repetition factor $T_{\text{rep}}^{\text{PRS}} \in \{1,2,4,6,8,16,32\}$ is given by the higher-layer parameter DL-PRS-ResourceRepetitionFactor;
- the muting repetition factor $T_{\text{muting}}^{\text{PRS}}$ is given by the higher-layer parameter DL-PRS-

MutingBitRepetitionFactor;

- the time gap $T_{\text{gap}}^{\text{PRS}} \in \{1,2,4,8,16,32\}$ is given by the higher-layer parameter DL-PRS-ResourceTimeGap;

For a downlink PRS resource in a downlink PRS resource set configured, the UE shall assume the downlink PRS resource being transmitted as described in clause 5.1.6.4 of [6, TS 38.214].

PRS reception procedure

The PRS reception procedure of the UE in a wireless communication system to which embodiments are applicable in the present disclosure may be performed based on Table 7 below.

[Table 7]

5.1.6.5 PRS reception procedure

The UE can be configured with one or more DL PRS resource set configuration(s) as indicated by the higher layer parameters DL-PRS-ResourceSet and DL-PRS-Resource. Each DL PRS resource set consists of K≥1 DL PRS resource(s) where each has an associated spatial transmission filter. The UE can be configured with one or more DL PRS Positioning Frequency Layer configuration(s) as indicated by the higher layer parameter DL-PRS-PositioningFrequencyLayer. A DL PRS Positioning Frequency Layer is defined as a collection of DL PRS Resource Sets which have common parameters configured by DL-PRS-PositioningFrequencyLayer.

The UE assumes that the following parameters for each DL PRS resource(s) are configured via higher layer parameters DL-PRS-PositioningFrequencyLayer, DL-PRS-ResourceSet and DL-PRS-Resource.

A positioning frequency layer consists of one or more PRS resource sets and it is defined by:

- DL-PRS-SubcarrierSpacing defines the subcarrier spacing for the DL PRS resource. All DL PRS Resources and DL PRS Resource sets in the same DL-PRS-PositioningFrequencyLayer have the same value of DL-PRS-SubcarrierSpacing. The supported values of DL-PRS-SubcarrierSpacing are given in Table 4.2-1 of [4, TS38.211].

- DL-PRS-CyclicPrefix defines the cyclic prefix for the DL PRS resource. All DL PRS Resources and DL PRS Resource sets in the same DL-PRS-PositioningFrequencyLayer have the same value of DL-PRS-CyclicPrefix. The supported values of DL-PRS-CyclicPrefix are given in Table 4.2-1 of [4, TS38.211].

- DL-PRS-PointA defines the absolute frequency of the reference resource block. Its lowest subcarrier is also known as Point A. All DL PRS resources belonging to the same DL PRS Resource Set have common Point A and all DL PRS Resources sets belonging to the same DL-PRS-PositioningFrequencyLayer have a common Point A. The UE expects that it will be configured with [IDs] each of which is defined such that it is associated with multiple DL PRS Resource Sets from the same cell. The UE expects that one of these [IDs] along with a DL-PRS-ResourceSetId and a DL-PRS-ResourceId can be used to uniquely identify a DL PRS Resource.

A PRS resource set consists of one or more PRS resources and it is defined by:

- DL-PRS-ResourceSetId defines the identity of the DL PRS resource set configuration.

- DL-PRS-Periodicity defines the DL PRS resource periodicity and takes values $T_{\mathrm{per}}^{\mathrm{PRS}} \in 2^{\mu}\{4, 8, 16, 32, 64, 5, 10, 20, 40, 80, 160, 320, 640, 1280, 2560, 5120, 10240, 20480\}$

slots, where $\mu$ = 0,1,2,3 for DL-PRS-SubcarrierSpacing=15, 30, 60 and 120kHz respectively. $T_{\mathrm{per}}^{\mathrm{PRS}} = 2^{\mu} \cdot 20480$ is not supported for $\mu$ = 0. All the DL PRS resources within one resource set are configured with the same periodicity.

- DL-PRS-ResourceRepetitionFactor defines how many times each DL-PRS resource is repeated for a single instance of the DL-PRS resource set and takes values $T_{\mathrm{rep}}^{\mathrm{PRS}} \in \{1,2,4,6,8,16,32\}$ ,. All the DL PRS resources within one resource set have the same ResourceRepetitionFactor

- DL-PRS-ResourceTimeGap defines the offset in number of slots between two repeated instances of a DL PRS resource with the same DL-PRS-ResourceID within a single instance of the DL PRS resource set and takes values $T_{\mathrm{gap}}^{\mathrm{PRS}} \in \{1,2,4,8,16,32\}$ . The UE only expects to be configured with DL-PRS-ResourceTimeGap if DL-PRS-ResourceRepetitionFactor is configured with value greater than 1. The time duration spanned by one instance of a DL-PRS-ResourceSet is not expected to exceed the configured value of DL-PRS-Periodicity. All the DL PRS resources within one resource set have the same DL-PRS-ResourceTimeGap.

- DL-PRS-MutingPattern defines a bitmap of the time locations where the DL PRS resource is expected to not be transmitted for a DL PRS resource set. The bitmap size can be {2, 4, 8, 16, 32} bits

long. The bitmap has two options for applicability. In the first option each bit in the bitmap corresponds to a configurable number of consecutive instances of a DL-PRS-ResourceSet where all the DL-PRS-Resources within the set are muted for the instance that is indicated to be muted. In the second option each bit in the bitmap corresponds to a single repetition index for each of the DL-PRS-Resources within each instance of a DL-PRS-ResourceSet and the length of the bitmap is equal to DL-PRS-ResourceRepetitionFactor. Both options may be configured at the same time in which case the logical AND operation is applied to the bit maps as described in clause 7.4.1.7.4 of [4, TS 38.211].

- DL-PRS-SFN0-Offset defines the time offset of the SFN0 slot 0 for the transmitting cell with respect to SFN0 slot 0 of [FFS in RAN2].

- DL-PRS-ResourceSetSlotOffset defines the slot offset with respect to SFN0 slot 0 and takes values $T_{\text{offset}}^{\text{PRS}} \in \left\{ 0,1,\ldots,T_{\text{per}}^{\text{PRS}} - 1 \right\}$.

- DL-PRS-CombSizeN defines the comb size of a DL PRS resource where the allowable values are given in Clause 7.4.1.7.1 of [TS38.211]. All DL PRS resource sets belonging to the same positioning frequency layer have the same value of DL-PRS-combSizeN.

- DL-PRS-ResourceBandwidth defines the number of resource blocks configured for PRS transmission. The parameter has a granularity of 4 PRBs with a minimum of 24 PRBs and a maximum of 272 PRBs. All DL PRS resources sets within a positioning frequency layer have the same value of DL-PRS-ResourceBandwidth.

A PRS resource is defined by:

- DL-PRS-ResourceList determines the DL PRS resources that are contained within one DL PRS resource set.

- DL-PRS-ResourceId determines the DL PRS resource configuration identity. All DL PRS resource IDs are locally defined within a DL PRS resource set.

- DL-PRS-SequenceId is used to initialize cinit value used in pseudo random generator [4, TS38.211, 7.4.1.7.2] for generation of DL PRS sequence for a given DL PRS resource.

- DL-PRS-ReOffset defines the starting RE offset of the first symbol within a DL PRS resource in frequency. The relative RE offsets of the remaining symbols within a DL PRS resource are defined based on the initial offset and the rule described in Clause 7.4.1.7.3 of [4, TS38.211].

- DL-PRS-ResourceSlotOffset determines the starting slot of the DL PRS resource with respect to corresponding DL-PRS-ResourceSetSlotOffset

- DL-PRS-ResourceSymbolOffset determines the starting symbol of the DL PRS resource within the starting slot.

- DL-PRS-NumSymbols defines the number of symbols of the DL PRS resource within a slot where the allowable values are given in Clause 7.4.1.7.1 of [4, TS38.211].

- DL-PRS-QCL-Info defines any quasi-colocation information of the DL PRS resource with other reference signals. The DL PRS may be configured to be 'QCL-Type-D' with a DL PRS or SS/PBCH Block from a serving cell or a non-serving cell. The DL PRS may be configured to be 'QCL-Type-C' with a SS/PBCH

Block from a serving or non-serving cell. If the DL PRS is configured as both 'QCL-Type-C' and 'QCL-Type-D' with a SS/PBCH Block then the SSB index indicated should be the same.

- DL-PRS-StartPRB defines the starting PRB index of the DL PRS resource with respect to reference Point A. The starting PRB index has a granularity of one PRB with a minimum value of 0 and a maximum value of 2176 PRBs. All DL PRS Resource Sets belonging to the same Positioning Frequency Layer have the same value of Start PRB.

The UE assumes constant EPRE is used for all REs of a given DL PRS resource.

The UE may be indicated by the network that a DL PRS resources can be used as the reference for the RSTD measurement in a higher layer parameter DL-PRS-RstdReferenceInfo. The reference time indicated by the network to the UE can also be used by the UE to determine how to apply higher layer parameters DL-PRS-expectedRSTD and DL-PRS-expectedRSTD-uncertainty. The UE expects the

reference time to be indicated whenever it is expected to receive the DL PRS. This reference time provided by DL-PRS-RstdReferenceInfo may include an [ID], a PRS resource set ID, and optionally a single PRS resource ID or a list of PRS resource IDs. The UE may use different DL PRS resources or a different DL PRS resource set to determine the reference time for the RSTD measurement as long as the condition that the DL PRS resources used belong to a single DL PRS resource set is met. If the UE chooses to use a different reference time than indicated by the network, then it is expected to report the DL PRS resource ID(s) or the DL PRS resource set ID used to determine the reference.

The UE may be configured to report quality metrics corresponding to the RSTD and UE Rx-Tx time difference measurements which include the following fields:

- TimingMeasQuality-Value which provides the best estimate of the uncertainty of the measurement

- TimingMeasQuality-Resolution which specifies the resolution levels used in the Value field The UE expects to be configured with higher layer parameter DL-PRS-expectedRSTD, which defines the time difference with respect to the received DL subframe timing the UE is expected to receive DL PRS, and DL-PRS-expectedRSTD-uncertainty, which defines a search window around the expectedRSTD.

For DL UE positioning measurement reporting in higher layer parameters DL-PRS-RstdMeasurementInfo or DL-PRS-UE-Rx-Tx-MeasurementInfo the UE can be configured to report the DL PRS resource ID(s) or the DL PRS resource set ID(s) associated with the DL PRS resource(s) or the DL PRS resource set(s) which are used in determining the UE measurements DL RSTD, UE Tx-Rx time difference or the DL PRS-RSRP.

The UE can be configured in higher layer parameter UE Rx-Tx Time-MeasRequestInfo to report multiple UE Rx-Tx time difference measurements corresponding to a single configured SRS resource or resource set for positioning. Each measurement corresponds to a single received DL PRS resource or resource set which can be in difference positioning frequency layers.

For the DL RSTD, DL PRS-RSRP, and UE Rx-Tx time difference measurements the UE can report an associated higher layer parameter Timestamp. The Timestamp can include the SFN and the slot number for a subcarrier spacing. These values correspond to the reference which is provided by DL-PRS-RSTDReferenceInfo.

The UE is expected to measure the DL PRS resource outside the active DL BWP or with a numerology different from the numerology of the active DL BWP if the measurement is made during a configured measurement gap. When not configured with a measurement gap, the UE is only required to measure DL PRS within the active DL BWP and with the same numerology as the active DL BWP. If the UE is not provided with a measurement gap, the UE is not expected to process DL PRS resources on serving or non-serving cells on any symbols indicated as UL by the serving cell. When the UE is expected to measure the DL PRS resource outside the active DL BWP it may request a measurement gap in higher layer parameter [XYZ].

The UE assumes that for the serving cell the DL PRS is not mapped to any symbol that contains SS/PBCH. If the time frequency location of the SS/PBCH block transmissions from non-serving cells are provided to the UE then the UE also assumes that the DL PRS is not mapped to any symbol that contains the SS/PBCH block of the non-serving cell.

The UE may be configured to report, subject to UE capability, up to 4 DL RSTD measurements per pair of cells with each measurement between a different pair of DL PRS resources or DL PRS resource sets within the DL PRS configured for those cells. The up to 4 measurements being performed on the same pair of cells and all DL RSTD measurements in the same report use a single reference timing.

The UE may be configured to measure and report up to 8 DL PRS RSRP measurements on different DL PRS resources from the same cell. When the UE reports DL PRS RSRP measurements from one DL PRS resource set, the UE may indicate which DL PRS RSRP measurements have been

performed using the same spatial domain filter for reception.

If the UE is configured with DL-PRS-QCL-Info and the QCL relation is between two DL PRS resources, then the UE assumes those DL PRS resources are from the same cell. If DL-PRS-QCL-Info is configured to the UE with 'QCL-Type-D' with a source DL-PRS-Resource then the DL-PRS-ResourceSetId and the DL-PRS-ResourceId of the source DL-PRS-Resource are expected to be indicated to the UE.

(continued)

| |
|---|
| The UE does not expect to process the DL PRS in the same symbol where other DL signals and channels are transmitted to the UE when there is no measurement gap configured to the UE. |

Positioning achitecture

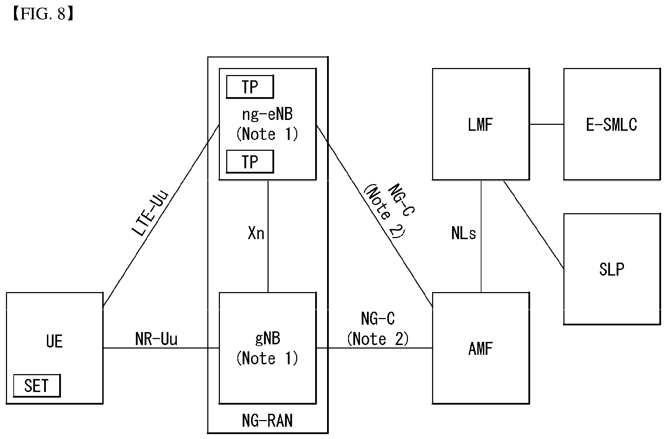

FIG. 8 is a diagram illustrating an example of architecture of a system for measuring a location of an UE.

Referring to FIG. 8, the AMF (Core Access and Mobility Management Function) may receive a request for location service related to a specific target UE from another entity such as the GMLC (Gateway Mobile Location Center), or may decide to start the location service on behalf of the specific target UE in the AMF itself. Then, the AMF transmits a location service request to the LMF (Location Management Function). The LMF receiving the location service request may process the location service request and return a processing result including the estimated location of the UE to the AMF. On the other hand, based on the location service request being received from another entity such as the GMLC other than the AMF, the AMF may transmit the processing result received from the LMF to another entity.

New generation evolved-NB (ng-eNB) and gNB may be network elements of NG-RAN that can provide measurement results for location tracking, and measure a radio signal for the target UE and transmit the result to the LMF. In addition, the ng-eNB may control some TPs (Transmission Points), such as remote radio heads, or PRS-only TPs supporting a PRS-based beacon system for E-UTRA.

The LMF may be connected to an Enhanced Serving Mobile Location Center (E-SMLC), and the E-SMLC may enable the LMF to access the E-UTRAN. For example, the E-SMLC may enable the LMF to support Observed Time Difference Of Arrival (OTDOA) which is one of the E-UTRAN positioning measurement methods, based on the downlink measurement which is obtained by the target UE through a signal transmitted from TPs dedicated for PRS in the eNB and/or E-UTRAN.

Meanwhile, the LMF may be connected to a SUPL Location Platform (SLP). The LMF may support and manage different location services for target UEs. The LMF may interact with the serving ng-eNB or serving gNB for the target UE to obtain the location measurement of the UE. For positioning of the target UE, the LMF may determine a positioning measurement method based on Location Service (LCS) client type, required QoS (Quality of Service), UE positioning capabilities, and gNB positioning capabilities and ng-eNB positioning capabilities, and apply this positioning measurement method to the serving gNB and/or the serving ng-eNB. Then, the LMF may determine a position estimate for the target UE and additional information such as accuracy of the position estimate and velocity. The SLP is a SUPL (Secure User Plane Location) entity responsible for positioning through a user plane.

The UE may measure the location of the UE by utilizing a downlink reference signal transmitted from the NG-RAN and the E-UTRAN. In this case, the downlink reference signal transmitted from the NG-RAN and the E-UTRAN to the UE may include an SS/PBCH block, CSI-RS and/or PRS, etc., and whether to measure the location of the UE using any downlink reference signal may depend on a configuration such as LMF/E-SMLC/ng-eNB/E-UTRAN, etc. In addition, the location of the UE may be measured in a RAT-independent method using different GNSS (Global Navigation Satellite System), TBS (Terrestrial Beacon System), WLAN access points, Bluetooth beacon and a sensor (e.g. barometric pressure sensor) built into the UE. The UE may include an LCS application, and access the LCS application through communication with a network to which the UE is connected or other applications included in the UE. The LCS application may include measurement and calculation functions necessary to determine the location of the UE. For example, the UE may include an independent positioning function such as Global Positioning System (GPS), and may report the location of the UE independently of NG-RAN transmission. The independently acquired positioning information may be utilized as auxiliary information of positioning information acquired from the network.

Position measurement procedure

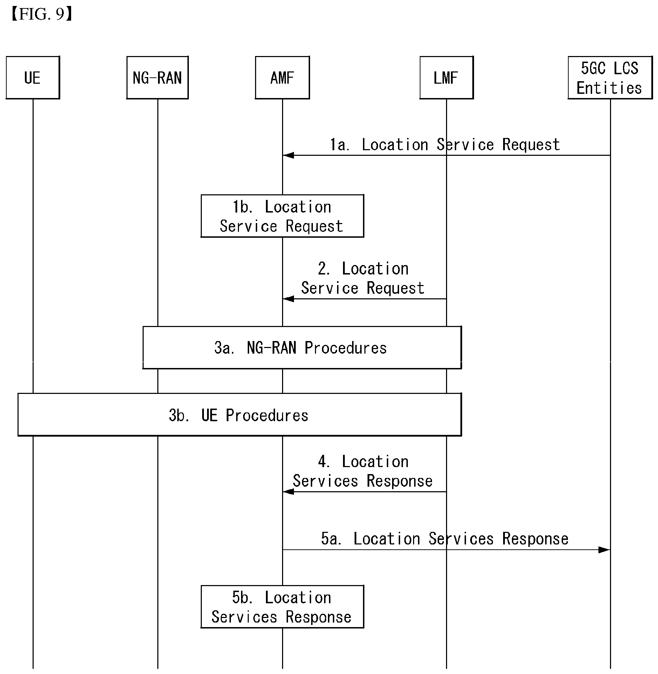

FIG. 9 is a diagram illustrating an example of a procedure for measuring a location of a UE.

When the UE is in CM-IDLE (Connection Management - IDLE) state, when the AMF receives a location service request, the AMF may establish a signaling connection with the UE, and request a network trigger service to allocate a specific serving gNB or ng-eNB. This operation process is omitted in FIG. 9. That is, in FIG. 8, it may be assumed that the UE is in a connected mode. However, the signaling connection may be released during the positioning process by the NG-RAN for reasons such as signaling and data inactivity.

Looking at the operation process of the network for measuring the location of the UE in detail with reference to FIGS. 8 and 9, in step 1a, a SGC entity such as GMLC may request a location service for measuring the location of a target UE with a serving AMF. However, even if the GMLC does not request the location service, based on step 1b, the serving AMF may determine that the location service is necessary for measuring the location of the target UE. For example, in order to measure the location of the UE for an emergency call, the serving AMF may decide to directly perform the location service.

Then, based on step 2, the AMF may send a location service request to the LMF, and based on step 3a, the LMF may initiate location procedures for obtaining location measurement data or location measurement assistance data together with the serving ng-eNB and the serving gNB. For example, the LMF may request location-related information related to one or more UEs to the NG-RAN, and instruct the type of location information required and the associated QoS. Then, in response to the request, the NG-RAN may transmit the location-related information to the LMF. In this case, based on the method for determining the location by the request being E-CID, the NG-RAN may transmit additional location-related information to the LMF through one or more NRPPa messages. Here, 'location-related information' may mean all values used for location calculation, such as actual location estimation information and wireless measurement or location measurement, etc. In addition, the protocol used in step 3a may be an NRPPa protocol, which will be described later.

Additionally, based on step 3b, the LMF may initiate location procedures for downlink positioning with the UE. For example, the LMF may send location assistance data to the UE, or obtain a location estimate or location measurement. For example, in step 3b, a capability transfer process may be performed. Specifically, the LMF may request capability information from the UE, and the UE may transmit capability information to the LMF. In this case, the capability information may include information on a location measurement method that the LFM or UE can support, information on various aspects of a specific location measurement method, such as various types of assistance data for A-GNSS, and information on common characteristics that are not limited to any one location measurement method, such as the ability to handle multiple LPP transactions, etc. Meanwhile, in some cases, even if the LMF does not request capability information from the UE, the UE may provide capability information to the LMF.

As another example, a location assistance data transfer process may be performed in step 3b. Specifically, the UE may request location assistance data from the LMF, and may indicate required specific location assistance data to the LMF. Then, the LMF may deliver location assistance data corresponding thereto to the UE, and additionally, may transmit additional assistance data to the UE through one or more additional LPP messages. On the other hand, location assistance data transmitted from the LMF to the UE may be transmitted through a unicast method, and in some cases, the LMF may transmit location assistance data and/or additional assistance data to the UE without the UE requesting assistance data from the LMF.

As another example, a location information transfer process may be performed in step 3b. Specifically, the LMF may request the UE for location-related information related to the UE, and may indicate the type of location information required and the associated QoS. Then, in response to the request, the UE may transmit the location related information to the LMF. In this case, the UE may additionally transmit additional location-related information to the LMF through one or more LPP messages. Here, 'location-related information' may mean all values used for location calculation, such as actual location estimation information and wireless measurement or location measurement, etc, and representatively, there may be a Reference Signal Time Difference (RSTD) value measured by the UE based on downlink reference signals transmitted from a plurality of NG-RAN and/or E-UTRAN to the UE. Similar to the above, the UE may transmit the location-related information to the LMF even if there is no request from the LMF.

On the other hand, the processes made in step 3b described above may be performed independently, but may be performed continuously. In general, step 3b is performed in the order of a capability transfer process, an assistance data transfer process, and a location information transfer process, but is not limited to this order. In other words, step 3b is not limited to a specific order in order to improve the flexibility of location measurement. For example, the UE may request location assistance data at any time to perform the location measurement request already requested by the LMF. In addition, if the location information delivered by the UE does not satisfy the QoS required, the LMF may also request location information, such as location measurements or location estimates, at any time. Similarly, when the UE does not perform measurement for location estimation, the UE may transmit capability information to the LMF at any time.

In addition, when an Error occurs in the information or request exchanged between the LMF and the UE in step 3b, an Error message may be transmitted/received, and an Abort message may be transmitted/received for stopping position measurement.

On the other hand, the protocol used in step 3b may be an LPP protocol, which will be described later.

Meanwhile, step 3b may be additionally performed after step 3a is performed, or may be performed instead of step 3a.

In step 4, the LMF may provide a location service response to the AMF. In addition, the location service response may include information on whether the location estimation of the UE was successful and the location estimate of the UE. After that, if the procedure of FIG. 9 is initiated by step 1a, the AMF may deliver a location service response to a SGC entity such as GMLC, and if the procedure of FIG. 9 is initiated by step 1b, the AMF may use a location service response to provide a location service related to an emergency call or the like.

In the protocol for location measurement described below, definitions of some terms may be based on Table 8 below.

[Table 8]

-NR-Uu interface: The NR-Uu interface, connecting the UE to the gNB over the air, is used as one of several transport links for the LTE Positioning Protocol for a target UE with NR access to NG-RAN.

- LTE-Uu interface: The LTE-Uu interface, connecting the UE to the ng-eNB over the air, is used as one of several transport links for the LTE Positioning Protocol for a target UE with LTE access to NG-RAN.

- NG-C interface: The NG-C interface between the gNB and the AMF and between the ng-eNB and the AMF is transparent to all UE-positioning-related procedures. It is involved in these procedures only as a transport link for the LTE Positioning Protocol. For gNB related positioning procedures, the NG-C interface transparently transports both positioning requests from the LMF to the gNB and positioning results from the gNB to the LMF. For ng-eNB related positioning procedures, the NG-C interface transparently transports both positioning requests from the LMF to the ng-eNB and positioning results from the ng-eNB to the LMF.

- NLs interface: The NLs interface, between the LMF and the AMF, is transparent to all UE related, gNB related and ng-eNB related positioning procedures. It is used only as a transport link for the LTE Positioning Protocols LPP and NRPPa.

LTE Positioning Protocol (LPP)

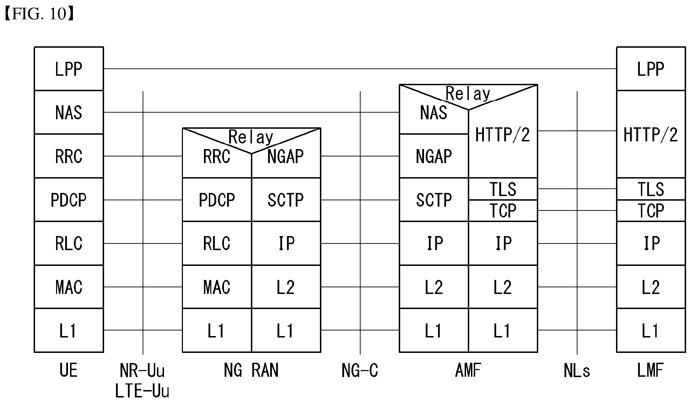

FIG. 10 is a diagram illustrating an example of a protocol layer for supporting LPP message transmission.

Referring to FIG. 10, an LPP PDU may be transmitted through a NAS PDU between the MAF and the UE. The LPP may terminate a connection between a target device (e.g. UE in the control plane or SUPL Enabled Terminal (SET) in the user plane) and a location server (e.g. LMF in the control plane or SLP in the user plane). The LPP message may be delivered in the form of a transparent PDU through an intermediate network interface using an appropriate protocol such as NGAP through the NG-C interface, NAS/RRC through the LTE-Uu and NR-Uu interfaces. The LPP protocol enables positioning for NR and LTE based on various positioning methods.

For example, the target device and the location server may exchange capability information, assistance data for positioning, and/or location information with each other through the LPP protocol. In addition, error information exchange and/or an instruction to stop the LPP procedure may be performed through the LPP message.

LPP procedures for UE Positioning

A signal transmission/reception operation based on the LPP protocol to which the method proposed in the present disclosure can be applied may be performed based on Table 9 below.

[Table 9]

As described above, the protocol operates between a "target" and a "server". In the control-plane context, these entities are the UE and LMF respectively; in the SUPL context they are the SET and the SLP. A procedure may be initiated by either the target or the server.

1) Capability Transfer

Capabilities in an LPP context refer to the ability of a target or server to support different position methods defined for LPP, different aspects of a particular position method (e.g. different types of assistance data for A-GNSS) and common features not specific to only one position method (e.g. ability to handle multiple LPP transactions). These capabilities are defined within the LPP protocol and transferred between the target and the server using LPP transport.

The exchange of capabilities between a target and a server may be initiated by a request or sent as "unsolicited" information. If a request is used, the server sends an LPP Request Capabilities message to the target device with a request for capability information. The target sends an LPP Provide Capabilities message. Example of LPP Capability Transfer procedure

1. The server may send a request for the LPP related capabilities of the target.

2. The target transfers its LPP-related capabilities to the server. The capabilities may refer to particular position methods or may be common to multiple position methods.

LPP Capability Indication procedure is used for unsolicited capability transfer.

2) Assistance data Transfer

Assistance data may be transferred either by request or unsolicited. In this version of the specification, assistance data delivery is supported only via unicast transport from server to target.

Example of LPP Assistance Data Transfer procedure

1. The target may send a request to the server for assistance data and may indicate the particular assistance data needed.

2.The server transfers assistance data to the target. The transferred assistance data should match any assistance data requested in step 1.

3. Optionally, the server may transfer additional assistance data to the target in one or more additional LPP messages.

LPP Assistance Data Delivery procedure is used for unilateral assistance data transfer. This procedure is unidirectional; assistance data are always delivered from the server to the target.

3) Location Information Transfer

The term "location information" applies both to an actual position estimate and to values used in computing position (e.g., radio measurements or positioning measurements). It is delivered either in response to a request or unsolicited.

Example of LPP Location Information Transfer procedure

1. The server may send a request for location information to the target, and may indicate the type of location information needed and associated QoS.

2. In response to step 1, the target transfers location information to the server. The location information transferred should match the location information requested in step 1.

3. Optionally (e.g., if requested in step 1), the target in step 2 may transfer additional location information to the server in one or more additional LPP messages.

LPP Location Information Delivery procedure is used for unilateral location information transfer.

Furthermore, the LPP Location Information Delivery procedure can only be piggybacked in the MO-LR request.

4) Multiple Transactions

Multiple LPP transactions may be in progress simultaneously between the same target and server nodes, to improve flexibility and efficiency. However, no more than one LPP procedure between a particular pair of target and server nodes to obtain location information shall be in progress at any time for the same position method.

In this example, the objective is to request location measurements from the target, and the server does not provide assistance data in advance, leaving the target to request any needed assistance data.

| |
|---|
| Example of multiple LPP procedures |
| 1. The server sends a request to the target for positioning measurements. |
| 2. The target sends a request for particular assistance data. |
| 3. The server returns the assistance data requested in step 2. |
| 4. The target obtains and returns the location information (e.g., positioning method measurements) requested in step 1. |
| 5) Error handling |
| The procedure is used to notify the sending endpoint by the receiving endpoint that the receiving LPP message is erroneous or unexpected. This procedure is bidirectional at the LPP level; either the target or the server may take the role of either endpoint in the corresponding procedure. |
| Example of Error handling procedure |
| 1. The target or server sends a LPP message to the other endpoint (i.e, "Server/Target"). |
| 2. If the server or target ("Server/Target") detects that the receiving LPP message is erroneous or unexpected, the server or target transfers error indication information to the other endpoint ("Target/Server"). |
| 6) Abort |
| The procedure is used to notify the other endpoint by one endpoint to abort an ongoing procedure between the two endpoints. This procedure is bidirectional at the LPP level; either the target or the server may take the role of either endpoint in the corresponding procedure. |
| Example of Abort procedure |
| 1. A LPP procedure is ongoing between target and server. |
| 2. If the server or target ("Server/Target") determines that the procedure must be aborted, and then the server or target sends an LPP Abort message to the other endpoint ("Target/Server") carrying the transaction ID for the procedure. |

NR Positioning Protocol A (NRPPa)

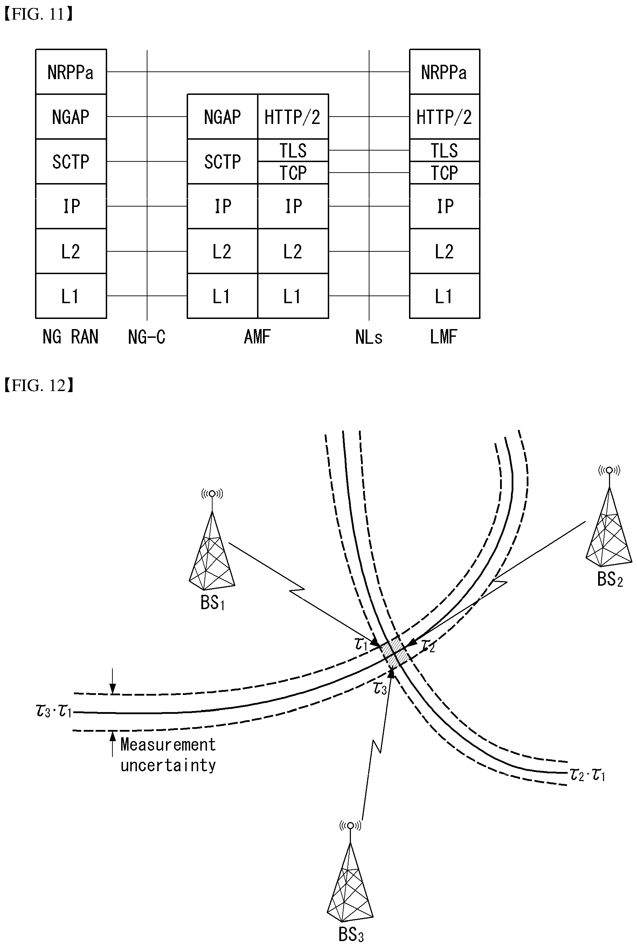

FIG. 11 is a diagram illustrating an example of a protocol layer for supporting NRPPa transmission. Specifically, FIG. 11 illustrates a protocol layer for supporting transmission of an NRPPa PDU (NR Positioning Protocol a Protocol Data Unit).

The NRPPa may be used for information exchange between the NG-RAN node and the LMF. Specifically, the NRPPa may used to exchange E-CID for measurement transmitted from ng-eNB to LMF, data for supporting the OTDOA positioning method, Cell-ID and Cell location ID for the NR Cell ID positioning method, and the like. The AMF may route NRPPa PDUs based on the routing ID of the associated LMF through the NG-C interface even if there is no information on the associated NRPPa transaction.

The procedure of the NRPPa protocol for location and data collection can be divided into two types. The first type is a UE associated procedure for delivering information on a specific UE (e.g. location measurement information, etc.), and the second type is a non-UE associated procedure for delivering information applicable to an NG-RAN node and related TPs (e.g. gNB/ng-eNG/TP timing information, etc.). The two types of procedures may be supported independently or at the same time.

NRPPa Procedure

A signal transmission/reception operation based on the NRPPa protocol to which the embodiments proposed in the present disclosure can be applied may be performed based on Table 10 below.

[Table 10]

Positioning and data acquisition transactions between a LMF and NG-RAN node are modelled by using procedures of the NRPPa protocol. There are two types of NRPPa procedures:

- UE associated procedure, i.e. transfer of information for a particular UE (e.g. positioning measurements);

- Non UE associated procedure, i.e. transfer of information applicable to the NG-RAN node and associated TPs (e.g. gNB/ng-eNB/TP timing information).

Parallel transactions between the same LMF and NG-RAN node are supported; i.e. a pair of LMF and NG-RAN node may have more than one instance of an NRPPa procedure in execution at the same time.

For possible extensibility, the protocol is considered to operate between a generic "access node" (e.g. ng-eNB) and a "server" (e.g. LMF). A procedure is only initiated by the server.

Example of a single NRPPa transaction

1. Access Node sends NRPPa Procedure Request to Server.

2. Server sends NRPPa Procedure Response to Acces Node.

N. Access Node sends NRPPa Procedure Response (end transaction) to Server. (this step may be omitted).

The exmaple shows a single NRPPa transaction. The transaction is terminated in step 2 in the case of a non UE associated procedure. For a UE associated procedure to gather information concerning the access node, additional responses may be allowed (e.g. sending of updated information periodically and/or whenever there is some significant change). In this case, the transaction may be ended after some additional responses. In the NRPPa protocol, the described transaction may be realized by the execution of one procedure defined as a request and a response, followed by one or several procedures initiated by the NG-RAN node (each procedure defined as a single message) to realize the additional responses.

An example of LPPa transaction type may be "Location Information Transfer". The term "location information" applies both to an actual position estimate and to values used in computing position (e.g., radio measurements or positioning measurements). It is delivered in response to a request.

Example of Location information transfer

1. The server sends a request for location related information to the NG-RAN node, and indicates the type of location information needed and associated QoS. The request may refer to a particular UE.

2. In response to step 1, the NG-RAN Node transfers location related information to the server. The location related information transferred should match the location related information requested in step 1.

3. If requested in step 1, the NG-RAN node may transfer additional location related information to the server in one or more additional NRPPa messages when the positioning method is E-CID for E-UTRA.

In the present disclosure, a message exchanged (transmitted and received) between a UE (a target device)/location server for positioning and a configuration related to the message may be based on Table 11 below.

【Table 11】

```
RequestCapabilities
The RequestCapabilities message body in a LPP message is used by the location server to request the target
device capability information for LPP and the supported individual positioning methods.
-- ASN1START
RequestCapabilities ::= SEQUENCE {
        criticalExtensions              CHOICE {
                c1                                                              CHOICE {
                        requestCapabilities-r9              RequestCapabilities-r9-IEs,
                        spare3 NULL, spare2 NULL, spare1 NULL
```

```
            },
            criticalExtensionsFuture       SEQUENCE {}
        }
}

RequestCapabilities-r9-IEs ::= SEQUENCE {
        commonIEsRequestCapabilities            CommonIEsRequestCapabilities
        OPTIONAL,       -- Need ON
        a-gnss-RequestCapabilities              A-GNSS-RequestCapabilities
        OPTIONAL,       -- Need ON
        otdoa-RequestCapabilities               OTDOA-RequestCapabilities
        OPTIONAL,       -- Need ON
        ecid-RequestCapabilities                ECID-RequestCapabilities
        OPTIONAL,       -- Need ON
        epdu-RequestCapabilities                EPDU-Sequence
            OPTIONAL,       -- Need ON

        ...,
        [[      sensor-RequestCapabilities-r13   Sensor-RequestCapabilities-r13
        OPTIONAL,       -- Need ON
                tbs-RequestCapabilities-r13      TBS-RequestCapabilities-r13
        OPTIONAL,       -- Need ON
                wlan-RequestCapabilities-r13     WLAN-RequestCapabilities-r13
        OPTIONAL,       -- Need ON
                bt-RequestCapabilities-r13       BT-RequestCapabilities-r13
        OPTIONAL        -- Need ON
        ]],
        [[      nr-ECID-RequestCapabilities-r16  NR-ECID-RequestCapabilities-r16
        OPTIONAL,       -- Need ON
                nr-Multi-RTT-RequestCapabilities-r16
                                                               NR-
Multi-RTT-RequestCapabilities-r16


                                               OPTIONAL,       -- Need ON
                nr-DL-AoD-RequestCapabilities-r16
                                                               NR-DL-
AoD-RequestCapabilities-r16       OPTIONAL,       -- Need ON
                nr-DL-TDOA-RequestCapabilities-r16
                                                               NR-DL-
TDOA-RequestCapabilities-r16       OPTIONAL,       -- Need ON
                nr-UL-RequestCapabilities-r16            NR-UL-RequestCapabilities-r16
        OPTIONAL        -- Need ON
        ]]
}

-- ASN1STOP
```

```
ProvideCapabilities
The ProvideCapabilities message body in a LPP message indicates the LPP capabilities of the target device to
the location server.
-- ASN1START

ProvideCapabilities ::= SEQUENCE {
        criticalExtensions              CHOICE {
                c1                                                      CHOICE {
                        provideCapabilities-r9           ProvideCapabilities-r9-IEs,
                        spare3 NULL, spare2 NULL, spare1 NULL
```

```
                },
                criticalExtensionsFuture     SEQUENCE {}
        }
}

ProvideCapabilities-r9-IEs ::= SEQUENCE {
        commonIEsProvideCapabilities                 CommonIEsProvideCapabilities
        OPTIONAL,
        a-gnss-ProvideCapabilities                   A-GNSS-ProvideCapabilities
        OPTIONAL,
        otdoa-ProvideCapabilities                    OTDOA-ProvideCapabilities
        OPTIONAL,
        ecid-ProvideCapabilities                     ECID-ProvideCapabilities
        OPTIONAL,
        epdu-ProvideCapabilities                     EPDU-Sequence
                        OPTIONAL,

        ...,
        [[      sensor-ProvideCapabilities-r13       Sensor-ProvideCapabilities-r13
        OPTIONAL,
                tbs-ProvideCapabilities-r13          TBS-ProvideCapabilities-r13
        OPTIONAL,
                wlan-ProvideCapabilities-r13 WLAN-ProvideCapabilities-r13
        OPTIONAL,
                bt-ProvideCapabilities-r13           BT-ProvideCapabilities-r13
        OPTIONAL
        ]],
        [[      nr-ECID-ProvideCapabilities-r16      NR-ECID-ProvideCapabilities-r16
        OPTIONAL,
                nr-Multi-RTT-ProvideCapabilities-r16
                                                                    NR-
Multi-RTT-ProvideCapabilities-r16    OPTIONAL,
                nr-DL-AoD-ProvideCapabilities-r16
                                                                    NR-DL-
AoD-ProvideCapabilities-r16          OPTIONAL,
                nr-DL-TDOA-ProvideCapabilities-r16
                                                                    NR-DL-
TDOA-ProvideCapabilities-r16                 OPTIONAL,
                nr-UL-ProvideCapabilities-r16        NR-UL-ProvideCapabilities-r16
        OPTIONAL
        ]]
}


-- ASN1STOP
```

```
RequestAssistanceData
The RequestAssistanceData message body in a LPP message is used by the target device to request assistance
data from the location server.
-- ASN1START

RequestAssistanceData ::= SEQUENCE {
        criticalExtensions            CHOICE {
                c1                                                    CHOICE {
                        requestAssistanceData-r9    RequestAssistanceData-r9-IEs,
                        spare3 NULL, spare2 NULL, spare1 NULL
```

```
                },
                        criticalExtensionsFuture        SEQUENCE {}
        }
}

RequestAssistanceData-r9-IEs ::= SEQUENCE {
        commonIEsRequestAssistanceData                  CommonIEsRequestAssistanceData
        OPTIONAL,
        a-gnss-RequestAssistanceData                    A-GNSS-RequestAssistanceData
        OPTIONAL,
        otdoa-RequestAssistanceData                     OTDOA-RequestAssistanceData
        OPTIONAL,
        epdu-RequestAssistanceData                      EPDU-Sequence
                OPTIONAL,

        ...,
        [[      sensor-RequestAssistanceData-r14
                                                                        Sensor-
RequestAssistanceData-r14   OPTIONAL,
                tbs-RequestAssistanceData-r14           TBS-RequestAssistanceData-r14
        OPTIONAL,
                wlan-RequestAssistanceData-r14          WLAN-RequestAssistanceData-r14
        OPTIONAL
        ]],
        [[      nr-Multi-RTT-RequestAssistanceData-r16          NR-Multi-RTT-RequestAssistanceData-
r16     OPTIONAL,
                nr-DL-AoD-RequestAssistanceData-r16                     NR-DL-AoD-
RequestAssistanceData-r16              OPTIONAL,
                nr-DL-TDOA-RequestAssistanceData-r16            NR-DL-TDOA-RequestAssistanceData-
r16     OPTIONAL
        ]]
}

-- ASN1STOP

ProvideAssistanceData
```

The ProvideAssistanceData message body in a LPP message is used by the location server to provide assistance data to the target device either in response to a request from the target device or in an unsolicited manner.

```
-- ASN1START

ProvideAssistanceData ::= SEQUENCE {
        criticalExtensions              CHOICE {
                c1                                              CHOICE {

                        provideAssistanceData-r9        ProvideAssistanceData-r9-IEs,
```

```
spare3 NULL, spare2 NULL, spare1 NULL
                },
                criticalExtensionsFuture        SEQUENCE {}
        }
}

ProvideAssistanceData-r9-IEs ::= SEQUENCE {
        commonIEsProvideAssistanceData                  CommonIEsProvideAssistanceData
        OPTIONAL,        -- Need ON
        a-gnss-ProvideAssistanceData                    A-GNSS-ProvideAssistanceData
```

```
OPTIONAL,          -- Need ON
otdoa-ProvideAssistanceData                    OTDOA-ProvideAssistanceData
OPTIONAL,          -- Need ON
epdu-Provide-Assistance-Data                   EPDU-Sequence
            OPTIONAL,        -- Need ON

...,
[[
sensor-ProvideAssistanceData-r14     Sensor-ProvideAssistanceData-r14      OPTIONAL,
-- Need ON
tbs-ProvideAssistanceData-r14                  TBS-ProvideAssistanceData-r14
OPTIONAL,          -- Need ON
wlan-ProvideAssistanceData-r14                 WLAN-ProvideAssistanceData-r14
OPTIONAL           -- Need ON
]],
[[          nr-Multi-RTT-ProvideAssistanceData-r16
                                                                        NR-
Multi-RTT-ProvideAssistanceData-r16


                                                    OPTIONAL,     --   Need
ON
            nr-DL-AoD-ProvideAssistanceData-r16
                                                                        NR-DL-
AoD-ProvideAssistanceData-r16        OPTIONAL,        -- Need ON
            nr-DL-TDOA-ProvideAssistanceData-r16
                                                                        NR-DL-
TDOA-ProvideAssistanceData-r16


                                                    OPTIONAL      --   Need
ON
        ]]
}

-- ASN1STOP
```

| ProvideAssistanceData field descriptions |
| --- |
| commonIEsProvideAssistanceData<br>This IE is provided for future extensibility and should not be included in this version of the protocol. |

RequestLocationInformation
The RequestLocationInformation message body in a LPP message is used by the location server to request positioning measurements or a position estimate from the target device.
-- ASN1START


```
RequestLocationInformation ::= SEQUENCE {
```

```
    criticalExtensions          CHOICE {
            c1                                                  CHOICE {
                    requestLocationInformation-r9       RequestLocationInformation-r9-IEs,
                    spare3 NULL, spare2 NULL, spare1 NULL
            },
            criticalExtensionsFuture      SEQUENCE {}
        }
}
```

```
RequestLocationInformation-r9-IEs ::= SEQUENCE {
        commonIEsRequestLocationInformation

        CommonIEsRequestLocationInformation        OPTIONAL,        -- Need ON
        a-gnss-RequestLocationInformation     A-GNSS-RequestLocationInformation OPTIONAL,
        -- Need ON
        otdoa-RequestLocationInformation      OTDOA-RequestLocationInformation OPTIONAL,
        -- Need ON
        ecid-RequestLocationInformation                ECID-RequestLocationInformation
        OPTIONAL,        -- Need ON
        epdu-RequestLocationInformation                EPDU-Sequence
                OPTIONAL,        -- Need ON
        ...,
        [[
        sensor-RequestLocationInformation-r13
                                                                        Sensor-
RequestLocationInformation-r13

                                                        OPTIONAL,        --    Need
ON
        tbs-RequestLocationInformation-r13    TBS-RequestLocationInformation-r13 OPTIONAL,
        -- Need ON
        wlan-RequestLocationInformation-r13 WLAN-RequestLocationInformation-r13
        OPTIONAL,        -- Need ON
        bt-RequestLocationInformation-r13     BT-RequestLocationInformation-r13   OPTIONAL
        -- Need ON
        ]],
        [[         nr-ECID-RequestLocationInformation-r16
                                                                        NR-
ECID-RequestLocationInformation-r16

                                                        OPTIONAL,        --    Need
ON
                nr-Multi-RTT-RequestLocationInformation-r16
                                                                        NR-
Multi-RTT-RequestLocationInformation-r16

                                                        OPTIONAL,        --    Need
ON
                nr-DL-AoD-RequestLocationInformation-r16
                                                                        NR-DL-
AoD-RequestLocationInformation-r16

                                                        OPTIONAL,        --    Need
ON
                nr-DL-TDOA-RequestLocationInformation-r16

                                                                        NR-DL-


TDOA-RequestLocationInformation-r16
```

```
                        OPTIONAL        -- Need ON
        ]]
```

```
}

-- ASN1STOP
```

| RequestLocationInformation field descriptions |
|---|
| commonIEsRequestLocationInformation |
| This field specifies the location information type requested by the location server and optionally other configuration information associated with the requested location information. This field should always be included in this version of the protocol. |

ProvideLocationInformation
The ProvideLocationInformation message body in a LPP message is used by the target device to provide positioning measurements or position estimates to the location server.
-- ASN1START

```
ProvideLocationInformation ::= SEQUENCE {
        criticalExtensions              CHOICE {
                c1                              CHOICE {
                        provideLocationInformation-r9          ProvideLocationInformation-r9-IEs,
                        spare3 NULL, spare2 NULL, spare1 NULL
                },
                criticalExtensionsFuture        SEQUENCE {}
        }
}

ProvideLocationInformation-r9-IEs ::= SEQUENCE {
        commonIEsProvideLocationInformation

        CommonIEsProvideLocationInformation        OPTIONAL,
        a-gnss-ProvideLocationInformation       A-GNSS-ProvideLocationInformation  OPTIONAL,
        otdoa-ProvideLocationInformation        OTDOA-ProvideLocationInformation  OPTIONAL,
        ecid-ProvideLocationInformation                 ECID-ProvideLocationInformation
OPTIONAL,
        epdu-ProvideLocationInformation                 EPDU-Sequence
                OPTIONAL,
        ...,
        [[
        sensor-ProvideLocationInformation-r13
                                                                        Sensor-
ProvideLocationInformation-r13

                                                                        OPTIONAL,
        tbs-ProvideLocationInformation-r13    TBS-ProvideLocationInformation-r13  OPTIONAL,
        wlan-ProvideLocationInformation-r13  WLAN-ProvideLocationInformation-r13
OPTIONAL,
        bt-ProvideLocationInformation-r13     BT-ProvideLocationInformation-r13   OPTIONAL
        ]],
        [[      nr-ECID-ProvideLocationInformation-r16
                                                                        NR-ECID-
ProvideLocationInformation-r16                  OPTIONAL,

                nr-Multi-RTT-ProvideLocationInformation-r16
```

| NR-Multi-RTT- |
|---|

```
ProvideLocationInformation-r16 OPTIONAL,
                nr-DL-AoD-ProvideLocationInformation-r16
                                                                NR-DL-AoD-
ProvideLocationInformation-r16        OPTIONAL,
                nr-DL-TDOA-ProvideLocationInformation-r16
                                                                NR-DL-TDOA-
ProvideLocationInformation-r16        OPTIONAL
        ]]
}


-- ASN1STOP



-- ASN1START

OTDOA-SignalMeasurementInformation ::= SEQUENCE {
        systemFrameNumber             BIT STRING (SIZE (10)),
        physCellIdRef                 INTEGER (0..503),
        cellGlobalIdRef               ECGI
        OPTIONAL,
        earfcnRef                     ARFCN-ValueEUTRA            OPTIONAL,
        -- Cond NotSameAsRef0
        referenceQuality      OTDOA-MeasQuality           OPTIONAL,
        neighbourMeasurementList  NeighbourMeasurementList,
        ...,
        [[ earfcnRef-v9a0         ARFCN-ValueEUTRA-v9a0 OPTIONAL             --    Cond
NotSameAsRef1
        ]],
        [[ tpIdRef-r14                INTEGER (0..4095)           OPTIONAL,
        -- Cond ProvidedByServer0
                prsIdRef-r14          INTEGER (0..4095)           OPTIONAL,
        -- Cond ProvidedByServer1
                additionalPathsRef-r14
                                                AdditionalPathList-r14
        OPTIONAL,
                nprsIdRef-r14         INTEGER (0..4095)           OPTIONAL,
        -- Cond ProvidedByServer2
                carrierFreqOffsetNB-Ref-r14
                                                CarrierFreqOffsetNB-r14
        OPTIONAL,                 -- Cond NB-IoT
                hyperSFN-r14          BIT STRING (SIZE (10))    OPTIONAL
        -- Cond H-SFN
        ]],
        [[
                motionTimeSource-r15          MotionTimeSource-r15
        OPTIONAL
        ]]
}

NeighbourMeasurementList ::= SEQUENCE (SIZE(1..24)) OF NeighbourMeasurementElement

NeighbourMeasurementElement ::= SEQUENCE {
        physCellIdNeighbour           INTEGER (0..503),
        cellGlobalIdNeighbour    ECGI                                       OPTIONAL,
```

```
        earfcnNeighbour              ARFCN-ValueEUTRA              OPTIONAL,


        -- Cond NotSameAsRef2
```

```
        rstd                                    INTEGER (0..12711),
        rstd-Quality                            OTDOA-MeasQuality,
        ...,
        [[ earfcnNeighbour-v9a0    ARFCN-ValueEUTRA-v9a0 OPTIONAL              --   Cond
NotSameAsRef3
        ]],
        [[ tpIdNeighbour-r14        INTEGER (0..4095)              OPTIONAL,
        -- Cond ProvidedByServer0
                prsIdNeighbour-r14          INTEGER (0..4095)              OPTIONAL,
        -- Cond ProvidedByServer1
                delta-rstd-r14              INTEGER (0..5)                OPTIONAL,
                additionalPathsNeighbour-r14
                                                        AdditionalPathList-r14
OPTIONAL,
                nprsIdNeighbour-r14         INTEGER (0..4095)              OPTIONAL,
        -- Cond ProvidedByServer2
                carrierFreqOffsetNB-Neighbour-r14
                                                        CarrierFreqOffsetNB-r14
OPTIONAL                -- Cond NB-IoT
        ]],
        [[
                delta-SFN-r15                       INTEGER (-8192..8191)    OPTIONAL
        ]]
}

AdditionalPathList-r14 ::= SEQUENCE (SIZE(1..maxPaths-r14)) OF AdditionalPath-r14

maxPaths-r14       INTEGER ::= 2

MotionTimeSource-r15 ::= SEQUENCE {
        timeSource-r15                          ENUMERATED   {servingCell,   referenceCell,
gnss, mixed,

        other, none, ...}
}

-- ASN1STOP

-- ASN1START

ECID-SignalMeasurementInformation ::= SEQUENCE {
        primaryCellMeasuredResults MeasuredResultsElement      OPTIONAL,
        measuredResultsList                     MeasuredResultsList,
        ...
}

MeasuredResultsList ::= SEQUENCE (SIZE(1..32)) OF MeasuredResultsElement

MeasuredResultsElement ::= SEQUENCE {
```

```
        physCellId                              INTEGER (0..503),
        cellGlobalId                            CellGlobalIdEUTRA-AndUTRA
    OPTIONAL,
        arfcnEUTRA                              ARFCN-ValueEUTRA,

        systemFrameNumber                       BIT STRING (SIZE (10))
```

```
    OPTIONAL,
        rsrp-Result                             INTEGER (0..97)
            OPTIONAL,
        rsrq-Result                             INTEGER (0..34)
            OPTIONAL,
        ue-RxTxTimeDiff                         INTEGER (0..4095)
    OPTIONAL,

        ...,
        [[      arfcnEUTRA-v9a0                 ARFCN-ValueEUTRA-v9a0
    OPTIONAL            -- Cond EARFCN-max
        ]],
        [[      nrsrp-Result-r14        INTEGER (0..113)
    OPTIONAL,
            nrsrq-Result-r14            INTEGER (0..74)
    OPTIONAL,
            carrierFreqOffsetNB-r14     CarrierFreqOffsetNB-r14
    OPTIONAL,                -- Cond NB-IoT
            hyperSFN-r14                        BIT STRING (SIZE (10))
    OPTIONAL
        ]],
        [[
            rsrp-Result-v1470           INTEGER (-17..-1)
    OPTIONAL,
            rsrq-Result-v1470           INTEGER (-30..46)
    OPTIONAL
        ]]
}

-- ASN1STOP

-- ASN1START

NR-DL-TDOA-SignalMeasurementInformation-r16 ::= SEQUENCE {
        dl-PRS-ReferenceInfo-r16            DL-PRS-IdInfo-r16,
        nr-DL-TDOA-MeasList-r16  NR-DL-TDOA-MeasList-r16,
        ...
}

NR-DL-TDOA-MeasList-r16 ::= SEQUENCE (SIZE(1.. nrMaxTRPs)) OF NR-DL-TDOA-MeasElement-r16

NR-DL-TDOA-MeasElement-r16 ::= SEQUENCE {
        trp-ID-r16                              TRP-ID-r16
        OPTIONAL,
        nr-DL-PRS-ResourceId-r16        NR-DL-PRS-ResourceId-r16  OPTIONAL,
        nr-DL-PRS-ResourceSetId-r16             NR-DL-PRS-ResourceSetId-r16 OPTIONAL,
        nr-TimeStamp-r16                        NR-TimeStamp-r16,
        nr-RSTD-r16                             INTEGER (0..ffs), -- FFS on
the value range
```

```
        nr-AdditionalPathList-r16          NR-AdditionalPathList-r16          OPTIONAL,
        nr-TimingMeasQuality-r16                     NR-TimingMeasQuality-r16,

        nr-PRS-RSRP-Result-r16                       INTEGER (FFS)


OPTIONAL,
```

```
-- FFS, value range to be decided in RAN4.
        nr-DL-TDOA-AdditionalMeasurements-r16                      NR-DL-TDOA-
AdditionalMeasurements-r16,
        ...
}
NR-DL-TDOA-AdditionalMeasurements-r16   ::=   SEQUENCE   (SIZE   (1..3))   OF   NR-DL-TDOA-
AdditionalMeasurementElement-r16

NR-AdditionalPathList-r16 ::= SEQUENCE (SIZE(1..2)) OF NR-AdditionalPath-r16

NR-DL-TDOA-AdditionalMeasurementElement-r16 ::= SEQUENCE {
        nr-DL-PRS-ResourceId-r16              NR-DL-PRS-ResourceId-r16  OPTIONAL,
        nr-DL-PRS-ResourceSetId-r16           NR-DL-PRS-ResourceSetId-r16 OPTIONAL,
        nr-TimeStamp-r16                      NR-TimeStamp-r16,
        nr-RSTD-ResultDiff-r16               INTEGER (0..ffs), -- FFS on the value range to be
decided in RAN4
        dl-PRS-RSRP-ResultDiff-r16    INTEGER (FFS)           OPTIONAL, -- FFS  on  the
value range       to be decided in RAN4
        nr-AdditionalPathList-r16            NR-AdditionalPathList-r16          OPTIONAL,
...
}

nrMaxTRPs                 INTEGER ::= 256        -- Max TRPs per UE

-- ASN1STOP

-- ASN1START

NR-DL-AoD-SignalMeasurementInformation-r16 ::= SEQUENCE {
        nr-DL-AoD-MeasList-r16               NR-DL-AoD-MeasList-r16,
        ...
}
NR-DL-AoD-MeasList-r16 ::= SEQUENCE (SIZE(1..nrMaxTRPs)) OF NR-DL-AoD-MeasElement-r16

NR-DL-AoD-MeasElement-r16 ::= SEQUENCE {
        trp-ID-r16                                   TRP-ID-r16
                OPTIONAL,
        nr-DL-PRS-ResourceId-r16            NR-DL-PRS-ResourceId-r16  OPTIONAL,
        nr-DL-PRS-ResourceSetId-r16                  NR-DL-PRS-ResourceSetId-r16
OPTIONAL,
        nr-TimeStamp-r16                            NR-TimeStamp-r16,
        nr-PRS-RSRP-Result-r16                      INTEGER (FFS)
        OPTIONAL, -- Need RAN4 inputs on value range
        nr-DL-PRS-RxBeamIndex-r16                  INTEGER (1..8),
        nr-TimingMeasQuality-r16                   NR-TimingMeasQuality-r16,
        nr-DL-Aod-AdditionalMeasurements-r16       NR-DL-AoD-AdditionalMeasurements-
r16,
```

```
                  ...
    }


NR-DL-AoD-AdditionalMeasurements-r16 ::= SEQUENCE (SIZE (1..7)) OF NR-DL-AoD-
```

```
AdditionalMeasurementElement-r16

NR-DL-AoD-MeasurementElement-r16 ::= SEQUENCE {
        nr-DL-PRS-ResourceId-r16                    NR-DL-PRS-ResourceId-r16  OPTIONAL,
        nr-DL-PRS-ResourceSetId-r16                 NR-DL-PRS-ResourceSetId-r16
OPTIONAL,
        nr-TimeStamp-r16                            NR-TimeStamp-r16,
        nr-PRS-RSRP-ResultDiff-r16                  INTEGER (FFS)
        OPTIONAL, -- Need RAN4 inputs on value range
        nr-DL-PRS-RxBeamIndex-r16                   INTEGER (1..8),
        ...
}

nrMaxTRPs               INTEGER ::= 256        -- Max TRPs

-- ASN1STOP


–         NR-TimeStamp
The IE NR-TimeStamp defines the UE measurement associated time stamp.
-- ASN1START


NR-TimeStamp-r16 ::= SEQUENCE {
        dl-PRS-ID-r16                       INTEGER (0..255),
        nr-PhysCellID-r16                   NR-PhysCellID-r16
        OPTIONAL,        -- Need ON
        nr-CellGlobalID-r16                 NCGI-r15
        OPTIONAL,        -- Need ON
        nr-ARFCN-r16                        ARFCN-ValueNR-r15
        OPTIONAL,        -- Cond NotSameAsRefServ
        nr-SFN-r16                              INTEGER (0..1023),
        nr-Slot-r16                         CHOICE {
                scs15-r16                           INTEGER (0..9),
                scs30-r16                           INTEGER (0..19),
                scs60-r16                           INTEGER (0..39),
                scs120-r16                          INTEGER (0..79)
        },
        ...
}

-- ASN1STOP
```

| Conditional presence | Explanation |
|---|---|
| NotSameAsRefServ0 | The field is mandatory present if the SFN is not from the reference TRP; otherwise it is not present. |

Positioning Measurement Method

The positioning measurement methods supported by NG-RAN may include GNSS, OTDOA, E-CID (enhanced cell ID), Multi RTT (round trip time)/Multi-cell RTT, barometric pressure sensor positioning, WLAN positioning, Bluetooth positioning, and TBS (terrestrial beacon system), UTDOA (Uplink Time Difference of Arrival), etc. Among the positioning measurement methods, any one positioning measurement method may be used to measure the location of the UE, but two or more positioning measurement methods may be used to measure the location of the UE.

In the positioning measurement method described below, definitions of some terms may be based on Table 12 below.

【Table 12】

| 5.1.13 Reference signal time difference (RSTD) for E-UTRA | |
|---|---|
| Definition | The relative timing difference between the E-UTRA neighbour cell j and the E-UTRA reference cell i, defined as TSubframeRxj − TSubframeRxi, where: TSubframeRxj is the time when the UE receives the start of one subframe from E-UTRA cell j TSubframeRxi is the time when the UE receives the corresponding start of one subframe from E-UTRA cell i that is closest in time to the subframe received from E-UTRA cell j. The reference point for the observed subframe time difference shall be the antenna connector of the UE. |
| Applicable for | RRC_CONNECTED inter-RAT |

| 5.1.28 DL PRS reference signal received power (DL PRS-RSRP) | |
|---|---|
| Definition | DL PRS reference signal received power (DL PRS-RSRP), is defined as the linear average over the power contributions (in [W]) of the resource elements that carry DL PRS reference signals configured for RSRP measurements within the considered measurement frequency bandwidth.

For frequency range 1, the reference point for the DL PRS-RSRP shall be the antenna connector of the UE. For frequency range 2, DL PRS-RSRP shall be measured based on the combined signal from antenna elements corresponding to a given receiver branch. For frequency range 1 and 2, if receiver diversity is in use by the UE, the reported DL PRS-RSRP value shall not be lower than the corresponding DL PRS-RSRP of any of the individual receiver branches. |
| Applicable for | RRC_CONNECTED intra-frequency, RRC_CONNECTED inter-frequency |

| 5.1.29 DL relative signal time difference (DL RSTD) |
|---|

| Definition | DL relative timing difference (DL RSTD) between the positioning node j and the reference positioning node i, is defined as TSubframeRxj − TSubframeRxi,<br><br>Where:<br>TSubframeRxj is the time when the UE receives the start of one subframe from positioning node j.<br>TSubframeRxi is the time when the UE receives the corresponding start of one subframe from positioning node i that is closest in time to the subframe received from positioning node j.<br><br>Multiple DL PRS resources can be used to determine the start of one subframe from a positioning node.<br><br>For frequency range 1, the reference point for the DL RSTD shall be the antenna connector of the UE. For frequency range 2, the reference point for the DL RSTD shall be the antenna of the UE. |
|---|---|
| Applicable for | RRC_CONNECTED intra-frequency<br>RRC_CONNECTED inter-frequency |

### 5.1.29    DL reference signal time difference (DL RSTD)

| Definition | DL reference signal time difference (DL RSTD) is the DL relative timing difference between the positioning node j and the reference positioning node i, defined as TSubframeRxj − TSubframeRxi,<br><br>Where:<br>TSubframeRxj is the time when the UE receives the start of one subframe from positioning node j.<br>TSubframeRxi is the time when the UE receives the corresponding start of one subframe from positioning node i that is closest in time to the subframe received from positioning node j.<br><br>Multiple DL PRS resources can be used to determine the start of one subframe from a positioning node.<br><br>For frequency range 1, the reference point for the DL RSTD shall be the antenna connector of the UE. For frequency range 2, the reference point for the DL RSTD shall be the antenna of the UE. |
|---|---|
| Applicable for | RRC_CONNECTED intra-frequency<br>RRC_CONNECTED inter-frequency |

### 5.1.30    UE Rx − Tx time difference

| Definition | The UE Rx − Tx time difference is defined as TUE-RX − TUE-TX <br><br> Where: <br> TUE-RX is the UE received timing of downlink subframe #i from a positioning node, defined by the first detected path in time. <br> TUE-TX is the UE transmit timing of uplink subframe #j that is closest in time to the subframe #i received from the positioning node. <br><br> Multiple DL PRS resources can be used to determine the start of one subframe of the first arrival path of the positioning node. <br><br> For frequency range 1, the reference point for TUE-RX measurement shall be the Rx antenna connector of the UE and the reference point for TUE-TX measurement shall be the Tx antenna connector of the UE. For frequency range 2, the reference point for TUE-RX measurement shall be the Rx antenna of the UE and the reference point for TUE-TX measurement shall be the Tx antenna of the UE. |
|---|---|
| Applicable for | RRC_CONNECTED intra-frequency <br> RRC_CONNECTED inter-frequency |

#### 5.2.2 UL Relative Time of Arrival (TUL-RTOA)

| Definition | [The UL Relative Time of Arrival (TUL-RTOA) is the beginning of subframe i containing SRS received in positioning node j, relative to the configurable reference time.] <br><br> Multiple SRS resources for positioning can be used to determine the beginning of one subframe containing SRS received at a positioning node. <br><br> The reference point for TUL-RTOA shall be: <br> -      for type 1-C base station TS 38.104 [9]: the Rx antenna connector, <br> -      for type 1-O or 2-O base station TS 38.104 [9]: the Rx antenna, <br> -      for type 1-H base station TS 38.104 [9]: the Rx Transceiver Array Boundary connector. |
|---|---|

#### 5.2.3 gNB Rx − Tx time difference

| Definition | The gNB Rx − Tx time difference is defined as TgNB-RX − TgNB-TX <br><br> Where: <br> TgNB-RX is the positioning node received timing of uplink subframe #i containing SRS associated with UE, defined by the first detected path in time. <br> TgNB-TX is the positioning node transmit timing of downlink subframe #j that is closest in time to the subframe #i received from the UE. <br><br> Multiple SRS resources for positioning can be used to determine the start of one subframe containing SRS. <br><br> The reference point for TgNB-RX shall be: <br> -      for type 1-C base station TS 38.104 [9]: the Rx antenna connector, <br> -      for type 1-O or 2-O base station TS 38.104 [9]: the Rx antenna, <br> -      for type 1-H base station TS 38.104 [9]: the Rx Transceiver Array Boundary connector. <br> The reference point for TgNB-TX shall be: <br> -      for type 1-C base station TS 38.104 [9]: the Tx antenna connector, <br> -      for type 1-O or 2-O base station TS 38.104 [9]: the Tx antenna, <br> -      for type 1-H base station TS 38.104 [9]: the Tx Transceiver Array Boundary connector. |
|---|---|

| 5.2.4 | UL Angle of Arrival (UL AoA) |
|---|---|
| Definition | UL Angle of Arrival (UL AoA) is defined as the estimated azimuth angle and vertical angle of a UE with respect to a reference direction, wherein the reference direction is defined: <br><br> - In the global coordinate system (GCS), wherein estimated azimuth angle is measured relative to geographical North and is positive in a counter-clockwise direction and estimated vertical angle is measured relative to zenith and positive to horizontal direction <br> - In the local coordinate system (LCS), wherein estimated azimuth angle is measured relative to x-axis of LCS and positive in a counter-clockwise direction and estimated vertical angle is measured relatize to z-axis of LCS and positive to x-y plane direction. The bearing, downtilt and slant angles of LCS are defined according to TS 38.901 [14]. <br> The UL AoA is determined at the gNB antenna for an UL channel corresponding to this UE. |
| 5.2.5 | UL SRS reference signal received power (UL SRS-RSRP) |
| Definition | UL SRS reference signal received power (UL SRS-RSRP) is defined as linear average of the power contributions (in [W]) of the resource elements carrying sounding reference signals (SRS). UL SRS-RSRP shall be measured over the configured resource elements within the considered measurement frequency bandwidth in the configured measurement time occasions. <br><br> For frequency range 1, the reference point for the UL SRS-RSRP shall be the antenna connector of the gNB. For frequency range 2, UL SRS-RSRP shall be measured based on the combined signal from antenna elements corresponding to a given receiver branch. For frequency range 1 and 2, if receiver diversity is in use by the gNB, the reported UL SRS-RSRP value shall not be lower than the corresponding UL SRS-RSRP of any of the individual receiver branches. |

OTDOA (Observed Time Difference Of Arrival)

FIG. 12 is a diagram illustrating an example of an OTDOA positioning measurement method.

In the OTDOA positioning measurement method uses the measurement timing of downlink signals received by the UE from multiple TPs including an eNB, an ng-eNB, and a PRS-only TP. The UE measures the timing of the received downlink signals by using the location assistance data received from the location server. In addition, the location of the UE may be determined based on these measurement results and the geographic coordinates of the contiguous TPs.

A UE connected to the gNB may request a measurement gap for OTDOA measurement from the TP. If the UE does not recognize the SFN for at least one TP in the OTDOA assistance data, the UE may use the autonomous gap to obtain the SFN of the OTDOA reference cell before requesting the measurement gap for performing Reference Signal Time Difference (RSTD) measurement.

Here, the RSTD may be defined based on the smallest relative time difference between the boundaries of two subframes respectively received from the reference cell and the measurement cell. That is, it may be calculated based on the relative time difference between the start times of the subframes of the reference cell closest to the start time of the subframe received from the measurement cell. Meanwhile, the reference cell may be selected by the UE.

For accurate OTDOA measurement, it is necessary to measure the time of arrival (TOA) of a signal received from three or more geographically dispersed TPs or base stations. For example, the TOA for each of TP 1 , TP 2 and TP 3 may be measured, the RSTD for TP 1-TP 2, the RSTD for TP 2-TP 3, and the RSTD for TP 3-TP 1 may be calculated based on the three TOAs, a geometric hyperbola may be determined based on this, and a point where these hyperbola intersects may be estimated as the location of the UE. In this case, since accuracy and/or uncertainty for each TOA measurement may occur, the estimated location of the UE may be known as a specific range depending on the measurement uncertainty.

For example, RSTDs for two TPs may be calculated based on Equation 3 below.

【Equation 3】

$$RSTD_{i,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

Hhere, c may be the speed of light, {xt, yt} may be the (unknown) coordinates of the target UE, {xi, yi} may be the coordinates of the (known) TP, and {25, y1} may be the coordinates of the reference TP (or other TP). Here, (Ti-T1) is a transmission time offset between two TPs, which may be referred to as "Real Time Differences" (RTDs), and ni and n1 may represent values related to UE TOA measurement errors.

E-CID (Enhanced Cell ID)

In the cell ID (CID) positioning measurement method, the location of the UE may be measured through geographic information of the serving ng-eNB, the serving gNB and/or the serving cell of the UE. For example, geographic information of the serving ng-eNB, the serving gNB, and/or the serving cell may be obtained through paging, registration, or the like.

Meanwhile, the E-CID positioning measurement method may use additional UE measurement and/or NG-RAN radio resources and the like for improving the UE location estimate in addition to the CID positioning measurement method. In the E-CID positioning measurement method, some of the same measurement methods as those of the measurement control system of the RRC protocol may be used, but in general, additional measurement is not performed only for the location measurement of the UE. In other words, a separate measurement configuration or measurement control message may not be provided to measure the location of the UE, and the UE also does not expect that an additional measurement operation only for location measurement will be requested, and the UE may report a measurement value obtained through generally measurable measurement methods.

For example, the serving gNB may implement the E-CID positioning measurement method using the E-UTRA measurement provided from the UE.

An example of a measurement element that can be used for E-CID positioning may be as follows.

- UE measurement: E-UTRA RSRP (Reference Signal Received Power), E-UTRA RSRQ (Reference Signal Received Quality), UE E-UTRA reception-transmission time difference (Rx-Tx Time difference), GERAN / WLAN RSSI ( Reference Signal Strength Indication), UTRAN CPICH (Common Pilot Channel) RSCP (Received Signal Code Power), UTRAN CPICH Ec/Io
- E-UTRAN measurement: ng-eNB reception-transmission time difference (Rx-Tx Time difference), timing advance (Timing Advance; TADV), Angle of Arrival (AoA)

Here, TADV may be divided into Type 1 and Type 2 as follows.

TADV Type 1 = (ng-eNB reception-transmission time difference) + (UE E-UTRA reception-transmission time difference)

TADV Type 2 = ng-eNB reception-transmission time difference

On the other hand, AoA may be used to measure the direction of the UE. AoA may be defined as an estimated angle for the location of the UE in a counterclockwise direction from the base station/TP. In this case, the geographic reference direction may be north. The base station/TP may use an uplink signal such as a sounding reference signal (SRS) and/or a demodulation reference signal (DMRS) for AoA measurement. In addition, the larger the antenna array arrangement, the higher the AoA measurement accuracy, when the antenna arrays are arranged at the same interval, signals received from contiguous antenna elements may have a constant phase-rotate.

UTDOA (Uplink Time Difference of Arrival)

UTDOA is a method of determining the location of the UE by estimating the arrival time of the SRS. When calculating the estimated SRS arrival time, the location of the UE may be estimated through the difference in arrival time with another cell (or base station/TP) by using the serving cell as a reference cell. To implement UTDOA, the E-SMLC may instruct the serving cell of the target UE to instruct the target UE to transmit SRS. In addition, the E-SMLC may provide configuration such as whether the SRS is periodic/aperiodic, bandwidth, and frequency/group/sequence hopping, etc.

Multi RTT (Multi-cell RTT)

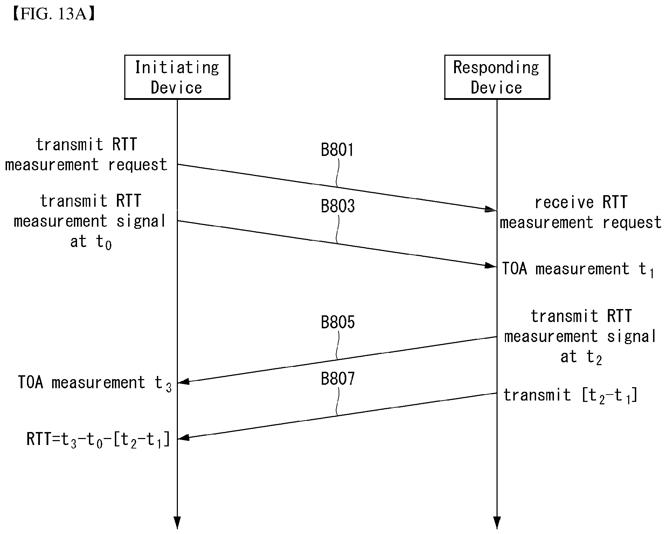

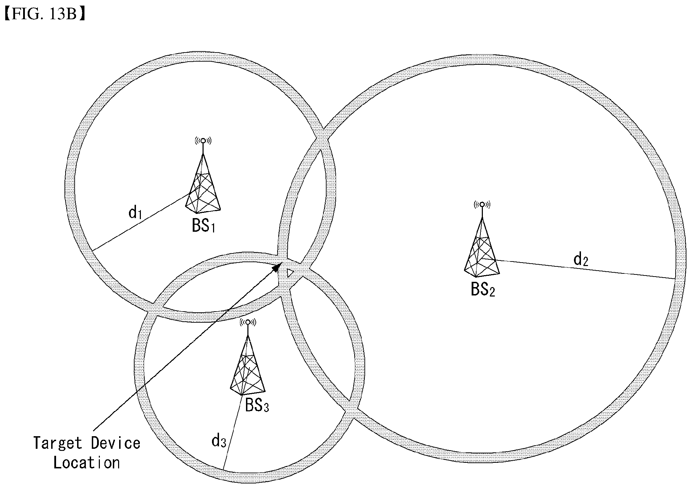

Unlike OTDOA, which requires fine synchronization (e.g. nano-second level) between TPs in the network, RTT is based on TOA measurement like the OTDOA, but requires only coarse TRP (e.g. base station) timing synchronization. Hereinafter, it will be described in detail with reference to FIGS. 13A and 13B.

FIGS. 13A and 13B are diagrams illustrating an example of a Multi RTT positioning measurement method.

Referring to FIG. 13A, an RTT process, in which TOA measurement is performed in an initiating device and a responding device, and the responding device provides the TOA measurement to the initiating device for RTT measurement (calculation), is exemplified. For example, the initiating device may be a TRP and/or a UE, and the responding device may be the UE and/or the TRP.

In operation B801 based on an exemplary embodiment, the initiating device may transmit an RTT measurement request, and the responding device may receive it.

In operation B803 based on an exemplary embodiment, the initiating device may transmit an RTT measurement signal at t0, and the responding device may acquire a TOA measurement t1.

In operation B805 based on an exemplary embodiment, the responding device may transmit the RTT measurement signal at t2, and the initiating device may acquire a TOA measurement t3.

In operation B807 based on an exemplary embodiment, the responding device may transmit information on [t2-t1], and the initiating device may receive the corresponding information and calculate the RTT based on Equation 4 below. The corresponding information may be transmitted/received based on a separate signal, or may be transmitted/received by being included in the RTT measurement signal of B805.

【Equation 4】

$$RTT = t_3 - t_0 - [t_2 - t_1]$$

Referring to FIG. 13B, the corresponding RTT may correspond to double-range measurement between two devices. Positioning estimation may be performed from the corresponding information, and a multilateration technique may be used. Based on the measured RTT, d1, d2, and d3 may be determined, and the target device location may be determined by the intersection of the circumference with each BS1, BS2, BS3 (or TRP) as a center and each d1, d2, and d3 as a radius.

**Sounding Procedure for positioning purpose**

The sounding procedure for positioning the UE in the NR system to which various embodiments of the present disclosure are applicable can be based on Table 13 below.

[Table 13]

| |
|---|
| 6.2.1.4 UE sounding procedure for positioning purposes<br><br>When the SRS is configured by the higher layer parameter [SRS-for-positioning] and if the higher layer parameter *spatialRelationInfo* is configured, it contains the ID of the configuration fields of a reference RS according to Clause 6.3.2 of [TS 38.331]. The reference RS can be an SRS configured by the higher layer parameter *SRS-Config* or [SRS-for-positioning], CSI-RS, SS/PBCH block, or a DL PRS configured on a serving cell or a SS/PBCH block or a DL PRS configured on a non-serving cell.<br><br>The UE is not expected to transmit multiple SRS resources with different spatial relations in the same |
| |
| OFDM symbol.<br><br>If the UE is not configured with the higher layer parameter *spatialRelationInfo* the UE may use a fixed spatial domain transmission filter for transmissions of the SRS configured by the higher layer parameter [SRS-for-positioning] across multiple SRS resources or it may use a different spatial domain transmission filter across multiple SRS resources.<br><br>The UE is only expected to transmit an SRS configured the by the higher layer parameter [SRS-for-positioning] within the active UL BWP of the UE.<br><br>When the configuration of SRS is done by the higher layer parameter [SRS-for-positioning], the UE can only be provided with a single RS source in *spatialRelationInfo* per SRS resource.<br><br>If an SRS configured by the higher parameter [SRS-for-positioning] collides with a scheduled PUSCH, the SRS is dropped in the symbols where the collision occurs. |

**Triggering Sounding Procedure for positioning purpose**

For example, the sounding procedure may be triggered by the SRS request field included in DCI format 0_1. More specific DCI format configuration can be based on Table 14 below.

【Table 14】

---

7.3.1.1.2 Format 0_1

DCI format 0_1 is used for the scheduling of one or multiple PUSCH in one cell, or indicating CG downlink

feedback informatin (CG-DFI) to a UE.

---

If DCI format 0_1 is used for the scheduling of one or multiple PUSCH in one cell or activating type 2 CG

transmission, all the remaining fileds are set as follows:

- SRS request – 2 bits as defined by Table 7.3.1.1.2-24 for UEs not configured with

supplementaryUplink in ServingCellConfig in the cell; 3 bits for UEs configured with

supplementaryUplink in ServingCellConfig in the cell where the first bit is the non-SUL/SUL

indicator as defined in Table 7.3.1.1.1-1 [TS 38.212] and the second and third bits are defined by

Table 7.3.1.1.2-24. This bit field may also indicate the associated CSI-RS according to Clause

6.1.1.2 of [6, TS 38.214].

**Table 7.3.1.1.2-24: SRS request**

| Value | Triggered aperiodic SRS resource | Triggered aperiodic SRS resource set(s) for DCI |
|---|---|---|

| of SRS request field | set(s) for DCI format 0_1, 0_2, 1_1, 1_2, and 2_3 configured with higher layer parameter *srs-TPC-PDCCH-Group* set to 'typeB' | format 2_3 configured with higher layer parameter *srs-TPC-PDCCH-Group* set to 'typeA' |
|---|---|---|
| 00 | No aperiodic SRS resource set triggered | No aperiodic SRS resource set triggered |
| 01 | SRS resource set(s) configured with higher layer parameter *aperiodicSRS-ResourceTrigger* set to 1 or an entry in *aperiodicSRS-ResourceTriggerList* set to 1 | SRS resource set(s) configured with higher layer parameter *usage* in *SRS-ResourceSet* set to 'antennaSwitching' and *resourceType* in *SRS-ResourceSet* set to 'aperiodic' for a 1$^{st}$ set of serving cells configured by higher |

| | | layers, or<br><br>SRS resource set(s) configured by *[SRS-ResourceSetForPositioning]* and *resourceType* in *[SRS-ResourceSetForPositioning]* set to 'aperiodic' for a 1$^{st}$ set of serving cells configured by higher layers |
|---|---|---|
| 10 | SRS resource set(s) configured with higher layer parameter *aperiodicSRS-ResourceTrigger* set to 2 or an entry in *aperiodicSRS-ResourceTriggerList* set to 2 | SRS resource set(s) configured with higher layer parameter *usage* in *SRS-ResourceSet* set to 'antennaSwitching' and *resourceType* in *SRS-ResourceSet* set to 'aperiodic' for a 2$^{nd}$ set of serving cells configured by higher layers, or<br><br>SRS resource set(s) configured by *[SRS-ResourceSetForPositioning]* and *resourceType* in *[SRS-ResourceSetForPositioning]* set to 'aperiodic' for a 2$^{nd}$ set of serving cells configured by higher layers |
| 11 | SRS resource set(s) configured with higher layer parameter | SRS resource set(s) configured with higher layer parameter *usage* in *SRS-ResourceSet* |

| | | set to 'antennaSwitching' and *resourceType* in *SRS-ResourceSet* set to 'aperiodic' for a 3$^{rd}$ set of serving cells configured by higher layers, or<br><br>SRS resource set(s) configured by *[SRS-ResourceSetForPositioning]* and *resourceType* in *[SRS-ResourceSetForPositioning]* set to 'aperiodic' for a 3$^{rd}$ set of serving cells configured by higher layers |
|---|---|---|
| | *aperiodicSRS-ResourceTrigger* set to 3 or an entry in *aperiodicSRS-ResourceTriggerList* set to 3 | |

**Mapping SRS of Sounding Procedure for positioning purpose**

In the NR system to which various embodiments of the present disclosure are applicable, PRS mapping may be based on Table 15 below.

【Table 15】

### 6.4.1.4   Sounding reference signal

### 6.4.1.4.1   SRS resource

An SRS resource is configured by the *SRS-Resource* IE or the [*SRS-for-positioning*] IE

### 6.4.1.4.2   Sequence generation

The sounding reference signal sequence for an SRS resource shall be generated according to

$$r^{(p_i)}(n, l') = r_{u,v}^{(\alpha_i, \delta)}(n)$$

$$0 \leq n \leq M_{sc,b}^{SRS} - 1$$

$$l' \in \left\{0, 1, \dots, N_{symb}^{SRS} - 1\right\}$$

where $M_{sc,b}^{SRS}$ is given by clause 6.4.1.4.3, $r_{u,v}^{(\alpha,\delta)}(n)$ is given by clause 5.2.2 with $\delta = \log_2(K_{TC})$ and the

transmission comb number $K_{TC} \in \{2,4,8\}$ is contained in the higher-layer parameter *transmissionComb*. The

cyclic shift $\alpha_i$ for antenna port $p_i$ is given as

$$\alpha_i = 2\pi \frac{n_{SRS}^{cs,i}}{n_{SRS}^{cs,max}}$$

$$n_{SRS}^{cs,i} = \left( n_{SRS}^{cs} + \frac{n_{SRS}^{cs,max}\left(p_i - 1000\right)}{N_{ap}^{SRS}} \right) \mod n_{SRS}^{cs,max} ,$$

where $n_{SRS}^{cs} \in \left\{0, 1, \dots, n_{SRS}^{cs,max} - 1\right\}$ is contained in the higher layer parameter *transmissionComb*. The maximum

number of cyclic shifts $n_{SRS}^{cs,max}$ are given by Table 6.4.1.4.2-1.

The sequence group $u = \left(f_{\text{gh}}\left(n_{\text{s,f}}^{\mu}, l'\right) + n_{\text{ID}}^{\text{SRS}}\right) \bmod 30$ and the sequence number $_{,v}$ in clause 5.2.2 [TS 38.211] depends on the higher-layer parameter *groupOrSequenceHopping* in the *SRS-Config* IE or the [*SRS-for-positioning*] IE. The SRS sequence identity $n_{\text{ID}}^{\text{SRS}}$ is given by the higher layer parameter *sequenceId* in the *SRS-Config* IE, in which case $n_{\text{ID}}^{\text{SRS}} \in \{0, 1, \dots, 1023\}$, or the [*SRS-for-positioning*] IE, in which case $n_{\text{ID}}^{\text{SRS}} \in \{0, 1, \dots, 65535\}$. The quantity $l' \in \left\{0, 1, \dots, N_{\text{symb}}^{\text{SRS}} - 1\right\}$ is the OFDM symbol number within the SRS resource.

**Table 6.4.1.4.2-1: Maximum number of cyclic shifts $n_{\text{SRS}}^{\text{cs,max}}$ as a function of $K_{\text{TC}}$.**

| $K_{\text{TC}}$ | $n_{\text{SRS}}^{\text{cs,max}}$ |
|---|---|
| 2 | 8 |
| 4 | 12 |
| 8 | 6 |

6.4.1.4.3　　　　　Mapping to physical resources

When SRS is transmitted on a given SRS resource, the sequence $r^{(p_i)}(n, l')$ for each OFDM symbol $l$ and for each of the antenna ports of the SRS resource shall be multiplied with the amplitude scaling factor $\beta_{\text{SRS}}$ in order to conform to the transmit power specified in [5, 38.213] and mapped in sequence starting with $r^{(p_i)}(0, l')$ to resource elements $(k, l)$ in a slot for each of the antenna ports $p_i$ according to

$$a_{K_{\text{TC}}k'+k_0^{(p_i)}, l'+l_0}^{(p_i)} = \begin{cases} \dfrac{1}{\sqrt{N_{\text{ap}}}} \beta_{\text{SRS}} r^{(p_i)}(k', l') & k' = 0, 1, \dots, M_{\text{sc},b}^{\text{SRS}} - 1 \quad l' = 0, 1, \dots, N_{\text{symb}}^{\text{SRS}} - 1 \\ 0 & \text{otherwise} \end{cases}$$

The length of the sounding reference signal sequence is given by

$$M_{\mathrm{sc},b}^{\mathrm{SRS}} = m_{\mathrm{SRS},b} N_{\mathrm{sc}}^{\mathrm{RB}} / K_{\mathrm{TC}}$$

where $m_{\mathrm{SRS},b}$ is given by a selected row of Table 6.4.1.4.3-1 [TS 38.211] with $b = B_{\mathrm{SRS}}$ where $B_{\mathrm{SRS}} \in \{0,1,2,3\}$ is given by the field $b$-$SRS$ contained in the higher-layer parameter $freqHopping$ if configured, otherwise $B_{\mathrm{SRS}} = 0$. The row of the table is selected according to the index $C_{\mathrm{SRS}} \in \{0,1,...,63\}$ given by the field $c$-SRS contained in the higher-layer parameter $freqHopping$.

The frequency-domain starting position $k_0^{(p_i)}$ is defined by

$$k_0^{(p_i)} = \bar{k}_0^{(p_i)} + \sum_{b=0}^{B_{\mathrm{SRS}}} K_{\mathrm{TC}} M_{\mathrm{sc},b}^{\mathrm{SRS}} n_b$$

where

$$\bar{k}_0^{(p_i)} = n_{\mathrm{shift}} N_{\mathrm{sc}}^{\mathrm{RB}} + \left( k_{\mathrm{TC}}^{(p_i)} + k_{\mathrm{offset}}^{l'} \right) \bmod K_{\mathrm{TC}}$$

$$k_{\mathrm{TC}}^{(p_i)}$$

$$= \begin{cases} (\bar{k}_{\mathrm{TC}} + K_{\mathrm{TC}}/2) \bmod K_{\mathrm{TC}} & \text{if } n_{\mathrm{SRS}}^{\mathrm{cs}} \in \{n_{\mathrm{SRS}}^{\mathrm{cs,max}}/2, ..., n_{\mathrm{SRS}}^{\mathrm{cs,max}} - 1\} \text{ and } N_{\mathrm{ap}}^{\mathrm{SRS}} = 4 \text{ and } p_i \in \{1001, 1003\} \\ \bar{k}_{\mathrm{TC}} & \text{otherwise} \end{cases}$$

If $N_{\mathrm{BWP}}^{\mathrm{start}} \le n_{\mathrm{shift}}$ the reference point for $k_0^{(p_i)} = 0$ is subcarrier 0 in common resource block 0, otherwise the reference point is the lowest subcarrier of the BWP.

If the SRS is configured by the IE [$SRS$-for-positioning], the quantity $k_{\mathrm{offset}}^{l'}$ is given by Table 6.4.1.4.3-2, otherwise $k_{\mathrm{offset}}^{l'} = 0$.

The frequency domain shift value $n_{\mathrm{shift}}$ adjusts the SRS allocation with respect to the reference point grid

and is contained in the higher-layer parameter *freqDomainShift* in the *SRS-Config* IE or the [*SRS-for-positioning*] IE. The transmission comb offset $\bar{k}_{TC} \in \{0,1,...,K_{TC}-1\}$ is contained in the higher-layer parameter *transmissionComb* in the *SRS-Config* IE or the [*SRS-for-positioning*] IE and $n_b$ is a frequency position index.

**Table 6.4.1.4.3-2: The offset $k_{offset}^{l'}$ for SRS as a function of $K_{TC}$ and $l'$.**

| $K_{TC}$ | $k_{offset}^0, ..., k_{offset}^{N_{symb}^{SRS}-1}$ |
|---|---|

| | $N_{symb}^{SRS} = 1$ | $N_{symb}^{SRS} = 2$ | $N_{symb}^{SRS} = 4$ | $N_{symb}^{SRS} = 8$ | $N_{symb}^{SRS} = 12$ |
|---|---|---|---|---|---|
| 2 | 0 | 0,1 | 0,1,0,1 | - | - |
| 4 | - | 0, 2 | 0, 2, 1, 3 | 0, 2, 1, 3, 0, 2, 1, 3 | 0, 2, 1, 3, 0, 2, 1, 3, 0, 2, 1, 3 |
| 8 | - | - | 0, 4, 2, 6 | 0, 4, 2, 6, 1, 5, 3, 7 | 0, 4, 2, 6, 1, 5, 3, 7, 0, 4, 2, 6 |

6.4.1.4.4        Sounding reference signal slot configuration

For an SRS resource configured as periodic or semi-persistent by the higher-layer parameter *resourceType*, a periodicity $T_{SRS}$ (in slots) and slot offset $T_{offset}$ are configured according to the higher-layer parameter *periodicityAndOffset-p* or *periodicityAndOffset-sp* in the *SRS-Config* IE, or *periodicityAndOffset* in the [*SRS-for-positioning*] IE. Candidate slots in which the configured SRS resource may be used for SRS transmission are the slots satisfying

$$\left( N_{\text{slot}}^{\text{frame},\mu}\, n_{\text{f}} + n_{\text{s,f}}^{\mu} - T_{\text{offset}} \right)\!\bmod\ T_{\text{SRS}}\ = 0$$

SRS is transmitted as described in clause 11.1 of [5, TS 38.213].

**Paging**

In the NR system to which various embodiments of the present disclosure are applicable, paging may be based on Table 16 below.

[Table 16]

(1) General

**Figure 5.3.2.1-1: Paging**

The purpose of this procedure is:

   - to transmit paging information to a UE in RRC_IDLE or RRC_INACTIVE.

The network initiates the paging procedure by transmitting the *Paging* message at the UE's paging occasion as specified in TS 38.304 [20]. The network may address multiple UEs within a *Paging* message by including one *PagingRecord* for each UE.

(2) Reception of the Paging message by the UE

Upon receiving the *Paging* message, the UE shall:

   1 > if in RRC_IDLE, for each of the *PagingRecord,* if any, included in the *Paging* message:

      2> if the *ue-Identity* included in the *PagingRecord* matches the UE identity allocated by upper layers:

         3> forward the *ue-Identity* and *accessType* (if present) to the upper layers;

   1 > if in RRC_INACTIVE, for each of the *PagingRecord,* if any, included in the *Paging* message:

      2> if the *ue-Identity* included in the *PagingRecord* matches the UE's stored *fullI-RNTI*:

         3> if the UE is configured by upper layers with Access Identity 1:

           4> initiate the RRC connection resumption procedure according to 5.3.13 with *resumeCause* set to *mps-PriorityAccess*;

         3> else if the UE is configured by upper layers with Access Identity 2:

(continued)

| | |
|---|---|
| | 4> initiate the RRC connection resumption procedure according to 5.3.13 with *resumeCause* set to *mcs-PriorityAccess*; |
| | 3> else if the UE is configured by upper layers with one or more Access Identities equal to 11-15: |
| | 4> initiate the RRC connection resumption procedure according to 5.3.13 with *resumeCause* set to *highPriorityAccess*; |
| | 3> else: |
| | 4> initiate the RRC connection resumption procedure according to 5.3.13 with *resumeCause* set to *mt-Access*; |
| 2> | else if the *ue-Identity* included in the *PagingRecord* matches the UE identity allocated by upper layers: |
| | 3> forward the *ue-Identity* to upper layers and *accessType* (if present) to the upper layers; |
| | 3> perform the actions upon going to RRC_IDLE as specified in 5.3.11 with release cause 'other'. |
| (3) Discontinuous Reception for paging | |
| | |

(continued)

The UE may use Discontinuous Reception (DRX) in RRC_IDLE and RRC_INACTIVE state in order to reduce power consumption. The UE monitors one paging occasion (PO) per DRX cycle. A PO is a set of PDCCH monitoring occasions and *can consist of multiple time slots (e.g. subframe or OFDM symbol) where* paging DCI can be sent (TS 38.213 [4]). One Paging Frame (PF) is one Radio Frame and may contain one or multiple PO(s) or starting point of a PO.

In multibeam operations, the UE assumes that the same paging message and the same Short Message are repeated in all transmitted beams and thus the selection of the beam(s) for the reception of the paging message and Short Message is up to UE implementation. The paging message is same for both RAN initiated paging and CN i nitiated paging.

The UE initiates RRC Connection Resume procedure upon receiving RAN initiated paging. If the UE receives a CN initiated paging in RRC_INACTIVE state, the UE moves to RRC_IDLE and informs NAS.

The PF and PO for paging are determined by the following formulae:

SFN for the PF is determined by:

$$(SFN + PF\_offset) \bmod T = (T \operatorname{div} N)*(UE\_ID \bmod N)$$

Index (i_s), indicating the index of the PO is determined by:

$$i\_s = \text{floor} (UE\_ID/N) \bmod Ns$$

The PDCCH monitoring occasions for paging are determined according to *pagingSearchSpace* as specified in TS 38.213 [4] and *firstPDCCH-MonitoringOccasionOfPO* if configured as specified in TS 38.331 [3]. Whe n *SearchSpaceId* = 0 is configured for *pagingSearchSpace,* the PDCCH monitoring occasions for paging are same as for RMSI as defined in clause 13 in TS 38.213 [4].

When *SearchSpaceId* = 0 is configured for *pagingSearchSpace,* Ns is either 1 or 2. For Ns = 1, there is only one PO which starts from the first PDCCH monitoring occasion for paging in the PF. For Ns = 2, PO is either in the first half frame (i_s = 0) or the second half frame (i_s = 1) of the PF.

When *SearchSpaceId* other than 0 is configured for *pagingSearchSpace,* the UE monitors the (i_s + 1)$^{th}$ PO. A PO is a set of 'S' consecutive PDCCH monitoring occasions where 'S' is the number of actual transmitted SSBs determined according to *ssb-PositionsInBurst* in *SIB1.* The K$^{th}$ PDCCH monitoring occasion for paging in the PO corresponds to the K$^{th}$ transmitted SSB. The PDCCH monitoring occasions for paging which do not overlap with UL symbols (determined according to *tdd-UL-DL-ConfigurationCommon*) are sequentially numbered from zero starting from the first PDCCH monitoring occasion for paging in the PF. When *firstPDCCH-MonitoringOccasionOfPO* is present, the starting PDCCH monitoring occasion number of (i_s + 1)$^{th}$ PO is the (i_s + 1)$^{th}$ value of the *firstPDCCH-MonitoringOccasionOfPO* parameter; otherwise, it is equal to i_s * S.

NOTE 1 : A PO associated with a PF may start in the PF or after the PF.

NOTE 2: The PDCCH monitoring occasions for a PO can span multiple radio frames. When *SearchSpaceId* other than 0 is configured for *paging-SearchSpace* the PDCCH monitoring occasions for a PO can span multiple periods of the paging search space.

The following parameters are used for the calculation of PF and i_s above:

T: DRX cycle of the UE (T is determined by the shortest of the UE specific DRX value(s), if configured by RRC and/or upper layers, and a default DRX value broadcast in system

information. In RRC_IDLE state, if UE specific DRX is not configured by upper layers, the default value is applied).

N: number of total paging frames in T

Ns: number of paging occasions for a PF

PF_offset: offset used for PF determination

UE_ID: 5G-S-TMSI mod 1024

Parameters *Ns, nAndPagingFrameOffset*, and the length of default DRX Cycle are signaled in *SIB1.* The values of N and PF_offset are derived from the parameter *nAndPagingFrameOffset* as defined in TS 38.331 [3]. The parameter *first-PDCCH-MonitoringOccasionOfPO* is signalled in *SIB1* for paging in initial DL BWP. For paging in a DL BWP other than the initial DL BWP, the parameter *first-PDCCH-MonitoringOccasionOfPO* is signaled in the corresponding BWP configuration.

(continued)

If the UE has no 5G-S-TMSI, for instance when the UE has not yet registered onto the network, the UE shall use as default identity UE_ID = 0 in the PF and i_s formulas above.

5G-S-TMSI is a 48 bit long bit string as defined in TS 23.501 [10]. 5G-S-TMSI shall in the formulae above be interpreted as a binary number where the left most bit represents the most significant bit.

(4) SI change indication and PWS notification

A modification period is used, i.e. updated SI (other than for ETWS and CMAS) is broadcasted in the modification period following the one where SI change indication is transmitted. The modification period boundaries are defined by SFN values for which SFN mod m = 0, where m is the number of radio frames comprising the modification period. The modification period is configured by syst

em information. The UE receives indications about SI modifications and/or PWS notifications using Short Message transmitted with P-RNTI over DCI (see clause 6.5). Repetitions of SI change indication may occur within preceding modification period.

UEs in RRC_IDLE or in RRC_INACTIVE shall monitor for SI change indication in its own paging occasion every DRX cycle. UEs in RRC_CONNECTED shall monitor for SI change indication in any paging occasion at least once per modification period if the UE is provided with common search space on the active BWP to monitor paging, as specified in TS 38.213 [13], clause 13.

ETWS or CMAS capable UEs in RRC_IDLE or in RRC_INACTIVE shall monitor for indications about PWS notification in its own paging occasion every DRX cycle. ETWS or CMAS capable UEs in RRC_CONNECTED shall monitor for indication about PWS notification in any paging occasion at least once every *defaultPagingCycle* if the UE is provided with common search space on the active BWP to monitor paging.

For Short Message reception in a paging occasion, the UE monitors the PDCCH monitoring occasion(s) for paging as specified in TS 38.304 [20] and TS 38.213 [13].

If the UE receives a Short Message, the UE shall:

> 1 > if the UE is ETWS capable or CMAS capable, the *etwsAndCmasIndication* bit of Short Message is set, and the UE is provided with *searchSpaceOtherSystemInformation* on the active BWP or the initial BWP:
>
>> 2> immediately re-acquire the *SIB1*;
>>
>> 2> if the UE is ETWS capable and *si-SchedulingInfo* includes scheduling information for *SIB6*:

>>> 3> acquire *SIB6,* as specified in sub-clause 5.2.2.3.2, immediately;
>>
>> 2> if the UE is ETWS capable and *si-SchedulingInfo* includes scheduling information for *SIB7*:
>>
>>> 3> acquire *SIB7,* as specified in sub-clause 5.2.2.3.2, immediately;
>>
>> 2> if the UE is CMAS capable and *si-SchedulingInfo* includes scheduling information for *SIB8*:

(continued)

|  | 3> acquire *SIB8,* as specified in sub-clause 5.2.2.3.2, immediately; |
| --- | --- |

1 > if the *systemInfoModification* bit of Short Message is set:

           2> apply the SI acquisition procedure as defined in sub-clause 5.2.2.3 from the start of the next modification period.

Hereinafter, various embodiments of the present disclosure will be described in more detail based on the above technical sprit. The contents described above may be applied to various embodiments of the present disclosure described below. For example, operations, functions, terms, etc. that are not defined in various embodiments of the present disclosure described below may be performed and explained based on the contents described above.

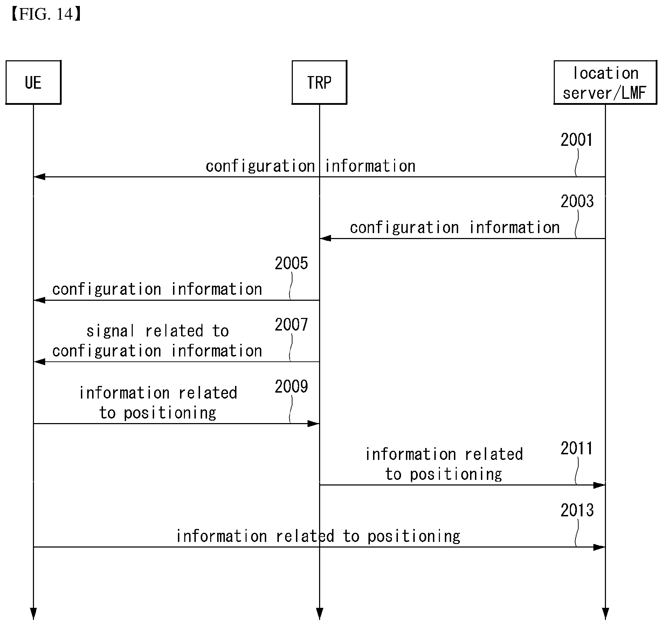

FIG. 14 is a diagram briefly illustrating a method of operating a UE, TRP, location server, and/or LMF according to various embodiments of the present disclosure.

Referring to FIG. 14, in operation 2001 according to an exemplary embodiment, the location server and/or the LMF may transmit configuration information to the UE, and the UE may receive it.

Meanwhile, in operation 2003 according to an exemplary embodiment, the location server and/or the LMF may transmit reference configuration information to a transmission and reception point (TRP), and the TRP may receive it. In operation 2005 according to an exemplary embodiment, the TRP may transmit reference configuration information to the UE, and the UE may receive it. In this case, the operation 2001 according to the exemplary embodiment may be omitted.

Conversely, the operations 2003 and 2005 according to an exemplary embodiment may be omitted. In this case, the operation 2001 according to the exemplary embodiment may be performed.

That is, the operations 2001 according to an exemplary embodiment and the operations 2003 and 2005 according to an exemplary embodiment may be optional.

In operation 2007 according to an exemplary embodiment, the TRP may transmit a signal related to configuration information to the UE, and the UE may receive it. For example, the signal related to the configuration information may be a signal for positioning of the UE.

In operation 2009 according to an exemplary embodiment, the UE may transmit a signal related to positioning to the TRP, and the TRP may receive it. In operation 2011 according to an exemplary embodiment, the TRP may transmit the signal related to positioning to the location server and/or the LMF, and the location server and/or the LMF may receive it.

Meanwhile, in operation 2013 according to an exemplary embodiment, the UE may transmit the signal related to positioning to the location server and/or the LMF, and the location server and/or the LMF may receive it. In this case, operations 2009 and 2011 according to the exemplary embodiment may be omitted.

Conversely, operation 2013 according to an exemplary embodiment may be omitted. In this case, operations 2009 and 2011 according to the exemplary embodiment may be performed.

That is, operations 2009 and 2011 according to an exemplary embodiment and operations 2013 according to an exemplary embodiment may be optional.

In an exemplary embodiment, the signal related to positioning may be obtained based on the configuration information and/or the signal related to the configuration information.

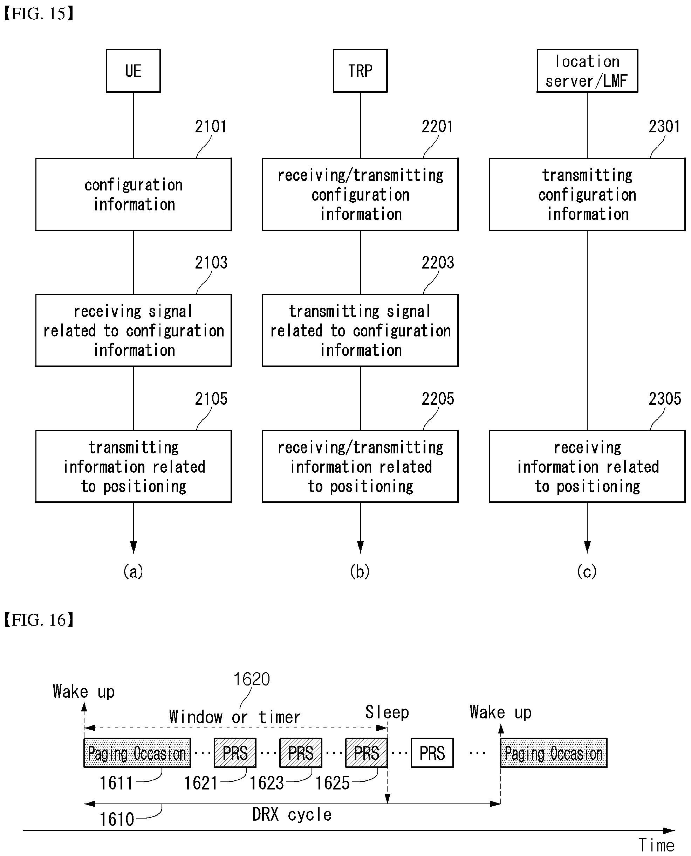

FIG. 15 is a diagram briefly illustrating a method of operating a UE, TRP, location server, and/or LMF according to various embodiments of the present disclosure.

Referring to (a) of FIG. 15, in operation 2101 according to an exemplary embodiment, the UE may receive configuration information.

In operation 2103 according to an exemplary embodiment, the UE may receive a signal related to configuration information.

In operation 2105 according to an exemplary embodiment, the UE may transmit information related to positioning.

Referring to (b) of FIG. 15, in operation 2201 according to an exemplary embodiment, the TRP may receive configuration information from the location server and/or the LMF, and may transmit it to the UE.

In operation 2203 according to an exemplary embodiment, the TRP may transmit the signal related to configuration information.

In operation 2205 according to an exemplary embodiment, the TRP may receive information related to positioning, and may transmit it to the location server and/or the LMF.

Referring to (c) of FIG. 15, in operation 2301 according to an exemplary embodiment, the location server and/or the LMF may transmit the configuration information.

In operation 2305 according to an exemplary embodiment, the location server and/or the LMF may receive the information related to positioning.

For example, the above-described configuration information may be understood as being related to reference configuration (information), reference configuration (information), reference configuration (information), one or more information transmitted/configured by the location server and/or LMF and/or TRP to the UE, etc. in the description of various embodiments of the present disclosure below, and / or it may be understood as the corresponding reference configuration (information), reference configuration (information), reference configuration (information), one or more information transmitted/configured by the location server and/or LMF and/or TRP to the UE, etc.

For example, in the description of various embodiments of the present disclosure below, the signal related to the above-mentioned positioning may be understood as a signal related to one or more of the information reported by the UE and/or it may be understood as a signal including one or more of the information reported by the corresponding UE.

For example, in the description of various embodiments of the present disclosure below, a base station, gNB, cell, etc. may be replaced with a TRP, TP, or any device that plays the same role.

For example, in the description of various embodiments of the present disclosure below, the location server may be replaced by an LMF or any device that plays the same role.

More specific operations, functions, terms, etc. in operations according to each exemplary embodiment may be performed and explained based on various embodiments of the present disclosure, which will be described later.

Hereinafter, various embodiments of the present disclosure will be described in detail. The various embodiments of the present disclosure described below may be combined in whole or in part to form further various embodiments of the present disclosure, unless they are mutually exclusive, and this can be clearly understood by those skilled in the art. Meanwhile, the operations according to each exemplary embodiment are illustrative, and one or more of the above-described operations may be omitted depending on the specific details of each embodiment.

If there are no signals or data transmitted or received for a certain period of time, the UE transitions to sleep mode, or transitions from the RRC connected state to the inactive or idle state. In the case of Rel-16, positioning measurement can be performed in the connected state. If positioning measurement is supported to increase the accuracy of location measurement for various use cases and UEs in RRC inactive/idle state, it is necessary to consider the duration (i.e. DRX cycle) during which the UE transitions to sleep mode, and at this time, rules for operation at the UE and base station/server are needed.

In general, the UE transitions to sleep mode for a certain period of time to prevent indiscriminate power consumption, and then it wakes up before the active time and repeats the monitoring operation expecting PDCCH monitoring (paging reception). The definition of the period and detailed operation of the UE are shown in Table 17 below.

【Table 17】

The UE may use Discontinuous Reception (DRX) in RRC_IDLE and RRC_INACTIVE state in order to reduce power consumption. The UE monitors one paging occasion (PO) per DRX cycle. A PO is a set of PDCCH monitoring occasions and can consist of multiple time slots (e.g. subframe or OFDM symbol) where paging DCI can be sent (TS 38.213 [4]). One Paging Frame (PF) is one Radio Frame and may contain one or multiple PO(s) or starting point of a PO.

In multibeam operations, the UE assumes that the same paging message and the same Short Message are repeated in all transmitted beams and thus the selection of the beam(s) for the reception of the paging message and Short Message is up to UE implementation. The paging message is same for both RAN initiated paging and CN initiated paging.

The UE initiates RRC Connection Resume procedure upon receiving RAN initiated paging. If the UE receives a CN initiated paging in RRC_INACTIVE state, the UE moves to RRC_IDLE and informs NAS.

The PF and PO for paging are determined by the following formulae:

SFN for the PF is determined by:

(SFN + PF_offset) mod T = (T div N)*(UE_ID mod N)

Index (i_s), indicating the index of the PO is determined by:

i_s = floor (UE_ID/N) mod Ns

The PDCCH monitoring occasions for paging are determined according to *pagingSearchSpace* as specified in TS 38.213 [4] and *firstPDCCH-MonitoringOccasionOfPO* and *nrofPDCCH-MonitoringOccasionPerSSB-InPO* if configured as specified in TS 38.331 [3]. When *SearchSpaceId* = 0 is configured for *pagingSearchSpace*, the PDCCH monitoring occasions for paging are same as for RMSI as defined in clause 13 in TS 38.213 [4].

When *SearchSpaceId* = 0 is configured for *pagingSearchSpace*, Ns is either 1 or 2. For Ns = 1, there is only one PO which starts from the first PDCCH monitoring occasion for paging in the PF. For Ns = 2, PO is either in the first half frame (i_s = 0) or the second half frame (i_s = 1) of the PF.

When *SearchSpaceId* other than 0 is configured for *pagingSearchSpace*, the UE monitors the (i_s + 1)th PO. A PO is a set of 'S*X ' consecutive PDCCH monitoring occasions where 'S' is the number of actual transmitted SSBs determined according to *ssb-PositionsInBurst* in *SIB1* and X is the *nrofPDCCH-MonitoringOccasionPerSSB-InPO* if configured or is equal to 1 otherwise. The [x*S+K]th PDCCH monitoring occasion for paging in the PO corresponds to the Kth transmitted SSB, where x=0,1,...,X-1, K=1,2,...,S. The PDCCH monitoring occasions for paging which do not overlap with UL symbols (determined according to *tdd-UL-DL-ConfigurationCommon*) are sequentially numbered from zero starting from the first PDCCH monitoring occasion for paging in the PF. When *firstPDCCH-MonitoringOccasionOfPO* is present, the starting PDCCH monitoring occasion number of $(i\_s + 1)^{th}$ PO is the $(i\_s + 1)^{th}$ value of the *firstPDCCH-MonitoringOccasionOfPO* parameter; otherwise, it is equal to $i\_s * S*X$. If $X > 1$, when the UE detects a PDCCH transmission addressed to P-RNTI within its PO, the UE is not required to monitor the subsequent PDCCH monitoring occasions for this PO.

NOTE 1: A PO associated with a PF may start in the PF or after the PF.

NOTE 2: The PDCCH monitoring occasions for a PO can span multiple radio frames. When *SearchSpaceId* other than 0 is configured for *paging-SearchSpace* the PDCCH monitoring occasions for a PO can span multiple periods of the paging search space.

The following parameters are used for the calculation of PF and i_s above:

T: DRX cycle of the UE (T is determined by the shortest of the UE specific DRX value(s), if configured by RRC and/or upper layers, and a default DRX value broadcast in system information. In RRC_IDLE state, if UE specific DRX is not configured by upper layers, the default value is applied).

N: number of total paging frames in T

Ns: number of paging occasions for a PF

PF_offset: offset used for PF determination

> UE_ID: 5G-S-TMSI mod 1024

Parameters *Ns*, *nAndPagingFrameOffset*, *nrofPDCCH-MonitoringOccasionPerSSB-InPO*, and the length of default DRX Cycle are signaled in *SIB1*. The values of N and PF_offset are derived from the parameter *nAndPagingFrameOffset* as defined in TS 38.331 [3]. The parameter *first-PDCCH-MonitoringOccasionOfPO* is signalled in *SIB1* for paging in initial DL BWP. For paging in a DL BWP other than the initial DL BWP, the parameter *first-PDCCH-MonitoringOccasionOfPO* is signaled in the corresponding BWP configuration.

If the UE has no 5G-S-TMSI, for instance when the UE has not yet registered onto the network, the UE shall use as default identity UE_ID = 0 in the PF and i_s formulas above.

5G-S-TMSI is a 48 bit long bit string as defined in TS 23.501 [10]. 5G-S-TMSI shall in the formulae above be interpreted as a binary number where the left most bit represents the most significant bit.

The following information is transmitted by means of the DCI format 1_0 with CRC scrambled by P-RNTI:

- Short Messages Indicator – 2 bits according to Table 7.3.1.2.1-1.

- Short Messages – 8 bits, according to Clause 6.5 of [9, TS38.331]. If only the scheduling information for Paging is carried, this bit field is reserved.

- Frequency domain resource assignment – $\left\lceil \log_2(N_{RB}^{DL,BWP}(N_{RB}^{DL,BWP}+1)/2) \right\rceil$ bits. If only the short message is carried, this bit field is reserved.

- $N_{\mathrm{RB}}^{\mathrm{DL,BWP}}$ is the size of CORESET 0

- Time domain resource assignment – 4 bits as defined in Clause 5.1.2.1 of [6, TS38.214]. If only the short message is carried, this bit field is reserved.

- VRB-to-PRB mapping – 1 bit according to Table 7.3.1.2.2-5. If only the short message is carried, this bit field is reserved.

- Modulation and coding scheme – 5 bits as defined in Clause 5.1.3 of [6, TS38.214], using Table 5.1.3.1-1. If only the short message is carried, this bit field is reserved.

- TB scaling – 2 bits as defined in Clause 5.1.3.2 of [6, TS38.214]. If only the short message is carried, this bit field is reserved.

- Reserved bits – 8 bits for operation in a cell with shared spectrum channel access; otherwise 6 bits

**Table 7.3.1.2.1-1: Short Message indicator**

| Bit field | Short Message indicator |
|---|---|
| 00 | Reserved |
| 01 | Only scheduling information for Paging is present in the DCI |
| 10 | Only short message is present in the DCI |
| 11 | Both scheduling information for Paging and short message are present in the DCI |

Short Message

Short Messages can be transmitted on PDCCH using P-RNTI with or without associated *Paging* message using Short Message field in DCI format 1_0 (see TS 38.212 [17], clause 7.3.1.2.1).

Table 6.5-1 defines Short Messages. Bit 1 is the most significant bit.

**Table 6.5-1: Short Messages**

| Bit | Short Message |
|---|---|
| 1 | ***systemInfoModification***<br><br>If set to 1: indication of a BCCH modification other than SIB6, SIB7 and SIB8. |
| 2 | ***etwsAndCmasIndication***<br><br>If set to 1: indication of an ETWS primary notification and/or an ETWS secondary notification and/or a CMAS notification. |
| 3 | ***stopPagingMonitoring***<br><br>This bit can be used for only operation with shared spectrum channel access and if *nrofPDCCH-MonitoringOccasionPerSSB-InPO* is present.<br><br>If set to 1: indication that the UE may stop monitoring PDCCH occasion(s) for paging in this Paging Occasion as specified in TS 38.304 [20], clause 7.1. |
| 4 – 8 | Not used in this release of the specification, and shall be ignored by UE if received. |

If there are no special conditions, the basic operations related to channel measurement of the UE are performed on a measurement occasion that exists within the DRX active time. Here, the DRX active time refers to the time for which the UE is in wake up, not sleep mode, with the RF chain turned on.

**Positioning measurement method considering DRX cycle of UE**

The present disclosure proposes a positioning measurement method considering the DRX cycle of the UE, and the operation of the UE and the base station/server may vary depending on the various scenarios described below, and the server referred to in the present disclosure refers to a location server that manages the location of the UE. The Physical Downlink Share Channel (PDSCH) required for transmission of the paging message described in the present disclosure uses RRC and cannot be transmitted through MAC-CE, but MAC-CE can be used for positioning purposes.

First, an embodiment in which the positioning measurement method considering the DRX cycle of the UE proposed in the present disclosure is applied to downlink positioning measurement in the RRC connected/RRC inactive state will be described.

**Scenario #1: DL positioning measurement in RRC connected/inactive state**

The UE in idle/inactive state receives the DRX cycle configuration through system information or RRC signaling, but the instructed DRX cycle is generally longer than the PRS cycle. That is, the UE in the idle/inactive state receives configuration information for the DRX cycle through system information or RRC signaling, and the DRX cycle configured based on configuration information can generally be configured longer than the cycle in which the UE receives PRS/the cycle in which the base station transmits PRS/the cycle in which PRS resources are configured.

More specifically, the PRS cycle starts from at least 4 slots, and since the DRX cycle is generally in radio frame units [e.g. when delivered to system information, 32, 64, 128, 256 radio frames], multiple PRS transmission/reception can occur between paging occasions (PO). That is, the PRS cycle can be configured from a minimum of 4 slots, and the DRX cycle can generally be configured on a radio frame units, so the PRS transmission of the base station/PRS reception of the UE/PRS resource configuration may be performed between paging occasions (PO) included in different adjacent/consecutive DRX cycles.

However, it is inefficient in terms of power consumption for the UE to monitor all of the instructed and configured PRSs. Therefore, it is necessary for the base station/server to instruct/configure the UE to measure only specific PRSs and transition back to sleep mode. That is, the base station/the server need to be configured to indicate/configure the UE to transition the state back to sleep mode after the UE that transitions to the wake-up state within the DRX cycle performs only measurements on some specific PRSs among all PRSs configured within the DRX cycle. According to the present method, the transmission burden on the base station side can be reduced. Here, if there is a gap between PRSs within the window or timer, the UE can transition to micro/light sleep mode. That is, after the UE that transitions to the wake-up state within the DRX cycle performs only measurements on some specific PRSs among all PRSs configured within the DRX cycle, a window/period/time period or timer can be configured to transition the state back to sleep mode, if a time gap exists between some specific PRSs that exist within the configured window/period/time period or timer, the UE may transition to micro/light sleep mode in the time gap between the some specific PRSs.

The present disclosure proposes a method of allowing the base station or server to instruct the UE about a window or timer or continuous PRS resource(s)/set to be measured by the UE, and the UE to maintain the wake up state until the PRS existing within the instructed and configured resource, measure the PRS, and transition to sleep mode.

FIG. 16 is a diagram showing an example of PRS transmission and reception operation in RRC inactivated/idle state. Referring to FIG. 16, the base station or server can configure a window, a timer, or continuous PRS resource(s)/set to be measured by the UE (1620), to the UE, for the UE to perform measurements only on some specific PRSs among all PRSs set in the DRX cycle (1610). In a paging occasion (1611), the UE may transition to a wake-up state and the UE may perform measurement on the PRS resource(s) (1621, 1623 and 1625), which exist after the paging occasion (1611), existed/included in the configured window, timer, or continuous PRS resource(s)/set to be measured by the UE, and then transition to sleep mode.

Below, a method of instructing the window or timer or continuous PRS resource(s)/set to be measured by the UE will be described. At this time, the window and timer can be configured to 2^N symbols, 2^N slots, 2^N subframe, or 2^N ms length/form using N bits, and can be directly instructed as N symbols N slots, N subframe N ms. For PRS resource(s) or sets, using the index and repetition factor, from the time the corresponding information is received or the PO ends, monitoring is performed for the adjacent PRS resource(s) or sets by a designated repetition factor. That is, for resource(s) or set, an index for identifying the resource(s) or set and information for the repetition factor for the number of times the resource(s) or set are repeatedly configure/exist are configured, and the UE may perform monitoring on the number of PRS resource(s) or sets corresponding to the repetition factor configured for the PRS resource(s) or sets adjacent from the time the UE receives the information or when the PO ends.

Additionally, when offset information for the starting point of the window or timer is given, monitoring is performed by a determined repetition factor for the PRS resource(s) or sets, after the offset, closest to the offset. That is, when the offset information for the starting point of the window or timer is configured to the UE, the UE may perform monitoring on the number of PRS resource(s) or sets corresponding to the configured repetition factor for the PRS resource(s) or sets that exist (exist first) at the closest time point from the time point determined based on the offset.

Method 1: Transmission through system information or RRC signaling in RRC connected state

The present method relates to a method of transmitting information for a window, timer, or continuous PRS resource(s)/set to be measured by the UE, which are configured for the UE to perform measurements only on some specific PRSs among all PRSs configured in one DRX cycle, through (i) system information or (ii) RRC signaling in the RRC connected state of the UE.

More specifically, the present method is a method of broadcasting information for the corresponding duration through system information, or transmitting it to the UE through RRC signaling when it is in RRC connected state before state transition to RRC inactive/idle state. That is, according to the present method, information for the window and timer that are configured for the UE to perform measurements only on some specific PRSs among all PRSs configured in one DRX cycle or information for the continuous PRS resource(s)/set to be measured by the UE may be broadcast through system information, or in the RRC connected state, which is the state before the UE transitions to the RRC inactive/idle state, information for the window and timer or information for the continuous PRS resource(s)/set to be measured by the UE may be transmitted through RRC signaling. Here, system information (SI) can be paging SI or positioning SI.

The UE has the corresponding information, when a request for activation (triggering) is received in RRC inactive/idle state, and measures the PRS within the PRS resource(s)/set that exists for the corresponding duration. That is, the UE holds/stores information for the previously received window, timer, or continuous PRS resource(s)/set to be measured by the UE, and when the UE receives a request for measurement for positioning in the RRC inactive/idle state, it can measure PRS for PRS resource(s)/set existing within the window and timer duration, or can measure PRS for continuous PRS resource(s)/set configured based on the above information. At this time, the activation method can be transmitted through one on/off bit through Paging PDCCH (DCI) or paging PDSCH (MAC-CE) or PEI (Paging Early Indication) discussed in NR PS (positioning system).

Alternatively, the UE can expect to receive the window or timer or resource(s)/set received through system information or RRC signaling without activation (triggering) information by default after every PO. That is, the UE that has received information for a window, timer, configured for the UE to perform measurements only on some specific PRSs among all PRSs configured in one DRX cycle or continuous PRS resource(s)/set to be measured by the UE, without separate activation (triggering) information requesting measurement performance, may receive PRS in the configured window and timer as a default operation after every PO included in every DRX cycle, or perform measurement on continuous PRS resource(s)/set to be measured by the UE. Through this, signaling overhead can be reduced. That is, since signaling for activating/triggering measurement to the UE does not need to be performed separately, signaling overhead is reduced.

On the other hand, because the UE expects to receive PRS after every PO may result in power loss, the base station or server can transmit information for deactivation through methods 2 to 4 below. That is, the information for the deactivation may be information for deactivating the default operation of the UE that expects to receive PRS after every PO. The information for the deactivation may simply be 1 bit information of on and off, or can be delivered in Mbit format to instruct that deactivation is to be performed after a certain number of Pos, and the method of transmitting the information can follow methods 2 to 4 below.

Method 2: Paging PDCCH (DCI)

The present method can be used for group specific indication. In the present method, the reserved state of the short message indicator can be used or delivered using reserved bit(s) within the short message or reserved bits outside the short message. That is, to deliver information to deactivate the default operation of the UE that expects to receive PRS after every PO, the reserved state of the short message indicator, reserved bit(s) within the short message, or reserved bits outside the short message may be used. If the corresponding information (information to deactivate the default operation of the UE that expects to receive PRS after every PO) is included in the short message, the short message indicator may follow the state (10) for existing short message transmission. The corresponding information can also play an activation role at the same time. If 'null' or 'zero', the UE may regard it as non-activation. That is, if the short message indicator is configured to 'null' or 'zero', the UE can interpret it as non-activation.

Method 3: PDSCH (RRC or MAC-CE)

The present method can be used for indication per UE using PDSCH. When following the present method, in addition to the UE-ID in the paging message, the corresponding window or timer can be individually instructed.

When using PDSCH, the DCI bit field of the existing short message indicator can be either only scheduling information ('01') or a state that includes both the short message and PDSCH (scheduling information) ('11'). That is, when the PDSCH is used to transmit information to deactivate the default operation of the UE that expects to receive PRS after every PO, the DCI bit field can be either only scheduling information ('01') or a state that includes both a short message and PDSCH (scheduling information) ('11').

This information (information to deactivate the default operation of the UE that expects to receive PRS after every PO) can also play an activation role at the same time. If 'null' or 'zero', the UE may regard it as non-activation. That is, if the short message indicator is configured to 'null' or 'zero', the UE can interpret it as non-activation.

Method 4: Combination Paging PDCCH (DCI) and PDSCH (RRC or MAC-CE)

In case of Method 3, there may be overhead because all UEs must decode the PDSCH to support positioning and in the case of Method 2, there may be limitations because available resources such as bit fields are small due to the nature of DCI. The present method may be a combination of Methods 2 and 3, and the present method proposes a method of transmitting on/off type information through DCI and transmitting information for specific window/time or resource(s)/set through PDSCH. At this time, the reserved state of the short message indicator can be used separately for positioning.

The starting point of the window and timer is based on the symbol (or the start symbol of the PO) of the first PDCCH monitored by the UE in the PO, or can be the symbol immediately before the UE transitions to sleep mode (or the last symbol of the PDSCH), or can be the last symbol where PO ends or the last symbol+1 symbol. Additionally, based on the previous starting point, minimum offset information (M symbols or slots or subframes) can be instructed and configured separately in consideration of processing delay or application delay. That is, based on the starting point of the window and timer, minimum offset information considering processing delay or application delay can be configured separately, and the actual start time of the window and timer may be configured based on the configured offset information value.

If the starting point of the window and timer is the symbol of the first PDCCH or the start symbol of PO, conflicts with other DL channels (SSB, PDCCH, PDSCH) may occur in a configuration in duration that overlap with the PO duration. That is, the configured window and/or timer conflict with other DL channels (SSB, PDCCH, PDSCH) in a duration that overlaps with the PO duration. More specifically, the PRS that is the target of measurement in the configured window and/or timer may conflict with other PRS channels (SSB, PDCCH, PDSCH). At this time, in overlapping durations, the UE may be to perform monitoring with the lowest priority on the PRS, and in non-overlapping durations, with the highest priority on the PRS. Additionally, even though DL channels have high priority, some DL channels may be ignored. That is, even if DL channels have a higher priority than PRS within the overlapping durations, some DL channels may be ignored, and measurement for positioning may be performed on the PRS overlapping with the corresponding DL channel. For example, in the case of a UE monitoring PEI, the UE can immediately perform an operation to monitor the PO without looking at the PEI. That is, the UE can ignore the PEI and monitor the PO.

Alternatively, in the case of the UE that has received the window/timer/resource(s)/set information, monitoring can be performed with the highest priority on the PRS. Alternatively, priority (between the DL channel and PRS) can be determined through defined rules.

Scenario #2: UL positioning measurement in RRC connected/inactive state

Below, SRS transmission on the UE side for UL positioning measurement will be described. Similar to the DL described above, the base station or server can indicate the UE about a window or timer or SRS resource(s)/set, the UE can maintain the wake up state until the SRS existing within the configured resource, transmit the SRS, and transition to sleep mode. Here, if there is a gap between PRSs within the window or timer, the UE can transition to micro/light sleep mode.

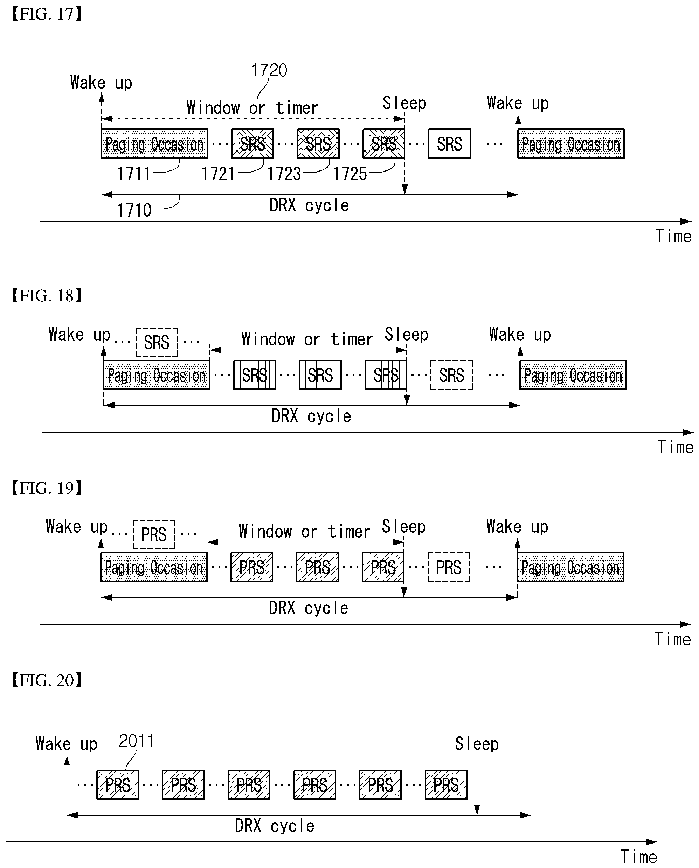

FIG. 17 is a diagram showing an example of SRS transmission and reception operation in RRC inactive/idle state. Referring to FIG. 17, the base station or server may configure the UE to a window and timer for the UE to perform transmission, or a continuous SRS resource(s)/set to be transmitted by the UE only for some specific SRSs among all SRSs configured in the DRX cycle (1710) (1720). At the paging occasion (1711), the UE transitions to the wake-up state, exists after the paging occasion (1711), after performing SRS transmission in the SRS resource(s) exist/included in the configured window, timer, or continuous SRS resource(s)/set (1621, 1623, and 1625) to be transmitted by the UE, the UE may transition to sleep mode.

Below, a method for instructing the window or timer or continuous SRS resource(s)/set to be transmitted by the UE will be described. As in the DL described above, the duration of the window and timer can be directly instructed through Mbits or derived by a formula.

For SRS resource(s) or sets, using index and repetition factor, SRS transmission is performed by a determined repetition factor for SRS resource(s) or sets adjacent from the time of receiving the information or the end of the PO. That is, for resource(s) or set, an index for identifying the resource(s) or set and information on the repetition factor for the number of times the resource(s) or set are repeatedly configured/exist can be configured, and from the time the UE receives the information or when the PO ends, transmission can be performed on the number of SRS resource(s) or sets corresponding to the repetition factor configured for the adjacent SRS resource(s) or sets.

In addition, when offset information for the starting point of the window or timer is given, transmission is performed by a determined repetition factor for the SRS resource(s) or sets closest to the offset. That is, when offset information for the starting point of the window or timer is configured to the UE, for the SRS resource(s) or sets that exist (exist first) at the closest time point from the time point determined based on the offset, the UE may perform transmission on the SRS resource(s) or sets of the number corresponding to the configured repetition factor.

Method 1: Transmission through system information or RRC signaling in RRC connected state

The present method is a method of transmitting information for the window and timer that are configured so that the UE can transmit only for some specific SRSs among all SRSs configured in one DRX cycle or the continuous SRS resource(s)/set to be transmitted by the UE through (i) system information or (ii) an RRC signaling in an RRC connected state of the UE.

More specifically, the present method is a method of broadcasting information for the corresponding duration through the system information, or delivering it to the UE through RRC signaling when it is in the RRC connected state before the state transition to the RRC inactive/idle state. That is, according to the present method, information for the window and timer configured so that the UE can transmit only for some specific SRSs among all SRSs configured in one DRX cycle or the continuous SRS resource(s)/set to be measured by the UE is broadcast through system information, or in the RRC connected state, which is the state before the state transition to the RRC inactive/idle state of the UE, information for the window, timer, or continuous SRS resource(s)/set to be measured by the UE may be transmitted through RRC signaling. Here, system information (SI) can be paging SI or positioning SI.

When the UE has the corresponding information and receives a request for activation (triggering) in the RRC inactive/idle state, the UE transmits SRS within the SRS resource(s)/set that exists for the corresponding duration. That is, the UE holds/stores information for the previously received window, timer, or continuous SRS resource(s)/set to be measured by the UE, and receives a request for measurement for positioning in the RRC inactive/idle state, the UE may transmit SRS for the SRS resource(s)/set that exists within the window and timer duration, or may transmit SRS for continuous SRS resource(s)/set configured based on the information. At this time, the activation method can be transmitted through one on/off bit through Paging PDCCH (DCI) or paging PDSCH (MAC-CE) or PEI (Paging Early Indication) discussed in NR PS (positioning system).

Alternatively, based on a window or timer or resource(s)/set received through system information or RRC signaling without activation (triggering) information, the UE can expect SRS transmission after every PO by default. That is, the UE that has received information for the window and timer configured so that the UE can transmit only for some specific SRSs among all SRSs configured in one DRX cycle or the continuous SRS resource(s)/set to be transmitted by the UE, without separate activation (triggering) information requesting SRS transmission, may perform SRS transmission in the configured window and timer as a default operation after every PO included in each DRX cycle, or transmit for continuous SRS resource(s)/set to be transmitted by the UE. Through this, signaling overhead can be reduced. That is, since signaling for activating/triggering SRS transmission to the UE does not need to be performed separately, the signaling overhead is reduced.

On the other hand, because that the UE expects to receive PRS after every PO may result in power loss, the base station or server can transmit information for deactivation through Methods 2 to 4 below. That is, the information for deactivation may be information for deactivating the default operation of the UE that expects to receive SRS after every PO. The information for deactivating may simply be 1 bit information of on and off, or it may be transmitted in the form of Mbitized information to instruct that deactivation is to be performed after a predetermined number of POs, and the method by which the information is transmitted can follow Methods 2 to 4 below.

Method 2: Paging PDCCH (DCI)

The present method can be used when giving group specific instructions. In the present method, the reserved state of the short message indicator can be used or transmitted using reserved bit(s) within the short message or reserved bits outside the short message. That is, in order to deliver information for deactivating the default operation of the UE that expects to receive PRS after every PO, the reserved state of the short message indicator, reserved bit(s) within the short message, or reserved bits outside the short message may be used. If the corresponding information (information for deactivating the default operation of the UE that expects SRS transmission after every PO) is included in the short message, the short message indicator may follow the state (10) for existing short message transmission. The corresponding information can also play an activation role at the same time. If 'null' or 'zero', the UE may regard it as non-activation. That is, if the short message indicator is configured to 'null' or 'zero', the UE can interpret this as non-activation.

Method 3: PDSCH (RRC or MAC-CE)

The present method is a usable method in indicating per UE using PDSCH. When following the present method, in addition to the UE-ID in the paging message, the corresponding window or timer can be individually instructed.

When using PDSCH, the DCI bit field of the existing short message indicator can be either only scheduling information ('01') or a state that includes both the short message and PDSCH (scheduling information) ('11'). That is, when the PDSCH is used to transmit information for deactivating the default operation of the UE expecting SRS transmission after every PO, the DCI bit field can be either only scheduling information ('01') or a state that includes both a short message and PDSCH (scheduling information) ('11').

The corresponding (information for deactivating the default operation of the UE that expects to receive PRS after every PO) can also play an activation role at the same time. If 'null' or 'zero', the UE may regard it as non-activation. That is, if the short message indicator is configured to 'null' or 'zero', the UE can interpret this as non-activation.

Method 4: Combination Paging PDCCH (DCI) and PDSCH (RRC or MAC-CE)

In case of Method 3, there may be overhead because all UEs must decode the PDSCH to support positioning, and in the case of Method 2, there may be limitations because available resources such as bit fields are small due to the nature of DCI. Therefore, the present method proposes a method of transmitting on/off type information through DCI and transmitting information for specific window/time or resource(s)/set through PDSCH. At this time, the reserved state of the short message indicator can be used separately for positioning.

The starting point of the window and timer is based on the symbol of the first PDCCH (or start symbol of PO) monitored by the UE in the PO, or may be the symbol immediately before the UE transitions to sleep mode (or the last symbol of PDSCH), or may be the last symbol where PO ends or the last symbol+1 symbol. Additionally, based on the previous starting point, minimum offset information (M symbols or slots or subframes) can be instructed and configured separately in consideration of processing delay or application delay. That is, based on the starting point of the window and timer, minimum offset information considering processing delay or application delay, etc. can be configured separately, and the actual starting time point of the window and timer may be configured based on the configured offset information value.

If the starting point of the window and timer is the symbol of the first PDCCH or the start symbol of PO, conflicts may occur in configuration with other DL channels (SSB, PDCCH, PDSCH) in duration that overlap with the PO duration . That is, the configured window and/or timer may conflict with the other DL channels (SSB, PDCCH, PDSCH) in a duration that overlaps with the PO du configured ration. More specifically, the SRS that is the target of transmission in the configured window and/or timer may conflict with the other DL channels (SSB, PDCCH, PDSCH). At this time, in the overlapping duration, the UE puts the lowest priority on SRS, in non-overlapping duration, the UE puts the highest priority on SRS, and the UE can perform transmission through pre-configured SRS resource(s). Additionally, even though the DL channels have high priority, some DL channels may be ignored. That is, even though the DL channels have a higher priority than SRS within the overlapping duration, some DL channels are ignored, and transmission may be performed for SRS that overlaps with the corresponding DL channel. For example, in the case of a UE monitoring PEI, the UE can immediately perform an operation monitoring the PO without looking at the PEI. That is, the UE can ignore the PEI and monitor the PO.

Alternatively, in the case of a UE that has received the window/timer/resource(s)/set information, SRS transmission can be performed with SRS as the highest priority. Alternatively, priority (between DL channels and SRS) may be determined through defined rules.

Unlike described in the two scenarios above (DL and UL), the base station/server can separately configure and instruct a separate monitoring duration for PRS measurement through paging-related system information or other SI without considering the DRX cycle. For example, like DRX configuration, the PRS monitoring window / SRS transmission window may be instructed and configured together separately. The UE can wake up and measure PRS or transmit SRS within the configured PRS monitoring window / SRS transmission window, and can transition to sleep mode based on the end time point of the window.

Alternatively, in duration that overlap with PO, the UE may not expect PRS measurement or SRS transmission to monitor paging, or only within the area overlapping with the PO, the UE can perform DL or UL positioning by performing methods #1 to 4 (in scenario #1) described above.

Alternatively, when being configured regardless of PO, configuration may be indicated from the base station/server to the UE through system information or RRC signaling through cycle and duration, similar to the configuration of PO. That is, if the PRS monitoring window / SRS transmission window in DRX is configured regardless of PO, the PRS monitoring window / SRS transmission window can be configured from the base station / server to the UE through system information or RRC signaling through cycle and duration, similar to the configuration method of PO.

The method proposed in the present disclosure is applicable to both DL and UL.

In the present disclosure, DCI or MAC-CE used to transmit information from the base station to the UE can be used to transmit the NRPP message that can be transmitted from the LMF to support positioning measurement for the UE in RRC idle/inactive state. Alternatively, the related triggering/activation function can be performed instead. Additionally, the corresponding DCI or MAC-CE can be used to transmit information for aperiodic PRS/SRS by transmitting a specific PRS configuration or SRS configuration to be able to dynamically configure resources.

In the previous meeting [1], it was agreed to consider all of types such as periodic, semi-persistent, aperiodic for SRS in RRC_INACTIVE as shown below:

[Table 18]

| Agreement: |
| --- |
| From RAN1 perspective, it is feasible to support transmission of SRS for positioning by UEs in RRC_INACTIVE state for UL and DL+UL positioning under certain validation criteria<br>    • FFS: Type(s) of SRS for positioning (i.e., periodic, semi-persistent, aperiodic)<br>    • FFS: Details of validation criteria which may also be discussed in RAN2<br>    • Send LS to RAN2 informing them of this agreement |

RAN2 also discussed about it and agreed preferentially to consider periodic SRS transmission in the RAN#2 115-e meeting.

[Table 19]

| Agreement: |
| --- |
| gNB can configure the UE with periodic SRS (assuming periodic SRS is supported in RRC INACTIVE) by RRCRelease with suspendConfig at least when periodic event is configured for deferred MT-LR. Other cases can be further discussed. |

Regarding the issue, we are concerned that periodic SRS transmission at UE in RRC_INACTIVE causes more power consumption since UE already consumes its power to monitor paging. Considering the fact, we prefer to support periodic SRS transmission as lower priority than other types (e.g. semi-persistent, aperiodic).

Observation #1:

If periodic SRS transmission at UE in RRC_INACTIVE is supported, it causes more power consumption for UE since UE already consumes its power to monitor paging.

Proposal #1:

RAN1 needs to consider supporting periodic SRS transmission in RRC_INACTIVE as lower priority than other types (e.g. semi-persistent, aperiodic).
Nevertheless, if periodic SRS is supported in RRC_INACTIVE, we think that time window for SRS transmission needs to be required for power saving and defined like paging occasion. The reason to consider the time window (or occasion) is that pre-configured SRS resources are provided before like RRC connected state and the resources can be invalid or collision with other channels. In this respect, RAN1 needs to consider introducing time window (or occasion) when periodic SRS is supported in RRC_INACTIVE.

Observation #2:

Considering periodic SRS transmission in RRC_INACTIVE, pre-configured SRS resources are provided before like RRC connected state and the resources can be invalid or collision with other channels.

Proposal #2:

RAN1 needs to consider introducing time window (or occasion) when periodic SRS is supported in RRC_INACTIVE.
Considering the concern about power consumption, remaining two types of SRS transmission (e.g. semi-persistent, aperiodic) seem more appropriate. In addition, we think that using the fact that UE wakes up for monitoring paging is helpful for power saving as shown in figure 1. If UE can transmit SRS without going to deep sleep after Paging Occasion (PO), UE saves its power to go to sleep and wake up again. So, we think SRS transmission considering DRX cycle and related mechanism (including procedure, signaling) needs to be studied and supported.
Figure 18 is an illustrative example of SRS transmission at UE in RRC inactive state.

Observation #3:

If UE can transmit SRS without going to deep sleep after Paging Occasion (PO), UE saves its power to go to sleep and wake up again.

Proposal #3:

RAN1 should consider/study on SRS transmission considering DRX cycle (including related procedure and signaling).

Reception of PRS for positioning

Regarding reception of PRS in RRC_INACTIVE, RAN1 has discussed and the following was made in the previous meeting [2].

[Table 20]

| Agreement: |
|---|
| NR positioning supports DL PRS-RSRP (section 5.1.28 in the TS 38.215) and DL RSTD (section 5.1.29 in the TS 38.215) measurements by UEs in RRC_INACTIVE state |
| |
| • FFS additional potential impact on RAN1 |

To discuss about it, RAN1 needs to firstly discuss which DL channel is used for the transmission of NRPP message (such as measurement request). For example, from the RAN1's perspective, paging PDCCH (e.g., message in DCI for paging) can be considered as one of options for indicating whether the positioning related message is delivered.

Proposal #4:

If network initiated positioning measurement is supported in RRC_INACTIVE, RAN 1 needs to firstly discuss which DL channel is used for the transmission of information from LMF to UE.

Paging PDCCH (esp., message in DCI for paging) can be considered as one of options for indicating whether the positioning related message is delivered.

If paging is used for NRPP message (such as measurement request) and UE monitors every PRS resources that are in adjacent PO, it causes larger power consumption for UE. In general, the DRX cycle for monitoring paging can be {32, 64, 128, 256} ms (in the case of default), the minimum periodicity of PRS transmission is at least 4 slots. Considering the fact that the DRX cycle is relatively longer than periodicity of PRS, when UE monitors every PRS between adjacent POs, a larger power is required for UE. To prevent the problem, we think that RAN1 also needs to consider some mechanism as described in UL-SRS for DL-PRS. If the information such as window or timer to restrict PRS reception as shown in below 2, we think that it will help to save the power at UE. So, we think PRS reception considering DRX cycle and related mechanism (including procedure, signaling) also needs to be studied and supported.

Figure 19 is an illustrative example of PRS reception at UE in RRC inactive state.

One such example is that UE always measures PRS within preconfigured duration periodically after every paging occasion. The other example is that UE obtains some information related with window through paging and then UE measure PRSs within the configured window dynamically. Likewise, we think that RAN1 needs to consider PRS reception considering DRX cycle and related mechanism (including procedure, signaling).

Observation #4:

If paging is used for NRPP message (such as measurement request) and UE monitors every PRS resources that are in adjacent PO, it causes larger power consumption for UE.

Proposal #5:

Regarding DL positioning in RRC_INACTIVE, RAN1 needs to consider PRS reception considering DRX cycle and the following options would be considered for support it.

UE always measures PRS within preconfigured duration periodically after every paging occasion
UE obtains some information related with window through paging and then UE measure PRSs within the configured window dynamically

In the present disclosure, the time window (or occasion) for PRS reception in the DRX cycle may be configured similarly to the paging occasion. The corresponding method can follow the configuration for the measurement time window used in the connected state, or can be instructed and configured separately for the inactive state. That is, the time window configuration for PRS reception in the DRX cycle may follow the configuration for the measurement time window used in the connected state, and the time window configuration for PRS reception in the DRX cycle can be configured separately from the configuration for the measurement time window used in the connected state.

The measurement time window refers to the time duration in which PRS or SRS can be received/transmitted, and this is a duration in which the base station and the UE are guaranteed to transmit the measured results through various DL/UL/DL+UL positioning methods in the corresponding duration. The configuration of the time window can be instructed by a cycle in frames, subframes, or slots units, and an offset in frames, subframes, or slots units, and at this time, SRS transmission or PRS reception can be performed only in the duration corresponding to the time window.

Alternatively, detailed sections may be instructed by a plurality of smaller subframes (in the frame unit), a plurality of smaller slots/symbols (in the frame unit), or a plurality of smaller symbols (in the slot unit) within a frame, subframe, or slot unit.

Since examples of the proposed method described above may also be included as one of the various embodiments of the present disclosure, it is clear that they can be regarded as a kind of proposal method. Additionally, the proposed methods described above may be implemented independently, but may also be implemented in the form of a combination (or merge) of some of the proposed methods. A rule may be defined so that the base station informs the UE of the application of the proposed methods (or information for the rules of the above proposed methods) through a predefined signal (e.g. physical layer signal or higher layer signal).

**Window configuration method for positioning measurement considering DRX cycle of UE**

When the UE in the RRC Inactive state performs location measurement, if there are no restrictions (on the duration/time duration/cycle, etc. for which the UE performs measurements), the UE can measure PRS through all instructed and configured PRS resources, and in this case, the UE needs to maintain a wake up state, which may be inefficient in terms of power consumption. Even if the UE itself does not monitor the PRS for power saving due to the UE implementation, because the base station must transmit PRS on the configured PRS resources, signaling overhead and power consumption due to PRS transmission are incurred. For this reason, it may be necessary to introduce a window to solve the above problem by limiting the PRS measurement duration of the UE, and definition of a specific configuration for the window may also be necessary.

FIG. 20 is a diagram showing an example in which a UE in an inactive state receives a PRS.

As shown in FIG. 20, when the UE measures/monitors all PRS (2011) resources configured within the DRX cycle (2020), the UE must maintain a wake-up state, which requires a lot of power consumption. Additionally, if a long cycle is configured or a large repetition factor is configured, more power is consumed. From this perspective, a time window (measurement duration) can be defined so that measurements can be performed on only some of the PRS resources, but not on all PRS resources, among all PRS resources configured in the DRX cycle.

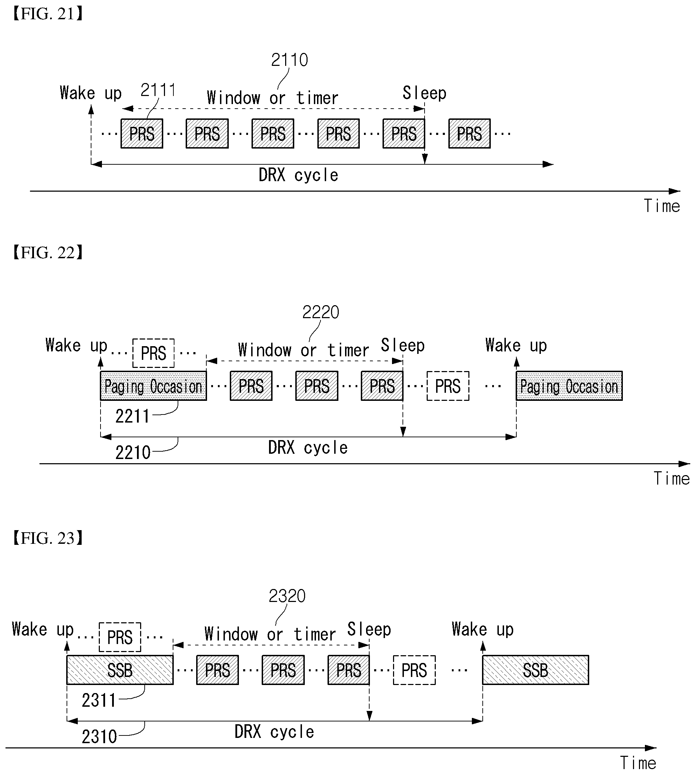

FIG. 21 is a diagram showing an example in which a UE in an inactive state receives a PRS based on a time window.

As shown in FIG. 21, among all PRS (2111) resources configured within the DRX cycle (2120), measurements can be performed only on PRS resources that exist/include within a window or timer 2110 that is configured so that the UE can perform measurements only on some PRS resources, not on all PRS resources. At this time, after measurement is completed for PRS resources existing/included in the window or timer 2110, the UE transitions to sleep mode.

The present disclosure describes a method of configuring the window (or timer). In the present disclosure, the resource for PRS measured by the UE in the inactive state may be a resource insyructed/configured in the connected state, and separately, related configuration information can be transmitted through msg2, msg4, or msgB during the RACH procedure, and through a paging message during the paging procedure. The related configuration information may be window-related configuration information. The amount of information may be transmitted as all or only part of the information transmitted through the assistance date in the connected state. The window or timer may also be called a measurement duration.

Basically, the UE does not perform PRS measurement from all preconfigured PRS resources in the inactive state, but expects PRS measurement limited to PRS resources existing within the window described below. If there are partially overlapping PRS resources at the start and end points of the window, if there are overlapping resources that cannot satisfy the requirements, the UE may not expect PRS measurement for the resources even if the resources exist within the window.

When the UE receives a PRS within the window described below, the priority of PRS may be lower than all other channels/signals such as SSB, PDCCH, PDSCH, or when the base station configures the window, it can directly instruct priority information to the PRS. The priority information may be listed as a plurality of options based on predetermined rules, and only the index information of the above options can be transmitted. At this time, the options may be in the form of an enumeration of priorities of PRS and other channels/signals.

Below, embodiments for configuring a window or timer will be described in detail.

Method #1: Transmitting only window length information

The present method is a method of configuring only the length/duration information for the window by the base station, and allowing the UE to expect PRS measurement from PRS resources that exist during the length/duration instructed and configured from a specific time point reference. That is, among all PRS resources configured within the DRX cycle, the base station transmits to the UE only the length/duration information of the time window that is configured so that measurements can be performed only on some PRS resources, not on all PRS resources, based on the value indicated by the length/duration information of the time window, the time window starts from a specific reference time point, and the time window may be configured/maintained/continued for a length/duration corresponding to the value indicated by the length/duration information of the time window, and the UE can perform measurements on PRS resources existing within the time window. Here, the reference time may be the first or last symbol of the paging occasion in which the UE wakes up and monitor the paging PDCCH, or the first or last symbol of the paging message.

FIGS. 22 and 23 show an example in which a UE in an inactive state receives a PRS based on a time window.

FIGS. 22 and 23 show examples when the last symbol of PO is the standard. First, referring to FIG. 22, FIG. 22 relates to a case where the length/duration information of the time window configured for the UE is applied based on/from the time of the last symbol of the PO.

In FIG. 22, among all PRS resources configured within the DRX cycle 2210, the base station transmits to the UE only the length/duration information of the time window 2220 that is configured so that measurements can be performed only on some PRS resources, not on all PRS resources, based on the value indicated by the length/duration information of the time window, the time window starts from the time point of the last symbol of PO, the time window is configured/maintained/continued for a length/duration corresponding to the value indicated by the length/duration information of the time window, and the UE can perform measurements on PRS resources existing within the time window. After measurement is completed, the UE can transition to sleep mode.

Regardless of the PO, considering that the UE must always monitor the SSB in the inactive state, the start or last symbol of the SSB may be the standard. Alternatively, the start or last of paging early indication (PEI), which can be transmitted prior to PO, can also be the standard. Referring to FIG. 23, FIG. 23 relates to a case where the length/duration information of the time window configured for the UE is applied based on/from the time point of the last symbol of the SSB.

In FIG. 23, among all PRS resources configured within the DRX cycle 2310, the base station transmits to the UE only the length/duration information of the time window 2320 that is configured to perform measurements only on some PRS resources, not on all PRS resources, based on the value indicated by the length/duration information of the time window, the time window starts from the last symbol time point of SSB, the time window is configured/maintained/continued for a length/duration corresponding to the value indicated by the length/duration information of the time window, and the UE can perform measurements on PRS resources existing within the time window. After measurement is completed, the UE can transition to sleep mode.

When the window is configured using the present method, automatically, the window cycle always follows the DRX cycle or SSB transmission cycle.

Method #2: Configuration of start position (e.g. offset) and duration

In the case of Method #1 described above, while it is impossible to change the start point of the window, in case of Method #2, it is a method that allows the starting point of the window to be configured by separately configuring the offset value of the starting point. In the present method, a point that serves as the standard for start offset can be the reference point described in Method #1. That is, according to the present method, among all PRS resources configured within the DRX cycle, the base station transmits to the UE the length/duration information of the time window and information about when the time window starts that is configured to perform measurements only on some PRS resources, not on all PRS resources, based on the value indicated by the length/duration information of the time window and information about when the time window starts, the time window starts at a later time point as much as the value indicated by the information for the time point at which the time window starts from a specific reference time point, the time window is configured/maintained/continued for a length/duration corresponding to the value indicated by the length/duration information of the time window, and the UE can perform measurements on PRS resources existing within the time window. After measurement is completed, the UE can transition to sleep mode.

The offset can be configured to protect other channels/signals in addition to PRS. Additionally, the offset can serve as a device to ensure that the priority of the PRS can be prioritized. That is, the highest priority of the PRS can be guaranteed after the point determined by the offset, so that the UE can expect measurement by giving the highest priority to the PRS within the window.

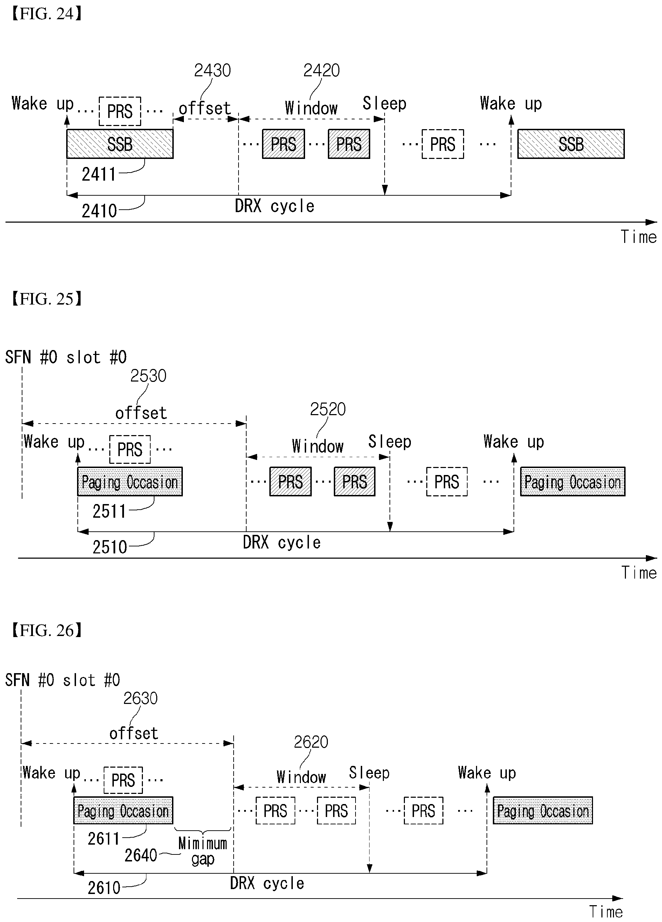

FIG. 24 is a diagram showing an example in which a UE in an inactive state receives a PRS based on a time window. Referring to FIG. 24, FIG. 24 relates to a case where the length/duration information 2420 and offset information 2430 of the time window configured for the UE are applied based on/from the time point of the last symbol of the SSB. In FIG. 24, among all PRS resources configured within the DRX cycle 2410, the base station transmits, to the UE, length/duration information (2420) of the time window (2420) that is configured to perform measurements only on some PRS resources, not on all PRS resources and offset (2430) information about when the time window starts, based on the value indicated by the length/duration information of the time window and the information 2430 for time point when the time window starts, the time window 2420 starts at a later time point as much as the value indicated by the information 2430 for time point when the time window starts based on /from the time point of the last symbol of SSB, the time window 2420 is configured/maintained/continued by a length/duration corresponding to the value indicated by the length/duration information 2420 of the time window 2420, the UE can perform measurements on PRS resources existing within the time window 2420. After measurement is completed, the UE can transition to sleep mode.

Method #3: Configuration of start position (e.g. offset), duration and repetition factor information

Methods #1 and #2 described above are linked to and depend on SSB or PO, and repeatability also depends on the configuration of the corresponding signal (SSB or PO). Method #3 is a method of instructing/configuring the start point, duration, and repetition separately without considering dependency with other DL channels such as SSB or Paging PDCCH.

The UE not only attempts to wake up to monitor the PO and SSB, but also attempts to wake up to monitor the PRS resource within the instructed/configured window and expects PRS measurement.

The starting position of the window can be configured based on SFN #0 and slot #0, windows starts after the configured offset, the window is activated as much as the instructed length/duration, if there is repetition, the window is activated again after as much as the configured offset. That is, if there is repetition, a new window can be configured according to the configured length/duration at a time after as much as the configured offset from the end time point of the previously configured window. The number of repetitions can also be instructed/configured, and if the value is 0 or not instructed, the window is activated in unity.

FIG. 25 is a diagram showing an example in which a UE in an inactive state receives a PRS based on a time window. Referring to FIG. 25, FIG. 25 relates to a case where the UE is applied based on the configured length/duration information (2520) and offset information (2530) of the time window, although not shown in FIG. 25, and a case where information for the repetition factor is applied based on SFN #0 and slot #0. In FIG. 25, among all PRS resources configured within the DRX cycle 2510, the base station transmits to the UE length/duration information (2520) of the time window (2520) that configured to perform measurements only on some PRS resources, not on all PRS resources, and offset (2530) information about when the time window starts, and information for repetition factor over which the time window 2520 is repeated, based on the value indicated by the length/duration information of the time window and the information 2530 about when the time window starts, the time window 2520 starts at a later time point as much as the value indicated by the information 2530 for the time at which window starts based on SFN #0, slot #0, the time window 2520 is configured/maintained/continued by a length/duration corresponding to the value indicated by the length/duration information 2520 of the time window 2520, the UE can perform measurements on PRS resources existing within the time window 2520. After measurement is completed, the UE can transition to sleep mode. At this time, if the value of the information for the repetition factor is not 0, a new time window may be configured at a later time point as much as the information 2530 for the time point at which the time window starts.

Method #4: Configuration of start position (e.g. offset), duration, repetition factor information, and minimum gap

In the case of Method #3, the UE must not only wake up for SSB and paging, but also wake up and remain active for PRS measurement, so there is a burden on power consumption on the UE side. In the present method, the base station additionally transmits the minimum gap from the base station, and the minimum gap may mean a condition for whether the UE performs PRS measurement within a configured window.

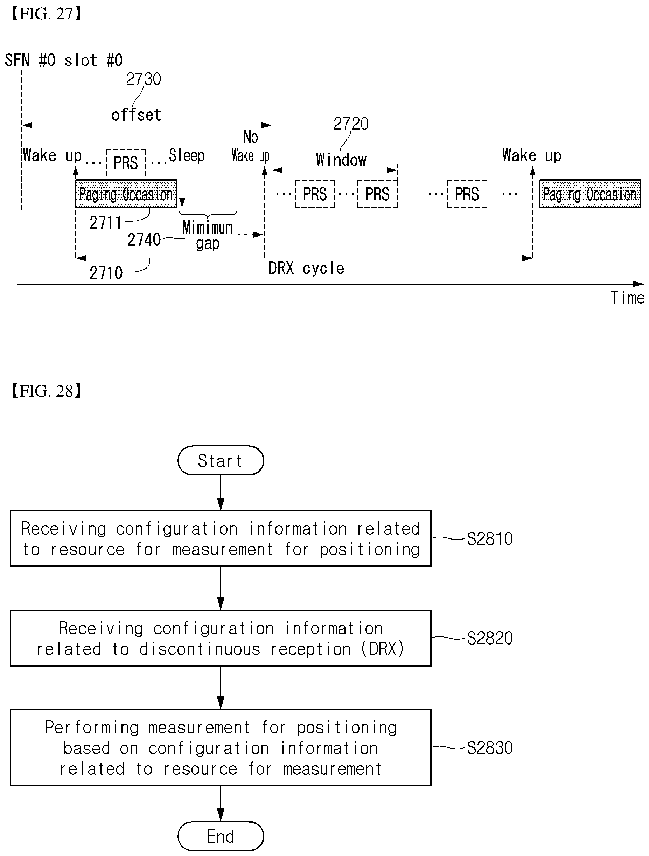

FIGS. 26 and 27 illustrate an example in which a UE in an inactive state receives a PRS based on a time window.

First, referring to FIG. 26, within the DRX cycle (2610), the window is indicated/ configured (2620, 2630) separately from the PO, but since the window (2620) starts within the additionally configured minimum gap (2640), for the PRS that exists within the window, the UE does not enter sleep mode, maintains activation for PRS measurement and expects PRS measurement from PRS resources within the window.

Next, referring to FIG. 27, within the DRX cycle (2710), the window is indicated/ configured (2720, 2730) separately from the PO, but since windows does not start within the additionally configured minimum gap (2740), the UE only receives paging to save power and transitions to sleep mode, and thereafter, the UE expects that PRS will not be measured for PRS resources within the existing/configured window.

In the present method, the starting point of the minimum gap can be the reference point described in Method #1. At this time, a standard to which the parameters for window configuration except the minimum gap are applied may follow the reference time point of Method #3.

Method #5: Method of considering paging frame itself as window

In the case of the present method, the paging frame itself is considered a window without duration configuration and offset configuration, and the UE expects PRS measurement for PRS resources existing within its paging frame. That is, in the case of the present method, without configuring the window duration for window configuration and the offset to the window start time point, the UE can expect PRS measurement for PRS resources existing in the configured paging frame.

Generally, the paging frame of the UE is configured as follows.

$$(SFN + PF\_offset) \bmod T = (T \text{ div } N)*(UE\_ID \bmod N)$$

The following parameters are used to calculate PF.

T: DRX cycle of the UE (T is determined by the shortest of the UE specific DRX value(s), if configured by RRC and/or upper layers, and a default DRX value broadcast in system information. In RRC_IDLE state, if UE specific DRX is not configured by upper layers, the default value is applied).

N: Number of total paging frames in T
Ns: Number of paging occasions for a PF
PF_offset: Offset used for PF determination
UE_ID: 5G-S-TMSI mod 1024

The base station expects the UE to measure PRS within the paging frame to which the target UE belongs, and the UE also expects PRS measurement from PRS resources existing in the PF to which its PO belongs. In addition, the base station can additionally instructed/configured the value such as 0,1,2,..., etc., which represents a continuous paging frame and can be interpreted as increasing the window duration . That is, if 0 is instructed, it is interpreted as expecting PRS measurement within the paging frame to which the PO of the UE belongs, and if 1 is instructed, the UE can expect PRS measurement not only for up to the paging frame duration of the UE but also for up to one continuous paging frame duration that exists adjacent to it.

The configuration of the window described above can be instructed/configured through system information, or transmitted together when configuring PRS resources.

If the periodicity of the window described above is smaller than the DRX cycle, in other words, if multiple windows are configured between POs of the UE, the UE can expect PRS transmission to be performed in the window closest to its PO or PF, and the base station can also transmit PRS only within that single window. Alternatively, by introducing additional parameters, it is possible to configure PRS reception for consecutive windows. For example, if the corresponding value (value of the above additional parameter) is 0, the UE can expect PRS measurement within one window adjacent to the PO or PF, and if the corresponding value (value of the above additional parameter) is 2, the UE can expect PRS measurement from PRS resources existing within three windows adjacent to the PO or PF.

In the case of the window described above, considering RF retuning time such as inter cell measurement, a certain protection period may be required before and after SSB and PO. Therefore, the UE may not expect to receive PRS for PRS resources existing within the protection period, even if it is inside the window.

When a window is applied from the starting time point of the window described above (at this time, the starting time point may be instructed as a parameter for specifying an arbitrary time, or may be linked to an arbitrary time point previously promised to the UE.), the UE receives the PRS within the window and performs measurement. At this time, if PRS overlaps with channels and signals used for existing paging, such as SSB, TRS, CORESET, and PDSCH, within the window, reception of channels/signals for paging is prioritized, and PRS may be lowered in priority.

The periodicity of the window described above can follow the value of the DRX cycle or be configured as a divisor or multiple of the DRX cycle.

The windows described above can be configured in plural numbers through assistance data, RRC, or system information in the connected state, and each plurality of windows can be linked to a unique ID for identification. Additionally, before state transition to the RRC inactive state of the UE, the base station may configure the ID in advance through a message such as RRC connection release, or transmit through RACH, paging, or SDT as described above in the inactive state of the UE.

The values of the parameters related to the window described above can be requested as values preferred by the LMF (location server) or the UE, when requested by LMF, it is transmitted through an NRPPa message, when the UE requests it, it can be transmitted through msg 3 or msgA among the RACH procedures, or it can be transmitted through UL small date transmission (SDT). The base station's response to this can be transmitted using msg4, msg B, or DL SDT. The units of the parameters described above can be individually configured as one unit among symbol, slot, subframe, or frame for each parameter.

The methods and rules described in the present disclosure can be applied to all positioning methods of all DL / UL / DL+UL, and SRS may include not only positioning but also SRS for MIMO. The methods and rules described in the present disclosure can be extended and applied to AI/ML. Additionally, the methods and rules described in the present disclosure can be applied regardless of RRC connected/idle/inactive. The methods and rules described in the present disclosure can be extended and applied to early paging indication (PEI). The method described in the present disclosure is also applicable in RRC idle or connected state. The methods and rules described in the present disclosure can also be applied to SRS for positioning or SRS for MIMO.

FIG. 28 is a diagram showing an example in which a method proposed in the present disclosure is performed in a UE.

More specifically, a UE performing positioning in a wireless communication system receives configuration information related to a resource for a measurement for the positioning (S2810).

Next, the UE receives configuration information related to discontinuous reception (DRX) (S2820).

Afterwards, the UE performs the measurement for the positioning based on the configuration information related to the resource for the measurement (S2830).

At this time, the measurement for the positioning is performed based on a measurement duration for performing the measurement for the positioning in an radio resource control (RRC) inactive state, and the measurement duration is configured within a DRX cycle, which is a cycle in which a DRX operation of the UE is performed.

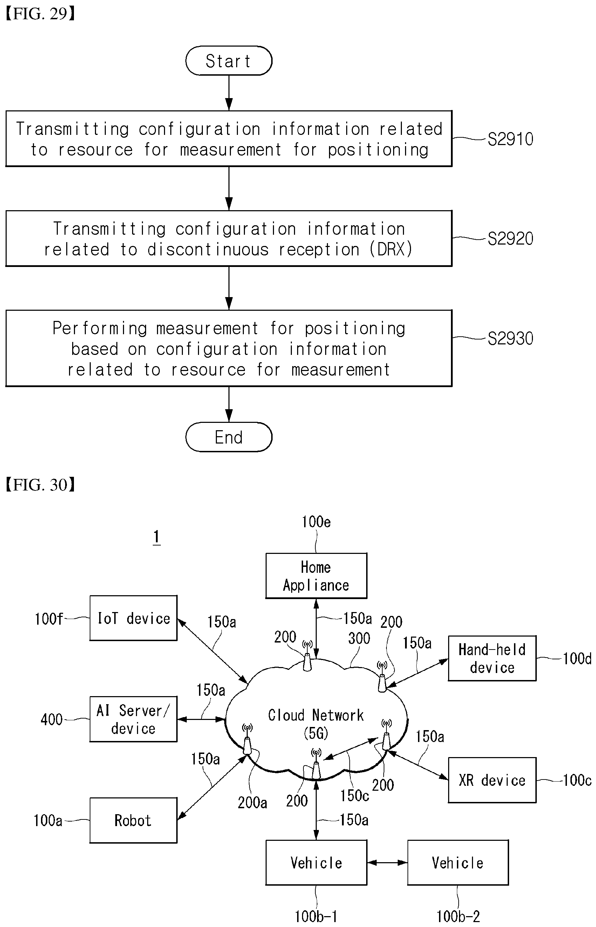

FIG. 29 is a diagram showing an example in which a method proposed in the present disclosure is performed at a base station.

More specifically, a base station performing positioning in a wireless communication system transmits configuration information related to a resource for a measurement for the positioning (S2910).

Next, the base station transmits configuration information related to discontinuous reception (DRX) (S2920).

Afterwards, the base station performs the measurement for the positioning based on configuration information related to the resource for the measurement (S2930).

Here, the measurement for the positioning is performed based on a measurement duration for performing the measurement for the positioning in an radio resource control (RRC) inactive state, and the measurement duration is configured within a DRX cycle, which is a cycle in which a DRX operation of the UE is performed.

## Example of communication system applied to present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 30 illustrates a communication system 1 applied to the present disclosure.

Referring to FIG. 30, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

**Example of wireless device applied to the present disclosure.**

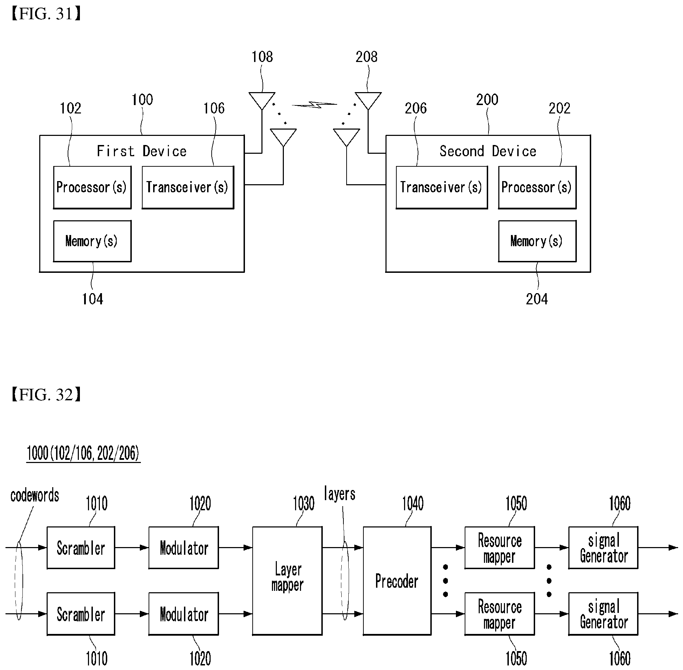

FIG. 31 illustrates wireless devices applicable to the present disclosure.

Referring to FIG. 31, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 30.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

**Example of signal processing circuit applied to the present disclosure**

FIG. 32 illustrates a signal process circuit for a transmission signal.

Referring to FIG. 32, a signal processing circuit 1000 may include scramblers 1010, modulators 1020, a layer mapper 1030, a precoder 1040, resource mappers 1050, and signal generators 1060. An operation/function of FIG. 32 may be performed, without being limited to, the processors 102 and 202 and/or the transceivers 106 and 206 of FIG. 31. Hardware elements of FIG. 32 may be implemented by the processors 102 and 202 and/or the transceivers 106 and 206 of FIG. 31. For example, blocks 1010 to 1060 may be implemented by the processors 102 and 202 of FIG. 31. Alternatively, the blocks 1010 to 1050 may be implemented by the processors 102 and 202 of FIG. 31 and the block 1060 may be implemented by the transceivers 106 and 206 of FIG. 31.

Codewords may be converted into radio signals via the signal processing circuit 1000 of FIG. 32. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 32. For example, the wireless devices (e.g., 100 and 200 of FIG. 31) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

### Example of application of wireless device applied to the present disclosure

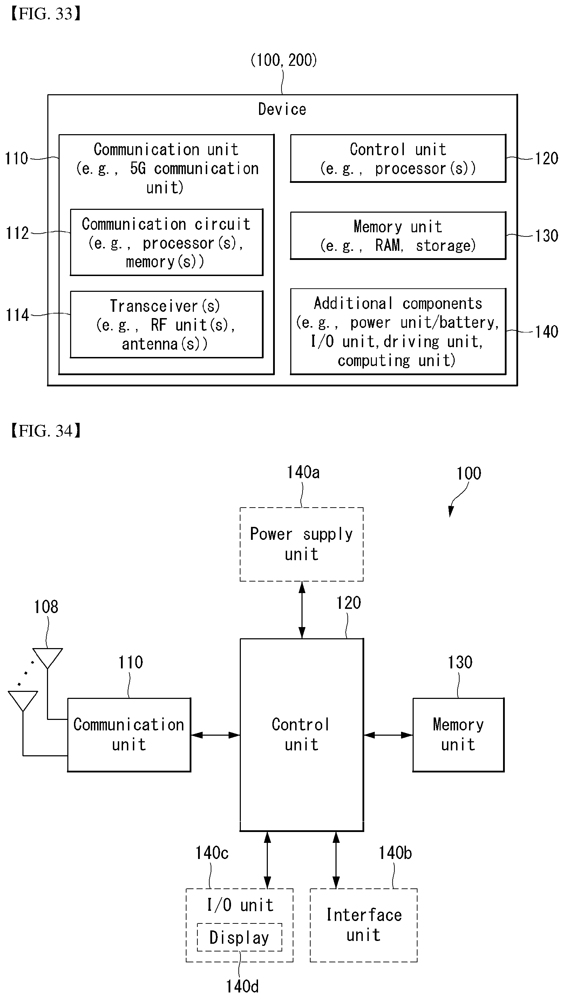

FIG. 33 illustrates another example of a wireless device applied to the present disclosure.

The wireless device may be implemented in various forms according to a use-case/service (refer to FIG. 30). Referring to FIG. 33, wireless devices 100 and 200 may correspond to the wireless devices 100 and 200 of FIG. 31 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 31. For example, the transceiver(s) 114 may include the one or more transceivers 106 and 206 and/or the one or more antennas 108 and 208 of FIG. 31. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 30), the vehicles (100b-1 and 100b-2 of FIG. 30), the XR device (100c of FIG. 30), the hand-held device (100d of FIG. 30), the home appliance (100e of FIG. 30), the IoT device (100f of FIG. 30), a digital broadcast terminal, a hologram device, a public safety device, an MTC device, a medicine device, a fintech device (or a finance device), a security device, a climate/environment device, the AI server/device (400 of FIG. 30), the BSs (200 of FIG. 30), a network node, etc. The wireless device may be used in a mobile or fixed place according to a use-example/service.

In FIG. 33, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a nonvolatile memory, and/or a combination thereof.

**Example of hand-held device applied to the present disclosure**

FIG. 34 illustrates a hand-held device applied to the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 34, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 33, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

Here, the wireless communication technology implemented in the device (FIGS. 19 to 23) of the present disclosure may include LTE, NR, and 6G as well as Narrowband Internet of Things (NB-IoT) for low-power communication. For example, the NB-IoT technology may be an example of a LPWAN (Low Power Wide Area Network) technology, and may be implemented in standards such as LTE Cat NB1 and/or LTE Cat NB2, and is not limited to the above-described name.

Additionally or alternatively, the wireless communication technology implemented in the device (FIGS. 19 to 23) of the present disclosure may perform communication based on the LTE-M technology. For example, the LTE-M technology may be an example of LPWAN technology, and may be called by various names such as enhanced machine type communication (eMTC). For example, LTE-M technology may be implemented in at least one of various standards such as 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M, and is not limited to the above-described name.

Additionally or alternatively, the wireless communication technology implemented in the device (FIGS. 19 to 23) of the present disclosure may include at least one of ZigBee, Bluetooth, and Low Power Wide Area Network (LPWAN) in consideration of low power communication, and is not limited to the above-described name. For example, the ZigBee technology may generate PAN (personal area networks) related to small/low-power digital communication based on various standards such as IEEE 802.15.4, and may be called by various names.

The embodiments of the present disclosure described hereinbelow are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**Claims**

1. A method of a user equipment (UE) to perform positioning in a wireless communication system, the method comprising:

   receiving configuration information related to a resource for a measurement for the positioning;
   receiving configuration information related to discontinuous reception (DRX); and
   performing the measurement for the positioning based on the configuration information related to the resource for the measurement,
   wherein the measurement for the positioning is performed based on a measurement duration for performing the measurement for the positioning in an radio resource control (RRC) inactive state, and
   wherein the measurement duration is configured within a DRX cycle, which is a cycle in which a DRX operation of the UE is performed.

2. The method of claim 1, wherein the measurement for the positioning is performed on at least one resource included in the measurement duration among the resources for the measurement for the positioning.

3. The method of claim 1, further comprising:
   receiving measurement duration information for the measurement duration.

4. The method of claim 3, wherein the measurement duration information is (i) received through system information or (ii) received through an RRC signaling in an RRC connected state before the RRC inactive state of the UE.

5. The method of claim 4, further comprising:

   receiving a request message for activating the measurement for the positioning in the RRC inactive state of the UE,
   wherein the measurement for the positioning is activated based on the request message.

6. The method of claim 4, wherein the measurement for the positioning is configured to be performed after a paging occasion of every DRX cycle without a request message for activating the measurement for the positioning, and further comprising:
   receiving a message for deactivating the measurement for the positioning configured to be performed after the paging occasion of the every DRX cycle.

7. The method of claim 6, wherein the message for deactivating the measurement for the positioning is downlink control information applied per UE group.

8. The method of claim 6, wherein the message for deactivating the measurement for the positioning is information transmitted through a physical downlink shared channel applied per UE.

9. The method of claim 6, wherein the message for deactivating the measurement for the positioning is downlink control information applied per UE group, and
   wherein the measurement duration information is transmitted through a physical downlink shared channel applied per UE.

10. The method of claim 3, wherein the measurement duration information includes information for a duration of the measurement duration, and
wherein the measurement duration is configured to a duration based on information for the duration from a reference time point.

11. The method of claim 10, wherein the measurement duration information further includes offset information for a starting time point at which the measurement duration starts, and
wherein the measurement duration is configured to a duration based on the information for the duration from a later time point as much as the offset information from the reference time point.

12. The method of claim 3, wherein the measurement duration information further includes repetition number information for a number of times the measurement duration is repeatedly configured within the DRX cycle, and
wherein the measurement duration is repeatedly configured, as much as a number based on the repetition number information, as much as the duration based on the information for the duration from a later time point as much as the offset information from a reference time point.

13. The method of claim 10, wherein the measurement duration information further includes minimum gap information for determining whether to perform the measurement for the positioning within the DRX cycle,

wherein, based on the measurement duration being configured within a time period from an ending time point of the paging occasion of the DRX cycle to the minimum gap, the measurement for the positioning is performed, and
wherein, based on the measurement duration being not configured within a time period from an ending time point of the paging occasion of the DRX cycle to the minimum gap, the measurement for the positioning is not performed, and a state of the UE transitions to a sleep state.

14. The method of claim 3, wherein the resource for the measurement is a positioning reference signal (PRS) resource, and
wherein the performing the measurement for the positioning includes:

receiving a PRS; and
performing measurements for the PRS.

15. The method of claim 3, wherein the resource for the measurement is a sounding reference signal (SRS) resource,

wherein the performing the measurement for the positioning includes transmitting a SRS,
wherein the measurement for the positioning is performed through the measurement for the SRS at the base station.

16. A user equipment (UE) performing positioning in a wireless communication system, the UE comprising:

one or more transceivers;
one or more processors controlling the one or more transceivers; and
one or more memories operably connected to the one or more processors,
wherein the one or more memories store instructions for performing operations based on being executed by the one or more processors,
wherein the operations include:

receiving configuration information related to a resource for a measurement for the positioning;
receiving configuration information related to discontinuous reception (DRX); and
performing the measurement for the positioning based on the configuration information related to the resource for the measurement,
wherein the measurement for the positioning is performed based on a measurement duration for performing the measurement for the positioning in an radio resource control (RRC) inactive state, and
wherein the measurement duration is configured within a DRX cycle, which is a cycle in which a DRX operation of the UE is performed.

17. A device for controlling a user equipment (UE) to perform positioning in a wireless communication system, the device comprising:

one or more processors; and
one or more memories operably connected to the one or more processors,
wherein the one or more memories store instructions for performing operations based on being executed by the one or more processors,
wherein the operations include:

receiving configuration information related to a resource for a measurement for the positioning;
receiving configuration information related to discontinuous reception (DRX); and
performing the measurement for the positioning based on the configuration information related to the resource for the measurement,
wherein the measurement for the positioning is performed based on a measurement duration for performing the measurement for the positioning in an radio resource control (RRC) inactive state, and
wherein the measurement duration is configured within a DRX cycle, which is a cycle in which a DRX operation of the UE is performed.

**18.** One or more non-transitory computer-readable medium storing one or more instructions,

wherein the one or more instructions perform operations based on being executed by one or more processors,
wherein the operations include:

receiving configuration information related to a resource for a measurement for the positioning;
receiving configuration information related to discontinuous reception (DRX); and
performing the measurement for the positioning based on the configuration information related to the resource for the measurement,
wherein the measurement for the positioning is performed based on a measurement duration for performing the measurement for the positioning in an radio resource control (RRC) inactive state, and
wherein the measurement duration is configured within a DRX cycle, which is a cycle in which a DRX operation of the UE is performed.

**19.** A method of a base station to perform positioning in a wireless communication system, the method comprising:

transmitting configuration information related to a resource for a measurement for the positioning;
transmitting configuration information related to discontinuous reception (DRX); and
performing the measurement for the positioning based on the configuration information related to the resource for the measurement,
wherein the measurement for the positioning is performed based on a measurement duration for performing the measurement for the positioning in an radio resource control (RRC) inactive state, and
wherein the measurement duration is configured within a DRX cycle, which is a cycle in which a DRX operation of the UE is performed.

**20.** A base station performing positioning in a wireless communication, the base station comprising:

one or more transceivers;
one or more processors controlling the one or more transceivers; and
one or more memories operably connected to the one or more processors,
wherein the one or more memories store instructions for performing operations based on being executed by the one or more processors,
wherein the operations include:

transmitting configuration information related to a resource for a measurement for the positioning;
transmitting configuration information related to discontinuous reception (DRX); and
performing the measurement for the positioning based on the configuration information related to the resource for the measurement,
wherein the measurement for the positioning is performed based on a measurement duration for performing the measurement for the positioning in an radio resource control (RRC) inactive state, and
wherein the measurement duration is configured within a DRX cycle, which is a cycle in which a DRX operation of the UE is performed.

【FIG. 1】

【FIG. 2】

【FIG. 3】

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Size depends on subcarrier spacing

Symbol

| 0 | 1 | 2 | 3 | 4 | 5 | 6 | 7 | 8 | 9 | 10 | 11 | 12 | 13 |

Mini-Slot (URLLC)

Mini-Slot={2,4,7} Symbols - ffs

【FIG. 4】

One subframe

$14 \cdot 2^{\mu}$ OFDM symbols

$k = N_{RB}^{\mu} N_{SC}^{RB} - 1$

Resource Block

Resource Element
-In case of resource grid, $(k, \bar{l})$
-In case of resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

【FIG. 5】

Antenna Port A⎫
Antenna Port B⎭ Numerology X

Antenna Port A⎫
Antenna Port B⎭ Numerology Y

【FIG. 6】

|  | SYSTEM |  |  |
| INITIAL CELL<br>SEARCH | INFORMATION<br>RECEPTION | RANDOM ACCESS PROCEDURE | GENERAL DL/UL Tx/Rx |

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601    S602    S603    S604    S605    S606    S607    S608

· DL/UL ACK/NACK
· UE CQI/PMI RI REPORT
  USING PUSCH AND PUCCH

【FIG. 7】

【FIG. 8】

【FIG. 9】

【FIG. 10】

| UE | NR-Uu<br>LTE-Uu | NG RAN | NG-C | AMF | NLs | LMF |
|---|---|---|---|---|---|---|
| LPP | | | | | | LPP |
| NAS | | | | NAS / Relay<br>HTTP/2 | | HTTP/2 |
| RRC | | RRC / Relay<br>NGAP | | NGAP | | |
| PDCP | | PDCP / SCTP | | SCTP / TLS<br>TCP | | TLS<br>TCP |
| RLC | | RLC / IP | | IP / IP | | IP |
| MAC | | MAC / L2 | | L2 / L2 | | L2 |
| L1 | | L1 / L1 | | L1 / L1 | | L1 |

【FIG. 11】

| NRPPa | | | | | | NRPPa |
|-------|---|---|---|---|---|-------|
| NGAP | | NGAP | HTTP/2 | | | HTTP/2 |
| SCTP | | SCTP | TLS | | | TLS |
| | | | TCP | | | TCP |
| IP | | IP | IP | | | IP |
| L2 | | L2 | L2 | | | L2 |
| L1 | | L1 | L1 | | | L1 |
| NG RAN | NG-C | | AMF | | NLs | LMF |

【FIG. 12】

【FIG. 13A】

【FIG. 13B】

【FIG. 14】

【FIG. 15】

(a)

| | |
|---|---|
| UE | |

2101
configuration information

2103
receiving signal related to configuration information

2105
transmitting information related to positioning

(b)

| | |
|---|---|
| TRP | |

2201
receiving/transmitting configuration information

2203
transmitting signal related to configuration information

2205
receiving/transmitting information related to positioning

(c)

| | |
|---|---|
| location server/LMF | |

2301
transmitting configuration information

2305
receiving information related to positioning

【FIG. 16】

Wake up

1620
Window or timer                  Sleep        Wake up

Paging Occasion ··· PRS ··· PRS ··· PRS ··· PRS ··· Paging Occasion

1611    1621  1623  1625

1610                    DRX cycle

Time

【FIG. 17】

【FIG. 18】

【FIG. 19】

【FIG. 20】

【FIG. 21】

【FIG. 22】

【FIG. 23】

【FIG. 24】

【FIG. 25】

【FIG. 26】

【FIG. 27】

SFN #0 slot #0

2730

offset

Wake up ... PRS ... Sleep

No Wake up

2720

Window

... PRS ... PRS

Paging Occasion

2711

Mimimum gap

2740

2710

DRX cycle

... PRS ...

Wake up

Paging Occasion

Time

【FIG. 28】

```
                Start
                  │
                  ▼
┌─────────────────────────────────────┐
│ Receiving configuration information  │
│ related to resource for measurement  │──── S2810
│ for positioning                      │
└─────────────────────────────────────┘
                  │
                  ▼
┌─────────────────────────────────────┐
│ Receiving configuration information  │
│ related to discontinuous reception   │──── S2820
│ (DRX)                                │
└─────────────────────────────────────┘
                  │
                  ▼
┌─────────────────────────────────────┐
│ Performing measurement for           │
│ positioning based on configuration   │──── S2830
│ information related to resource for  │
│ measurement                          │
└─────────────────────────────────────┘
                  │
                  ▼
                 End
```

【FIG. 29】

```
                    ┌──────────┐
                    │  Start   │
                    └────┬─────┘
                         │
                         ▼
   ┌──────────────────────────────────────────────┐
   │ Transmitting configuration information related│────S2910
   │   to resource for measurement for positioning │
   └──────────────────────┬───────────────────────┘
                          │
                          ▼
   ┌──────────────────────────────────────────────┐
   │       Transmitting configuration information  │────S2920
   │      related to discontinuous reception (DRX) │
   └──────────────────────┬───────────────────────┘
                          │
                          ▼
   ┌──────────────────────────────────────────────┐
   │      Performing measurement for positioning   │────S2930
   │         based on configuration information    │
   │        related to resource for measurement    │
   └──────────────────────┬───────────────────────┘
                          │
                          ▼
                    ┌──────────┐
                    │   End    │
                    └──────────┘
```

【FIG. 30】

【FIG. 31】

【FIG. 32】

1000(102/106, 202/206)

【FIG. 33】

(100, 200)

```
Device

110 ─┐  Communication unit          Control unit        ┌─ 120
      │  (e.g., 5G communication     (e.g., processor(s))
      │        unit)

112 ─┐    Communication circuit      Memory unit         ┌─ 130
      │    (e.g., processor(s),       (e.g., RAM, storage)
      │     memory(s))

114 ─┐    Transceiver(s)             Additional components
      │    (e.g., RF unit(s),        (e.g., power unit/battery,  ─ 140
      │     antenna(s))               I/O unit, driving unit,
                                      computing unit)
```

【FIG. 34】

<table>
<tr><td colspan="2">**INTERNATIONAL SEARCH REPORT**</td><td>International application No.<br>**PCT/KR2022/014847**</td></tr>
</table>

**A.    CLASSIFICATION OF SUBJECT MATTER**

**H04W 64/00**(2009.01)i; **H04W 24/10**(2009.01)i; **H04W 52/02**(2009.01)i; **H04W 68/00**(2009.01)i; **H04W 76/27**(2018.01)i; **G01S 5/00**(2006.01)i

According to International Patent Classification (IPC) or to both national classification and IPC

**B.    FIELDS SEARCHED**

Minimum documentation searched (classification system followed by classification symbols)

H04W 64/00(2009.01); G01S 5/00(2006.01); H04L 5/00(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 측위(positioning), DRX(Discontinuous Reception), RRC 비활성화 상태(Radio Resource Control inactive state), 자원(resource), 설정 정보(configuration information)

**C.    DOCUMENTS CONSIDERED TO BE RELEVANT**

| Category* | Citation of document, with indication, where appropriate, of the relevant passages | Relevant to claim No. |
|---|---|---|
| X | WO 2021-154848 A1 (QUALCOMM INCORPORATED) 05 August 2021 (2021-08-05)<br>See paragraphs [0113], [0126] and [0129]-[0131]; claims 19 and 35; and figures 13-14. | 1-5,10-14,16-20 |
| Y | | 15 |
| A | | 6-9 |
| Y | WO 2021-119127 A1 (QUALCOMM INCORPORATED) 17 June 2021 (2021-06-17)<br>See claims 1 and 4. | 15 |
| A | WO 2021-185276 A1 (VIVO MOBILE COMMUNICATION CO., LTD.) 23 September 2021 (2021-09-23)<br>See claims 1-10. | 1-20 |
| A | WO 2021-154420 A1 (QUALCOMM INCORPORATED) 05 August 2021.<br>See paragraphs [0121]-[0131]; and figure 11. | 1-20 |

☑ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 January 2023** | **16 January 2023** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/014847** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2018-028925 A1 (SONY CORPORATION) 15 February 2018 (2018-02-15)<br>See page 12, line 32 - page 13, line 20; and figure 6. | 1-20 |

Form PCT/ISA/210 (second sheet) (July 2022)

**INTERNATIONAL SEARCH REPORT**
Information on patent family members

| | | | | International application No. |
|---|---|---|---|---|
| | | | | **PCT/KR2022/014847** |

| Patent document cited in search report | | | Publication date (day/month/year) | Patent family member(s) | | | Publication date (day/month/year) |
|---|---|---|---|---|---|---|---|
| WO | 2021-154848 | A1 | 05 August 2021 | CN | 115004812 | A | 02 September 2022 |
| | | | | EP | 4098047 | A1 | 07 December 2022 |
| | | | | KR | 10-2022-0131922 | A | 29 September 2022 |
| | | | | TW | 202139732 | A | 16 October 2021 |
| WO | 2021-119127 | A1 | 17 June 2021 | CN | 114762404 | A | 15 July 2022 |
| | | | | EP | 4074114 | A1 | 19 October 2022 |
| | | | | KR | 10-2022-0113367 | A | 12 August 2022 |
| | | | | TW | 202133636 | A | 01 September 2021 |
| WO | 2021-185276 | A1 | 23 September 2021 | AU | 2020-101886 | A4 | 01 October 2020 |
| | | | | CN | 112342315 | A | 09 February 2021 |
| | | | | CN | 112342315 | B | 29 March 2022 |
| | | | | CN | 113497687 | A | 12 October 2021 |
| | | | | JP | 2021-099884 | A | 01 July 2021 |
| | | | | JP | 2021-099886 | A | 01 July 2021 |
| | | | | KR | 10-2022-0157463 | A | 29 November 2022 |
| | | | | US | 2021-0200947 | A1 | 01 July 2021 |
| | | | | US | 2022-0114617 | A1 | 14 April 2022 |
| | | | | US | 2022-0399976 | A1 | 15 December 2022 |
| | | | | WO | 2021-184526 | A1 | 23 September 2021 |
| | | | | WO | 2021-184981 | A1 | 23 September 2021 |
| | | | | WO | 2021-185255 | A1 | 23 September 2021 |
| | | | | WO | 2021-185281 | A1 | 23 September 2021 |
| WO | 2021-154420 | A1 | 05 August 2021 | CN | 115053628 | A | 13 September 2022 |
| | | | | KR | 10-2022-0133885 | A | 05 October 2022 |
| | | | | TW | 202131725 | A | 16 August 2021 |
| WO | 2018-028925 | A1 | 15 February 2018 | EP | 3497991 | A1 | 19 June 2019 |
| | | | | EP | 3497991 | B1 | 13 October 2021 |
| | | | | US | 10863473 | B2 | 08 December 2020 |
| | | | | US | 2019-0182794 | A1 | 13 June 2019 |

Form PCT/ISA/210 (patent family annex) (July 2022)